# EUROPÄISCHE PATENTSCHRIFT

(11) **EP 3 439 904 B1**
(45) Veröffentlichungstag und Bekanntmachung des Hinweises auf die Patenterteilung: **06.04.2022**
(21) Anmeldenummer: 17722661.0
(22) Anmeldetag: 06.04.2017
(51) Int. Cl.: B60J 7/06, B60J 7/185, B61D 39/00

(54) **PLANENAUFBAU**
TARPAULIN STRUCTURE
STRUCTURE DE BÂCHAGE

(30) Priorität: 06.04.2016 DE 202016101823 U; 06.09.2016 DE 202016104919 U
(43) Veröffentlichungstag der Anmeldung: 13.02.2019
(73) Patentinhaber: European Trailer Systems GmbH, 47441 Moers (DE)
(72) Erfinder: ARENS, Robert, 45899 Gelsenkirchen (DE); BIESENBRUCK, Volker, 46459 Rees (DE); REMMEL, Roger, 42897 Remscheid (DE); LEUKERS, Markus, 47546 Kalkar (DE)
(74) Vertreter: IPrime Bonnekamp Sparing Patentanwaltsgesellschaft mbH
(86) Internationale Anmeldenummer: PCT/DE2017/100276
(87) Internationale Veröffentlichungsnummer: WO 2017/174078

(56) Entgegenhaltungen:
- DE-A1- 4 136 257
- FR-A1- 2 653 478
- GB-A- 339 440
- US-A- 1 827 059
- US-A- 5 524 953
- US-A1- 2007 063 530

## Beschreibung

Die Erfindung betrifft einen Planenaufbau nach dem Oberbegriff des unabhängigen Anspruchs 1.

Solche Planenaufbauten sind aus der Praxis bekannt, um öffenbare Dächer freizugeben, wobei in der Regel die Bügel aus einem Paar gelenkig an den gegenüberliegenden Schlitten angeschlossener Stangen bestehen, die an ihren den Schlitten entgegengesetzten Enden wiederum ein Gelenk aufweisen, in dem eine weitere Stange schwenkbar gelagert ist. Die Platte, die das von den Schlitten beabstandete Gelenk aufweist, weist dann ein weiteres Gelenk für den verbundenen Bügel auf, der in gleicher Weise aufgebaut ist. Nachteilig bei den bekannten Planenaufbauten ist der Umstand, dass die Bügel einen relativ großen Winkel zur Horizontalen aufweisen, der zwar das Verlagern in vertikaler Richtung zum Anheben der Plane erleichtert, der aber die Übertragung von Kräften in Verlagerungsrichtung praktisch nicht begünstigt. Hierdurch kommt es leicht zu einem Verkanten der über Holme miteinander verbundenen Schlitten, der zu einem Blockieren des Verdeckgestells führt. Als Gegenmaßnahme wird der Holm, der die gegenüberliegenden Schlitten miteinander starr verbindet, häufig sehr massiv ausgestaltet, was wiederum zum Nachteil hat, dass die Toleranzen der Führung praktisch gegen Null gehen müssen, damit das Verdeckgestell bewegt werden kann. Ein weiterer Nachteil besteht darin, dass die miteinander verbundenen Bügel im Bereich ihrer Verbindung eine gegenseitige Relativbewegung in Richtung der Führung, in vertikaler Richtung und auch in der hierzu senkrechten Querrichtung ermöglichen, wodurch Kräfte und Momente, die einseitig in einen Schlitten eingeleitet werden, praktisch nicht über die Bügel in den benachbarten Schlitten übertragen werden können. Dies hat zur Folge, dass die Verdeckgestelle der bekannten Planenaufbauten stets eine symmetrische Einleitung der Verlagerungskraft erfordern, dass also beispielsweise die Verlagerungskraft mittig eingeleitet werden muss, in der Regel aber auf beiden Seiten in gleicher Weise eingeleitet werden muss. Ein weiterer Nachteil der bekannten Anordnung besteht darin, dass diese sich unter Faltung der Plane nur in einem Bereich des Unterbaus zusammenschieben lassen, der die Beladeöffnung des Unterbaus noch überdeckt, wodurch die Beladeöffnung nicht vollständig freigegeben ist. Dies ist besonders bei Bahnwaggons nachteilig, da hierdurch ein Teil des Laderaums verloren geht.

DE 20 2014 005 077 U1 beschreibt einen Planenaufbau für einen Unterbau, umfassend ein Verdeckgestell und eine Plane aus wetterbeständigem Material, wobei das Verdeckgestell eine Mehrzahl von Holmen aufweist, die endseitig jeweils einen Schlitten aufweisen, der entlang einer Führung verlagerbar ist. An jedem Paar gegenüberliegender Schlitten ist zumindest ein Bügel schwenkbar angeschlossen, der mit einem Bügel eines benachbarten Schlittenpaars eine Planenfalthilfe bildet, wobei die Bügel der Planenfalthilfe miteinander verbunden sind, und wobei an dem vordersten Schlittenpaar ein Abdeckbügel schwenkbar angeschlossen ist. Hierbei weisen die verbundenen Bügel einen Schwenkwinkelbegrenzer auf, der nur eine begrenzte Verschwenkung der Bügel zulässt, so dass die Bügel bei Verlagern der Schlitten in Richtung auf eine geöffnete Position nicht überschlagen können. Nachteilig ist hierbei, dass im geöffneten Zustand der Planenaufbau eine große Bauhöhe aufweist, die aus der Länge der Bügel resultiert. Ferner kann ein Längensaugleich zur Anpassung an einen Unterbau nur durch Wahl eines freien Abstands des verlagerbaren Teils des Verdeckgestells von einem hinteren Anschlag und dem hieran angeschlossenen Bügel realisiert werden. Der Abdeckbügel muss in mehreren Schritten hochgeschwenkt werden, wobei der Abdeckbügel wenig zuverlässig auf dem Unterbau aufliegt und mit diesem nicht bedienfreundlich verriegelbar ist.

US 2007 006 35 30 A1 beschreibt einen Planenaufbau für einen Unterbau, mit einem Verdeckgestell und mit einer Plane aus wetterbeständigem Material, wobei das Verdeckgestell eine Mehrzahl von Holmen aufweist, die endseitig jeweils einen Schlitten aufweisen, der entlang einer Führung verlagerbar ist. Hierbei ist beiderseits des Holms jeweils ein Bügel schwenkbar an dem Holm nahe dem Schlitten angeschlossen, wobei der Bügel mit einem Bügel eines benachbarten Holmes eine Planenfalthilfe bildet. Hierbei sind die benachbarten Bügel im Bereich der dem Schlitten abgekehrten Bügelabschnitte jeweils undrehbar mit einem Ausleger verbunden derart, dass die einander zugekehrten Ausleger der einander zugekehrten Bügel in einem einzelnen Gelenk, das von einem sich über die Breite des Verdeckgestells im Wesentlichen erstreckenden, zylindrischen Zapfens gebildet ist, verbunden sind derart, dass bei geschlossenem Verdeckgestell der Zapfen oberhalb der oberen Bereiche der Holme vorsteht und so die Plane anhebt und daran hindert, in die Bereiche zwischen den einander zugekehrten Bügeln herabzusinken. Nachteilig ist hierbei zum einen, dass die Plane dann nicht im Bereich der Schlitten ohne Spiel angeordnet werden kann, da die Plane die Hubbewegung der Hubspriegel nachvollziehen muss. Nachteilig ist weiterhin, dass die starren Ausleger nicht in der Lage sind, Längenunterschiede des Verdeckgestells auszugleichen, sondern vielmehr auf Grund Ihrer Winkelstellung bezüglich des sie tragenden Bügels nur in ganz bestimmten Abmessungen eingesetzt werden können.

US 7 325 855 B2 beschreibt einen Planenaufbau für einen Sattelauflieger, bei dem ein Verdeckgestell eine Plane aus wetterbeständigem Material trägt, wobei das Verdeckgestell eine Mehrzahl von U-förmigen Holmen aufweist, die endseitig jeweils einen Schlitten aufweisen, der entlang einer Führung verlagerbar ist. Hierbei sind jeweils beiderseits der Holme einmal im Bereich des Schlittens und einmal etwa auf halber Höhe des Holms Bügel gelenkig angeschlossen, wobei die oberen Bügel durch eine Federanordnung in eine Betätigungsrichtung vorspannbar sind, während die unteren Bügel im Bereich der Seitenwand von einem Koppellenker miteinander verbunden sind, der einen U-förmigen Hubholm, der sich über die Breite des Verdeckgestells erstreckt, trägt. Auch dieser Planenaufbau ermöglicht nur bestimmte Abmessungen, die als Vielfaches des Abstands der Holme ausgeführt sind, weil sich die miteinander verbundenen Bügel nicht flexibel dimensionieren lassen.

EP 0 955 196 A1 beschreibt einen Planenaufbau für einen Bahnwaggon, bei dem eine Plane aus wetterbeständigem Material von einem Verdeckgestell getragen ist, wobei das Verdeckgestell eine Mehrzahl von U-förmigen Holmen aufweist, die endseitig jeweils einen Schlitten aufweisen, der entlang einer im Bereich der Ladefläche vorgesehenen Führung verlagerbar ist. An den Holmen ist beiderseits jeweils ein Lenker angeschlossen, wobei die einander zugekehrten Lenker der benachbarten Holme gelenkig miteinander und mit einer zylindrischen, vertikal ausgerichteten Führungshülse verbunden sind, in die ein U-förmiger Hubholm vertikal verlagerbar aufgenommen ist, der bei Zusammenfahren der benachbarten Holme durch das Verschwenken der Lenker nach oben angehoben wird. Nachteilig an dem Planenaufbau ist, dass die Holme recht eng nebeneinander angeordnet werden müssen, so dass ein insgesamt sehr großformatiges Verdeckgestell mit vergleichsweise hohem Gewicht und recht kleiner Freigabeöffnung hieraus resultiert.

DE 10 2013 201 006 A1 beschreibt einen in der Art eines Schiebedachs ausgebildeten Planenaufbau für einen Lastkraftwagen, bei dem eine im Wesentlichen flache Plane aus wetterbeständigem Material an ein Verdeckgestell angeschlossen ist, um das Öffnen und Schließen des Dachs zu ermöglichen. Das Verdeckgestell weist eine Mehrzahl von als langgestreckte Spriegel ausgebildeter Holme, die jeweils zwischen den benachbarten Schlitten angeordneten, nach Art eines Lenkers ausgebildeten Hubelementen angehoben werden können. Die Schlitten sind entlang einer Dachschiene, die eine Führung bildet, verlagerbar, wobei ein Portalbalken an dem vordersten Schlittenpaar schwenkbar angeschlossen ist, wobei die Plane auch an dem Portalbalken angeschlossen ist. Der quer zur Öffnungsrichtung verlaufende Portalbalken ist beiderseits über eine als Viergelenk ausgebildete Kinematik an dem vordersten Schlitten angeschlossen, wobei der vorderste Schlitten zusätzlich zwei die Dachöffnung überspannende, als Spriegel ausgebildete Holme aufweist, wobei die Lenker des Viergelenks zumindest teilweise in einer im Wesentlichen unterhalb, zumindest aber auf Höhe der Führung angeordneten Vertiefung der vordersten Schlitten ruhen, wenn der Portalbalken abgesenkt ist. Der Planenaufbau weist eine Verriegelungsanordnung auf, mit einem in einem vordersten Schlitten geführten ersten Riegelglied und einem in dem gegenüberliegenden vordersten Schlitten geführten zweiten Riegelglied, die von jeweils einer Feder in Verriegelungsrichtung gespannt sind und durch Betätigung zugleich in ihre jeweilige Entriegelungsrichtung axial verlagerbar sind. Hierzu ist jeder Bolzen mit einem ihm zugeordnetem Seil mit einer Betätigungseinrichtung auf der gegenüberliegenden Seite verbunden, wobei die beiden Seile nebeneinander im Bereich zwischen zwei Holmen liegen, ohne an den Holmen geführt zu sein. Die beiden Seile sind mittig des Planenaufbaus miteinander gekoppelt, damit eine einseitige Betätigung beide Riegelglieder betätigt. Nachteilig hieran ist jedoch, dass transportierte Ware sich an den Seilen verfangen kann und es zu einer unbeabsichtigten Öffnung des Dachs kommen kann.

FR 2 653 478 A1 beschreibt einen Planenaufbau für einen Sattelauflieger, bei dem im Dachbereich ein Verdeckgestell angeordnet ist, an das eine Plane aus wetterbeständigem Material angeschlossen ist, und das ein Öffnen und Schließen des Dachs ermöglicht. Das Verdeckgestell weist eine Mehrzahl von als langgestreckte Spriegel ausgebildeten Holmen auf, welche endseitig jeweils einen Schlitten aufweisen, der entlang einer von einem Paar Längsträger gebildeten Führung verlagerbar ist. Zwischen den benachbarten Holmen ist jeweils ein Hubspriegel angeordnet, der mit einem gelenkig an einem Schlitten angeschlossenen langgestreckten Lenker unverdrehbar gekoppelt ist, so dass sich eine Planenfalthilfe ergibt, die durch die Schwenkbewegung des einen um den Schlitten schwenkbaren Bügel bildenden, langgestreckten Lenkers gemeinsam mit dem Hubspriegel ergibt, wobei der Bügel mittels eines Kniegelenks aus zwei Teillenkern mit dem benachbarten Schlitten verbunden ist. Das bekannte Schiebedach weist weiter einen endseitigen Abdeckbügel auf, der ähnlich wie der Hubspriegel ausgebildet ist und an dem vordersten Schlittenpaar schwenkbar angeschlossen ist. In dem seitlichen Bereich des Abdeckbügels ist eine plattenförmige Riegelfalle angeordnet, die bei Herabschwenken im Bereich des öffnenbaren Endes des Längsträgers mit einem an dem Längsträger verbundenen Zapfen zusammenwirkt, um das Verdeckgestell zu verriegeln. Hierbei ruht der Plattenkörper im geschlossenen Zustand des Planenaufbaus teilweise auf einer horizontalen Partie des Schlittens, während ein Vorspannmittel den Abdeckbügel in Öffnungsrichtung vorspannt. Im vollständig geschlossenen Zustand ist die Wirkrichtung der Feder gegenüber ihrer Anlenkung an dem Abdeckbügel derart, dass eine Übertotpunkt-Verriegelung eintritt, die durch vertikales Hochstoßen des Abdeckbügels überwunden werden muss. Das Verdeckgestell ist durch eine Kurbel betätigbar. Nachteilig ist insbesondere die Aufstellkinematik durch den verschwenkenden Hubspriegel.

DE 10 2012 006 385 A1 beschreibt einen Planenaufbau für ein Nutzfahrzeug, bei dem eine Plane aus wetterbeständigem Material an einen ein Schiebedach bildendes Verdeckgestell angeschlossen ist, wobei das Verdeckgestell eine Mehrzahl von in der Dachebene verlaufenden, als langgestreckte Spriegel ausgebildeten Holmen aufweist, die endseitig jeweils einen Schlitten aufweisen, der entlang einer durch einen Längsträger gebildete Führung verlagerbar ist. An dem vordersten (in Fahrtrichtung hintersten) Holm ist ein ebenfalls entlang der Führung verlagerbarer Portalbalken angeschlossen, wobei im Bereich eines der beiden Schlitten des vordersten Holms eine Verriegelungsanordnung vorgesehen ist, die den Schlitten gegenüber der durch den Längsträger gebildeten Führung verriegelt, wobei durch einseitiges Ziehen an einer Schlaufe die Verriegelungsanordnung entriegelbar ist. Die Verriegelungsanordnung ist nur auf einer Seite des vordersten Holms vorgesehen und kann nicht ohne weiteres das Verdeckgestell an beiden Längsträgern verriegeln. Die Verriegelungsanordnung weist ein erstes Riegelglied und ein zweites Riegelglied auf, die an derselben Längsseite des Planenaufbaus angeordnet sind und die gleichzeitig in eine Entriegelungsrichtung durch Betätigung der Zuglasche verlagerbar sind. Nachteilig bei dem Planenaufbau ist insbesondere der Umstand, dass eine gemeinsame Entriegelung je einer Verriegelungsanordnung auf beiden Seiten des Planenaufbaus durch Betätigung von außen durch eine Bedienperson nicht möglich ist.

WO 2007 056 989 A2 beschreibt einen Planenaufbau mit einem Verdeckgestell, das zum Tragen einer Plane vorgesehen ist, bei dem das Verdeckgestell eine Mehrzahl von als langgestreckte Spriegel ausgebildete Holme aufweist, die über Schlitten entlang einer als Längsträger im Dachbereich ausgebildeten Führung verlagerbar sind, wobei an den vordersten Schlitten ein Riegelglied mit einer Kulissenführung schwenkbar angeschlossen ist, die mit einem zweiten, an dem Längsträger angeschlossenen Riegelglied zusammenwirkt, derart, dass bei Ziehen der Plane in Schließrichtung die Verriegelung freigegeben wird.

EP 0 778 169 B1 beschreibt einen Planenaufbau für den Dachbereich eines Lastkraftwagens, bei dem ein Verdeckgestell eine Plane aus wetterbeständigem Material trägt, wobei das Verdeckgestell eine Mehrzahl von als langgestreckte Spriegel ausgebildeten Holmen aufweist, die endseitig jeweils einen Schlitten aufweisen, der entlang einer durch zwei Längsträger gebildeten Führung verlagerbar ist. Die benachbarten Spriegel sind über gelenkig mit diesen verbundene Faltplattenpaare gekoppelt, wobei jede der beiden Faltplatten miteinander durch einen durchgehenden Hubspriegel gelenkig verbunden ist. An dem vordersten Holm ist ein als Portalbalken realisierter Abdeckbügel gelenkig angeschlossen, der in eine Bewegungsrichtung von einem Zylinder beaufschlagt ist, wobei im Bereich des Schenkels des Abdeckbügels ein Haken beiderseits vorgesehen ist, der von einem Zapfen mit einem dem Haken abgekehrten Ende verschwenkt wird, dessen Hakenteil mit einem weiteren Zapfen für einen formschlüssigen Eingriff zusammengreift. An dem Portalbalken des Abdeckbügels ist ein weiterer Zapfen vorgesehen, der von einem schwenkbar an dem Längsträger angeschlossenen Schwenkhaken umgriffen wird, um den Portalbalken gegen Anheben zu sichern. Soll das Verdeckgestell geöffnet werden, muss zunächst der Innenraum betreten werden und der Schwenkhaken freigeschwenkt werden, bevor der Abdeckbügel angehoben werden kann. Eine Entriegelung von außerhalb des Verdeckgestells, die ein Betreten des Planenaufbaus vermeiden würde, ist nicht möglich. Ferner erfolgt die Verbindung des Abdeckbügels jeweils mit der Führung unmittelbar, so dass ein Aufstellen des Abdeckbügels durch Verlagern des vordersten Schlittens entlang der Führung nicht ermöglicht ist.

DE 10 2012 216 151 A1 beschreibt einen Planenaubau für einen Muldenkipper, bei dem eine Plane aus wetterbeständigem Material über ein Verdeckgestell von der Kippmulde zur Freigabe einer Öffnung geöffnet und wieder geschlossen werden kann. Das Verdeckgestell weist eine Mehrzahl von U-förmigen Holmen auf, welche endseitig jeweils mit einem Führungselement verbunden sind, wobei die Führungselemente mit einem antreibbaren Betätigungsseil gekoppelt sind. Ein Abdeckbügel, der im geschlossenen Zustand des Planenaufbaus im Wesentlichen flach auf der Kippmulde aufliegt, ist um eine Klappachse drehbar, wobei ein an dem Unterbau angeordneter Zapfen einen Fortsatz des Abdeckbügels von einer aufgestellten Position in eine abgesenkte Position und umgekehrt verschwenkt. Beim Absenken des Abdeckbügels wird eine Feder, die den Abdeckbügel in Öffnungsrichtung belastet, gespannt, solange der Fortsatz auf dem Zapfen ruht. Wird das Verdeckgestell in Öffnungsrichtung bewegt, veranlasst die Feder den Abdeckbügel zum Aufschwenken ohne Zutun einer Bedienperson.

US 5 524 953 A beshreibt einen Planenaufbau für einen Unterbau, umfassend ein Verdeckgestell und eine Plane, wobei das Verdeckgestell eine Mehrzahl Schlitten aufweist, die entlang einer Führung verlagerbar ist. Hierbei sind jeweils zwei Bügel schwenkbar an einem Paar gegenüberliegender Schlitten angeschlossen, wobei der Bügel von einem Bügel eines benachbarten Schlittens beabstandet ist. An dem vordersten Schlittenpaar ist ein statt eines Schwenkbügels ein Abdeckbügel schwenkbar angeschlossen.

GB 339 440 A beschreibt Planenaufbau für ein Fahrzeug, umfassend ein Verdeckgestell und eine Plane, wobei das Verdeckgestell eine Mehrzahl von Holmen aufweist, die endseitig jeweils einen Schlitten aufweisen, der entlang einer Führung verlagerbar ist. Hierbei ist ein Bügel jeweils schwenkbar an einem Paar gegenüberliegender Schlitten des Holmes angeschlossen, wobei der Bügel mit einem Bügel eines benachbarten Paars gegenüberliegender Schlitten sowie mit einem Hubholm in einem Gelenk verbunden ist und eine Planenfalthilfe bildet. Der Hubholm liegt bei geschlossenem Dach mit einer Rolle auf der Führung auf. Endseitig ist an jederm Bügel ein Stützlenker angeschlossen, die unterhalb der gelenkigen Verbindung der Bügel in einem Gelenk miteinander verbunden sind, wobei das Gelenk der Stützlenker in einem vertikalen Langloch des Hubholms geführt ist. Werden die Bügel durch Öffnen des Verdecks angehoben, fahren die Lenker zusammen und hindern den Hubholm daran, seitlich auszuweichen.

US 1 827 059 zeigt einen Planenaufbau für einen Unterbau wie einen Lastkraftwagen, umfassend ein Verdeckgestell und eine Plane aus wetterbeständigem Material, wobei das Verdeckgestell eine Mehrzahl von U-förmigen Holmen aufweist, die endseitig jeweils einen Schlitten aufweisen, der entlang einer Führung verlagerbar ist. Hierbei ist an dem vordersten Schlittenpaar ein Abdeckbügel schwenkbar angeschlossen, der in eine weit abgesenkte Position verschwenkbar ist, wobei zwischen dem Abdeckbügel und dem an dem vordersten Schlitten angeschlossenen Holm ein Hilfsbügel gelenkig angeschlossen ist. In seinem oberen Bereich ist der Hilfsbügel über ein Band mit dem vordersten Holm verbunden, und der Abdeckbügel ebenfalls über ein Band mit dem Hilfsbügel. Die Bänder hindern die frei an dem vordersten Schlitten schwenkbaren Hilfsbügel und Abdeckbügel daran, unter ihrem Gewicht nach unten wegzuschwenken.

Es ist die Aufgabe der Erfindung, einen Planenaufbau anzugeben, der mit geringem Eigengewicht ein zuverlässiges Abdecken eines Unterbaus ermöglicht.

Diese Aufgabe wird erfindungsgemäß mit den Merkmalen des unabhängigen Anspruchs 1 gelöst.

Gemäß der Erfindung ist ein Planenaufbau für einen Unterbau, wie einen Lastkraftwagen, Anhänger, Auflieger, Bahnwaggon, Muldenkipper oder Container geschaffen, umfassend ein Verdeckgestell und eine Plane aus wetterbeständigem Material, wobei das Verdeckgestell eine Mehrzahl von Holmen aufweist, die endseitig jeweils einen Schlitten aufweisen, der entlang einer Führung verlagerbar ist. Hierbei ist zumindest ein Bügel schwenkbar wahlweise an einem Paar gegenüberliegender Schlitten des Holmes oder an dem Holm angeschlossen, wobei der Bügel mit einem Bügel eines benachbarten Holms oder Paars gegenüberliegender Schlitten oder eines feststehenden Teils des Verdeckgestells eine Planenfalthilfe bildet. An dem vordersten Schlittenpaar ist hierbei ein Abdeckbügel schwenkbar angeschlossen, wobei an dem vordersten Schlitten zwischen dem Abdeckbügel und dem an dem vordersten Schlitten angeschlossenen Holm ein Hilfsbügel gelenkig angeschlossen ist. Ebenso wie der Holm erstreckt sich der Hilfsbügel von dem einen vordersten Schlitten des Paars vorderster Schlitten zu dem gegenüberliegenden anderen vordersten Schlitten. Der Hilfsbügel ist in seiner Winkellage und seiner Erstreckung, also im Wesentlichen Höhe, so ausgewählt, dass er die Plane in einem Bereich zwischen dem Abdeckbügel und dem Holm unterstützt. Hierbei ist der Hilfsbügel zweckmäßigerweise so angeordnet, dass er dem Aufschwenken des Abdeckbügels nicht im Wege steht.

Hierbei ist zwischen einer Anlenkung des Hilfsbügels und dem Holm ein solcher Abstand vorgesehen, dass der Hilfsbügel bei teilweise oder vollständig geöffnetem Verdeckgestell in eine überschlagene Position zu dem Holm des vordersten Schlittenpaars hin überführbar ist. Hierdurch ist in der geöffneten Position des Hilfsbügels dieser nicht in einer metastabilen Position gehalten, die dazu neigt, herabzufallen, sondern der Hilfsbügel kann über seinen Totpunkt hinaus verschwenkt werden und sich damit an den Holm oder einem hierzu vorgesehenen Anschlag anlehnen.

Der Abdeckbügel weist vorzugsweise einen Fortsatz auf, der gemeinsam mit dem Abdeckbügel um dessen Anlenkung verschwenkbar ist. Dies vereinfacht die Betätigung des Verdeckgestells und der Abdeckbügel kann hierdurch selbst in einfacher Weise ausgebildet sein, da nur der vorderste Schlitten entlang der Führung verlagert werden muss. Die axiale Verlagerungsbewegung des Schlittens wird in eine Schwenkbewegung des Abdeckbügels vorteilhaft umgewandelt, so dass die Bedienung des Verdeckgestells einfach von der Auflageebene des Unterbaus möglich ist. Zugleich wird die Aufschwenkbewegung des Abdeckbügels mit der Öffnungsbewegung des Planenaufbaus kinematisch verbunden, und entsprechend die Abschwenkbewegung des Abdeckbügels mit der Schließbewegung des Planenaufbaus, so dass der Planenaufbau für einen Benutzer leicht zu bedienen ist. Die Anordnung des Abdeckbügels auf dem Rahmenabschnitt macht es verzichtbar, den Abdeckbügel selbst mit Rollen auszustatten, die entlang der Führung verlagerbar sind, so dass es hier nicht zu Fehlfunktionen kommen kann, wenn der Abdeckbügel durch die Bedienperson, die Ladung oder Beschädigungen von außen ein Stück weit deformiert worden ist. Überdies ist der Abdeckbügel von der Führung und von dem Unterbau entkoppelt und kann direkt mit dem Schlitten bzw. einem Rahmenabschnitt des Schlittens verriegelt werden.

Gemäß einem Aspekt zeichnet sich der Planenaufbau dadurch aus, dass die benachbarten Bügel über eine Lenkerkinematik miteinander gekoppelt sind, die beim Zusammenfahren des Verdeckgestells zusammenklappbar ist.

Hierdurch wird vorteilhaft erreicht, dass der Planenaufbau bei geöffnetem Verdeckgestell, bei dem der Unterbau also freigegeben ist, eine insgesamt geringere Bauhöhe aufweist, da die Bügel in einem vergleichsweise kleinen Winkel zu den Holmen angeordnet werden können. Um die benachbarten Bügel, also diejenigen, die einander zugekehrt sind, gleichwohl gesteuert zusammenfahren zu können, hilft die Lenkerkinematik, indem eine in das Verdeckgestell eingeleitete Kraft dazu führt, dass die Lenkerkinematik zusammenklappt. Die hierdurch erreichte Verlängerung der wirksamen Bügel geht nicht zulasten der Bauhöhe des Planenaufbaus, sondern erreicht durch das Zusammenklappen der Lenkerkinematik eine besonders günstige Packungsdichte. Hierdurch ist es nicht erforderlich, dass die benachbarten Bügel sich gegenseitig berühren, um das Verdeckgestell zusammenzufahren, sondern durch das gezielte Zusammenklappen der Lenkerkinematik wird ein dezidiertes Verhalten des Verdeckgestells beim Zusammenfahren erreicht, so dass insbesondere auch ein Verkanten der Holme bezüglich der Führung vermieden wird und eine einseitig in den Planenaufbau eingeleitete Zugkraft zuverlässig von demjenigen Schlittenpaar, in das die Zugkraft eingeleitet wird, auf die weiteren Schlittenpaare, die jeweils durch einen Holm verbunden sind, übertragen wird.

Ein besonderer Vorteil des Planenaufbaus ist darin zu erkennen, dass der Planenaufbau wesentlich flexibler an Längenerfordernisse des Unterbaus angepasst werden kann. So ermöglicht das Vorsehen einer Lenkerkinematik es, zur Anpassung an den Abstand zwischen benachbarten Schlitten die Länge der Lenker oder zumindest eines Lenkers kürzer oder länger zu wählen. Alternativ kann bei einer feststehenden Länge der Lenker der Lenkerkinematik der Anstellwinkel der Lenker unterschiedlich eingestellt sein, um einen entsprechenden Längenausgleich zu erreichen.

Vorzugsweise ist die Lenkerkinematik beim Zusammenfahren des Verdeckgestells nach unten zusammenklappbar, so dass die Verlagerungsbewegung der Teile der Lenkerkinematik im Wesentlichen eine vertikal nach unten gerichtete Komponente aufweist. Diese wird von weiteren Bewegungen aufgrund der schwenkgelenkigen Verbindungen der Teile der Lenkerkinematik überlagert. Insgesamt kann durch das Vorsehen eines nach unten gerichteten Zusammenklappens die Lenkerkinematik recht weit oben an den einander zugekehrten Bügeln angeschlossen werden, wo diese sich schon recht nahe kommen, so dass die Lenkerkinematik insgesamt nur einen geringen Raum einnimmt. Ferner wird hierdurch ein recht großer Bereich unterhalb des Anschlusses an die Bügel bereitgestellt, in den die Lenkerkinematik ausweichen kann. Die Bewegung nach unten ist nicht absolut zu verstehen, da die Anlenkung der Lenkerkinematik an den Bügeln durch deren Verschwenken beim Öffnen des Planenaufbaus nach oben verlagert wird.

Hierbei muss die Zusammenklappbewegung der Lenkerkinematik nicht zwangsläufig ausschließlich nach unten erfolgen, sondern es reicht aus, wenn eine nach unten gerichtete Komponente enthalten ist bzw. überwiegend gegeben ist. So kann die Lenkerkinematik auch zu einer räumlichen Bewegung führen, beispielsweise zu einer solchen, bei der die Plane ein Stück weit nach außen gedrückt wird, um ein Einklemmen der Plane zwischen den Teilen des Verdeckgestells, insbesondere zwischen benachbarten Bügeln oder zwischen Bügel und Holm, zu vermeiden.

Zweckmäßigerweise weist die Lenkerkinematik ein Kniegelenk auf, wobei das Knie des Kniegelenks vorzugsweise zumindest annähernd und besonders bevorzugt vollständig mittig vorgesehen ist, wobei das Knie bei Zusammenfahren des Verdeckgestells und damit Zusammenklappen der Lenkerkinematik vorteilhaft nach unten verlagert wird. Das Kniegelenk ist eine besonders einfache Lenkerkinematik, die nur drei Gelenkpunkte benötigt, und über die eine Verbindung der einander zugekehrten Bügel erreicht werden kann. Ein besonderer Vorteil des Kniegelenks besteht darin, dass durch das geringe Spiel des Gelenkzapfens in dem Gelenkauge das Verdeckgestell wenig zur Verlagerung aufgrund von Einflüssen der Umwelt beim Transport neigt. Ferner lassen sich Schubkräfte ein Stück weit übertragen. Es ist aber auch möglich, dass das Kniegelenk neben dem in einem Gelenkauge verschwenkbaren Gelenkzapfen auch ein langlochartiges Gelenkauge aufweist, wodurch eine gewisse axiale Führbarkeit des Gelenkzapfens in dem langlochartigen Gelenkauge nach Art einer Kulissenbahn gegeben ist. Die in Verlagerungsrichtung des Verdeckgestells wirkende Kraft führt dann zu einer Verlagerung des Drehpunkts im Bereich des Knies, wodurch die Verlagerung des Knies mit höherer Zuverlässigkeit erreicht wird. Alternativ kommt auch eine Lenkerkinematik in Betracht, die als Scherengelenk ausgebildet ist, oder eine Lenkerkinematik, die als Mehrgelenk, insbesondere als Viergelenk ausgebildet ist. Die eher asymmetrisch ausgebildete Mehrgelenkkinematik weist zwar eine höhere Teilanzahl auf, ist dafür aber bestimmter in ihrem Bewegungsablauf. Auch eine mehrere Knie enthaltende Lenkerkinematik kommt in Betracht.

Die Lenker der Lenkerkinematik können sowohl als starre hebelartige Lenker ausgebildet sein als auch als Kunststoffteile oder als Drahtbauteile, solange eine definierte Verschwenkung der Lenker bezüglich einander und vorzugsweise auch bezüglich der Bügel, an denen sie befestigt sind, gegeben ist. Zweckmäßigerweise ist einer der Lenker mit einer Stufe ausgeführt, damit er an dem anderen Lenker vorbeischwenken kann. Die Stufe bildet dann auch einen Anschlag für den anderen Lenker, der den minimalen Winkel zwischen den beiden Lenkern begrenzt. Es ist möglich, auch den maximalen Schwenkwinkel mit einem Anschlag, beispielsweise an den Lenkern im Bereich des gemeinsamen Gelenks, zu begrenzen.

Gemäß einer bevorzugten Ausgestaltung weist die Lenkerkinematik einen ersten Lenker und einen zweiten Lenker auf, wobei jeder der ersten Lenker und zweiten Lenker jeweils an einem der beiden benachbarten Bügel angeschlossen ist, wobei der erste Lenker und der zweite Lenker über ein Gelenk miteinander verbunden sind. Das Gelenk bildet dann das Knie eines Kniegelenks aus dem ersten Lenker und dem zweiten Lenker, wobei der erste Lenker und der zweite Lenker sowohl über das gemeinsame Gelenk zusammenklappbar sind als auch über die Gelenke, mit denen sie jeweils an den Bügeln angeschlossen sind, eine Verschwenkung bezüglich der Bügel ermöglichen.

Es ist möglich, um die Gefahr des Überschlagens der Lenkerkinematik zu reduzieren, beispielsweise den Schwenkwinkel der Lenker an dem Bügel z.B. durch einen Anschlag zu begrenzen und/oder den Schwenkwinkel des gemeinsamen Gelenks von erstem Lenker und zweitem Lenker zu begrenzen, so dass ein unbeabsichtigtes Verschwenken außerhalb des dem Kniegelenk zugedachten Schwenkbereichs vermieden wird. Wird die Lenkerkinematik nach unten zusammengeklappt, führt die Masse von erstem Lenker und zweitem Lenker dazu, dass sich das gemeinsame Gelenk im Wesentlichen nach unten bewegt.

Der Schwenkwinkel des gemeinsamen Gelenks kann beispielsweise durch eine elongierbare Verbindungsstrebe, die mit dem ersten Lenker und dem zweiten Lenker in einem Abstand zu dem gemeinsamen Gelenk verbunden ist, verwirklicht werden, die den maximalen Öffnungswinkel des ersten Lenkers bezüglich des zweiten Lenkers begrenzt. Die Verbindungsstrebe ist insbesondere dann von Vorteil, wenn der bewegliche Teil des Verdeckgestells ausgehend von der geöffneten Position in die geschlossene Position verlagert wird, da damit verhindert wird, dass der erste Lenker und der zweite Lenker eine gerade Erstreckung, also in einem Winkel von 180°, einnehmen, die eine Totpunktstellung bedeuten würde, bei der die Gefahr des Ausweichens des Knies in die falsche Richtung gegeben wäre.

Bei geschlossenem Verdeckgestell schließen der erste Lenker und der zweite Lenker zweckmäßigerweise einen Winkel zwischen 90° und 180° ein, wobei vorzugsweise der eingeschlossene Winkel zwischen 120° und 170° ausmacht und besonders bevorzugt zwischen 150° und 165° einschließt. Durch den Winkel kleiner als 180° und das Zeigen nach unten wird das Zusammenklappen der Lenkerkinematik nach unten begünstigt.

Die Bügel sind zweckmäßigerweise U-förmig mit einer Basis und zwei Schenkeln ausgeführt, wobei jeder der Schenkel an einem Schlitten oder an einem Schenkel des Holms angeschlossen ist, wobei der erste Lenker und/oder der zweite Lenker jeweils an einem der Schenkel gelenkig angeschlossen ist. Hierdurch wird verhindert, dass die Lenkerkinematik im Bereich der den Gelenken der Bügel abgekehrten Basis der Bügel angeschlossen werden muss, wo bei beladenem Unterbau möglicherweise die Lenkerkinematik mit dem Ladegut in Konflikt geraten könnte. Die in Richtung auf den Holm beim Öffnen des Verdeckgestells verschwenkenden Bügel schaffen dann Platz für die zusammengeklappte Lenkerkinematik bzw. deren Lenker.

Zweckmäßigerweise sind die beiden benachbarten Bügel voneinander beabstandet angeordnet, so dass die von den beiden Bügeln gebildete Planenfalthilfe zusätzlich die wenigstens eine Lenkerkinematik umfasst. In der Regel wird auf beiden Seiten jeweils eine Lenkerkinematik, bevorzugt in Form eines Kniegelenks, vorgesehen sein, so dass eine in Öffnungs- oder Schließrichtung wirkende Kraft gleichmäßig von einem Paar durch einen Holm verbundener Schlitten über die Bügel und die Lenkerkinematik auf das benachbarte Paar von einem Holm verbundener Schlitten übertragen wird und es nicht zu einem Verkanten kommt. Es ist jedoch möglich, auch mehr als zwei Lenkerkinematiken zwischen zwei benachbarten Bügeln anzuordnen, z.B. wenn hierdurch der entsprechende Bereich des Verdeckgestells verstärkt werden soll.

Gemäß einem bevorzugten Merkmal ist vorgesehen, dass die Lenkerkinematik in einem Bereich der Bügel angeordnet ist, der außerhalb eines Ladegut aufnehmenden Raums des Unterbaus liegt. Hierdurch wird durch das Zusammenklappen, insbesondere nach unten, eine Kollision mit dem Ladegut vermieden.

Alternativ oder kumulativ ist es möglich, im Bereich der Basis der Bügel eine Lenkerkinematik vorzusehen, die die Basen der beiden Bügel miteinander verbindet. Dann weicht das gemeinsame Gelenk in einer horizontalen Ebene nach außen oder nach innen aus, wobei im Falle des Vorsehens von zwei Lenkerkinematiken im Bereich der Basis nur die halbe Breite des Verdeckgestells zum Ausweichen zur Verfügung steht. Überdies entfällt dann der Ausweichraum zum Bilden einer Falte der Plane zwischen den beiden benachbarten Bügeln, da dort dann eine Lenkerkinematik angeordnet ist. Es ist möglich, an Bügel und an Basis verschiedene Lenkerkinematiken vorzusehen.

Besonders bevorzugt ist ein Planenaufbau, bei dem sämtliche Paare benachbarter Bügel durch zumindest eine Lenkerkinematik und vorzugsweise durch zwei Lenkerkinematiken, die vorzugsweise spiegelbildlich zueinander angeordnet sind, miteinander verbunden sind, so dass zwischen benachbarten Holmen und/oder Bügeln keine Räume entstehen, bei denen die Verbindung der Teile des Verdeckgestells ausschließlich über die Plane erfolgt. Hierdurch wird ein besonders günstiges und zuverlässiges Verhalten des Verdeckgestells beim Öffnen und Schließen erreicht, und darüber hinaus wird die Plane durch das Verdeckgestell über die gesamte Länge des Planenaufbaus stabilisiert. Alternativ kann auch nur ein Bügelpaar oder nur ausgewählte Bügelpaare über die Lenkerkinematik miteinander verbunden sein, während andere Bügelpaare entweder gar nicht verbunden sind oder sich ggfs. unmittelbar berühren oder mit einer Schnalle, einem Gurt oder dergl. zusammengebunden sind.

Gemäß einer bevorzugten Weiterbildung ist vorgesehen, dass die Neigung, also die Tendenz, der Lenkerkinematik zum Zusammenfalten durch eine mechanische Halteanordnung einstellbar ist. Eine solche mechanische Halteanordnung kann beispielsweise eine Gelenkbremse des gemeinsamen Gelenks, ein zwischen den Lenkern der Lenkerkinematik vorgesehenes Federglied oder Dämpfungselement, ein an den Bügeln oder den Lenkern oder den Holmen angreifender Spanngurt oder dergleichen sein und ermöglicht es insbesondere, dass die Reihenfolge, in der die benachbarten Holme zusammenfahren, gesteuert werden kann. Hierbei kann eine vergleichbare mechanische Halteanordnung auch zwischen Bügeln und Schlitten und/oder Holm vorgesehen sein. Gemäß einer ersten bevorzugten Ausgestaltung wird hierdurch erreicht, dass sich die in Öffnungsrichtung hinten liegenden Bereiche des Verdeckgestells zuerst zusammenfalten, und erst gegen Ende des Öffnungsvorgangs die vorderen Segmente. Gemäß einer alternativen Ausgestaltung fahren erst die vorderen Segmente zusammen, und zum Schluss die hinteren. Insbesondere wird hierdurch vermieden, dass das Zusammenfahren von Segmenten des Planenaufbaus im Wesentlichen zufällig erfolgt, wodurch die bewegten Massen und die hierfür erforderlichen Kräfte stark variieren können. Ferner kann die mechanische Halteanordnung, wenn sie einen Energiespeicher enthält, auch eine Unterstützung beim Öffnen oder beim Schließen des Verdeckgestells leisten.

Zweckmäßigerweise sind die Holme U-förmig ausgeführt, wobei eine Basis der U-förmigen Holme, die dem Schlitten abgekehrt ist, in geschlossenem Zustand des Planenaufbaus auf in etwa derselben Höhe angeordnet ist wie dem Schlitten abgekehrte Bereiche der Bügel, insbesondere deren Basis. Hierdurch wird erreicht, dass die Plane, die zweckmäßig an Holmen und Bügeln angeschlossen ist, in einer im Wesentlichen horizontalen Ebene einen Abschluss des geschlossenen Planenaufbaus bereitstellt. Da die Plane auch die Schenkel der Holme und/oder der Bügel seitlich bedeckt, wird diese im Wesentlichen rechteckig den Unterbau überspannen. Zweckmäßigerweise ist die Lenkerkinematik etwas unterhalb der Ebene der Basis des Bügels angeordnet, so dass die Lenkerkinematik nicht mit dem Dachbereich der Plane interagieren kann. Gleichwohl ist vorzugsweise die Lenkerkinematik recht weit oben an den Bügeln angeschlossen, um einen möglichst großen Abtauchbereich nach unten bereit zu stellen, bei dem die Teile der Lenkerkinematik nicht mit der Führung und/oder dem Schlitten in Berührung gelangen, was zu unangenehmen Geräuschen, aber auch zu Verschleiß führen kann.

Gemäß einem Aspekt weist der vorderste Schlitten einen Rahmenabschnitt auf, der oberhalb der Führung in einer horizontalen Ebene angeordnet ist, wobei der Rahmenabschnitt ein Auflager für den Abdeckbügel in seinem herabgeschwenkten Zustand bildet.

Hierdurch wird vorteilhaft erreicht, dass das Auflager für den Abdeckbügel entlang der Führung verlagert werden kann, ohne dass der Abdeckbügel auf dem Unterbau aufliegt und mit diesem einen Abschluss bilden muss. Hierdurch wird insbesondere vermieden, dass im Falle einer unbeabsichtigten Beschädigung des Unterbaus Abdeckbügel und Unterbau nicht mehr zusammengebracht werden können. Die aufeinander abgestimmten Auflager und Abdeckbügel ermöglichen einen wesentlich dichteren Abschluss, so dass transportiertes Gut schwerer entweichen kann. Zugleich ist es möglich, dass der Abdeckbügel an den Rahmenabschnitt angelenkt ist, der wiederum mit dem vordersten Schlittenpaar eine Baueinheit bilden kann, so dass der Abdeckbügel insgesamt recht kurz ausgeführt werden kann. Ein besonderer Vorteil besteht darin, dass auch bei herabgeschwenktem Abdeckbügel der bewegliche Teil des Planenaufbaus entlang der Führung verlagert werden kann, oder aber der Abdeckbügel wieder herabgeschwenkt werden kann, selbst wenn das Verdeckgestell nicht vollständig geschlossen ist, so dass wenn der Abdeckbügel schon vor Erreichen der Endposition herabgeschwenkt ist, die Verlagerung fortgesetzt werden kann.

Zweckmäßigerweise weist der Abdeckbügel einen außerhalb seiner Anlenkung an den Schlitten angeordneten Stützbereich auf, der auf dem Rahmenabschnitt horizontal zum Aufliegen kommt. Hierdurch ist es vorteilhaft möglich, dass der Abdeckbügel an den Verlauf der von ihm auszusteifenden Plane angepasst wird, während der Stützbereich auf dem Auflager zum Ruhen kommt, wenn der Abdeckbügel herabgeschwenkt ist. Der Stützbereich kann einstückig mit dem Abdeckbügel ausgebildet sein, vorzugsweise handelt es sich jedoch um eine Strebe, die mit dem Abdeckbügel verbunden ist.

Der Abdeckbügel weist vorzugsweise einen winkelförmigen Schenkel auf, so dass der Abdeckbügel eine dreidimensionale Erstreckung aufweist. Hierbei weist zweckmäßigerweise der winkelförmige Schenkel einen kurzen Schenkelabschnitt auf, der gelenkig an dem vordersten Schlitten angelenkt ist, und ferner weist der winkelförmige Schenkel einen langen Schenkelabschnitt auf, der gegenüber dem kurzen Schenkelabschnitt über einen Schenkelwinkel von über 90° und unter 145° und von vorzugsweise etwa 120° abgebogen ist. Der Stützbereich verbindet dann den kurzen Schenkelabschnitt und den langen Schenkelabschnitt in einen Bereich, der dem Schenkelwinkel abgekehrt ist, so dass der Stützbereich in etwa in einer horizontalen Ebene mit der Basis des Abdeckbügels liegt. Hierdurch ist der Abdeckbügel besonders robust und mit nach Art eines Dreiecks ausgeführten Schenkeln ausgebildet und kann um seine Anlenkung schwenken, ohne sich zu tordieren, und zugleich durch seine winkelförmigen Schenkel die Plane in Form halten.

Gemäß einer besonders bevorzugten Ausführung ist vorgesehen, dass der Abdeckbügel in seinem geöffneten Zustand mit dem kurzen Schenkelabschnitt auf dem Rahmenabschnitt horizontal zum Aufliegen kommt. Hierdurch weist der Abdeckbügel zwei stabile, durch die Masse des Abdeckbügels in Position gehaltene Zustände auf, die beide auf dem Rahmenabschnitt aufgestützt sind, wobei im herabgeschwenkten Zustand der Stützbereich und im aufgeschwenktem Zustand der kurze Schenkelabschnitt jeweils auf dem Rahmenabschnitt aufgestützt ist. Hierdurch kann der vorderste Schlitten sowohl mit geöffnetem Abdeckbügel als auch mit herabgeschwenktem Abdeckbügel entlang der Führung verlagert werden, ohne dass der Abdeckbügel einen Widerstand gegen die Verlagerung in das System einleiten würde.

Gemäß einer günstigen Weiterbildung ist vorgesehen, dass die Anlenkung des Abdeckbügels in einer horizontalen Ebene oberhalb einer Ebene der Anlenkung der Bügel angeordnet ist. Es ist aber alternativ möglich, die Anlenkung des Abdeckbügels in der selben Ebene oder in einer niedrigeren Ebene vorzusehen, oder aber bei Ausführung der Gelenkverbindung des Abdeckbügels mit dem Schlitten und/oder dem Rahmenabschnitt auch eine mehrgelenkige Verbindung wie beispielsweise ein Viergelenk vorzusehen, durch das eine stabile Position erreicht werden kann, die es nicht erforderlich macht, dass der Abdeckbügel auf dem Rahmenabschnitt abgestützt werden muss.

Vorzugsweise ist vorgesehen, dass der Abdeckbügel an dem Rahmenabschnitt gelenkig angeschlossen ist, und ferner dass an dem Rahmenabschnitt jeweils zumindest eine Tragrolle und zumindest eine Gegenrolle angeschlossen ist. Hierdurch wird vorteilhaft erreicht, dass der Abdeckbügel auch ohne Lenkergetriebe um seine Anlenkung verschwenkbar ist.

Gemäß einer bevorzugten Ausgestaltung überragt der Abdeckbügel den Rahmenabschnitt in Öffnungsrichtung zumindest ein Stück weit, wodurch die Führung, entlang der die vordersten Schlitten und die Rahmenabschnitte verlagerbar sind, etwas kürzer ausgeführt sein kann. Hierdurch kann eine Verriegelung zwischen dem Abdeckbügel und dem Rahmenabschnitt näher an die Anlenkung des Abdeckbügels an dem Rahmenabschnitt vorgesehen werden.

Gemäß einer bevorzugten Weiterbildung ist vorgesehen, dass der Abdeckbügel im Bereich seiner seitlichen Schenkel nach Art eines Fachwerks ausgebildet ist, der eine hohe Steifigkeit sicherstellt und hierdurch auch die beiden vordersten Schlitten gegenseitig zusätzlich aussteift. Zweckmäßigerweise ist ferner vorgesehen, dass eine untere horizontale Strebe des Fachwerks bzw. des seitlichen Schenkels auf dem Rahmenabschnitt zumindest teilweise aufliegt, sodass im Falle einer Bewegung des vordersten Schlittens mit dem Rahmenabschnitt auch der Abdeckbügel entsprechend bewegt wird.

Zweckmäßigerweise steht von dem seitlichen Schenkel des Abdeckbügels ein Betätigungslenker ab, der einen gebogenen Endabschnitt aufweist, der mit einem Umlenkglied nach Art einer Rolle zumindest eines für die Aufschwenkbewegung und die Abschwenkbewegung des Abdeckbügels bewirkt. Der Betätigungslenker ist als Fortsatz des seitlichen Schenkels des Abdeckbügels ausgebildet und ermöglicht so ein spielfreies Aufschwenken des Abdeckbügels ohne zwischengeschaltetes Lenkergetriebe und ohne die damit einhergehenden Lagerspiele in den zugehörigen Gelenken.

Gemäß einer besonders bevorzugten Ausgestaltung ist vorgesehen, dass zwischen dem vorzugsweise U-förmigen Hilfsbügel und dem Abdeckbügel ein Vorspannglied angeordnet ist, das den Abdeckbügel entgegen seiner Schließrichtung vorspannt. Insbesondere kann das Vorspannglied bewirken, dass bei Entriegeln des Abdeckbügels dieser entgegen seiner Schließrichtung angehoben wird. Zugleich kann das Vorspannglied bewirken, dass der Hilfsbügel ebenfalls aus seiner Orientierung bei geschlossenem Planenaufbau in eine veränderte Lage verschwenkt wird. Das Vorspannglied unterstützt damit eine Aufschwenkbewegung des Abdeckbügels und dämpft zugleich den herabschwenkenden Abdeckbügel ein Stück weit. Alternativ ist es auch möglich, das Vorspannglied zwischen dem Abdeckbügel und dem an dem vordersten Paar von Schlitten angeordneten Holm vorzusehen oder aber das Vorspannglied in die Plane einzuarbeiten.

Es ist auch möglich, dass statt eines Vorspanngliedes ein Verbildungsglied nach Art eines Koppellenkers zwischen Abdeckbügel und Hilfsbügel jeweils gelenkig angebunden ist, wodurch eine Viergelenkkinematik verwirklicht würde, die die Relativbewegung der beiden Teile günstig koppelt. Auch eine andere Lenkerkinematik kann an Stelle des Koppellenkers vorgesehen werden.

Zweckmäßigerweise ist das Vorspannglied ausgewählt aus der Gruppe umfassend eine Zugfeder, ein Zugband, ein elastischer Gurt, eine elastische Bahn oder Plane oder eine Kombination hieraus. Es ist möglich, dass mehrere der genannten Möglichkeiten miteinander kombiniert werden, insbesondere kann die Neigung der Plane, sich ein Stück weit zusammenzuziehen, hierzu genutzt werden.

Zugleich wirkt dann das Vorspannglied zwischen Hilfsbügel und Abdeckbügel besonders effektiv. Das Vorspannglied ist hierbei so ausgelegt, dass bei aufgeschwenktem Abdeckbügel der Hilfsbügel nicht aus seiner überschlagenen Position zurück in seine dem Abdeckbügel zugekehrte Position verschwenkt werden kann.

Vorzugsweise ist die Anlenkung des Hilfsbügels an einem an den vorderen Schlitten angeschlossenen Rahmenabschnitt vorgesehen, sodass der Abstand zu dem Holm des vordersten Schlittenpaares vergrößert wird und ein Umschlagen des Hilfsbügels erleichtert ist.

Gemäß einer bevorzugten Ausführung ist vorgesehen, dass zwischen dem Holm und dem Hilfsbügel ein zweites Vorspannglied angeordnet ist, das den Hilfsbügel entgegen seiner Schließrichtung vorspannt. Das zweite Vorspannglied stellt sicher, dass der Hilfsbügel in Richtung auf seine überschlagene Position gezogen wird, wobei die Masse des Hilfsbügels und die Masse des mit dem Hilfsbügel über das erste Vorspannglied verbundenen Abdeckbügels das zweite Vorspannglied spannen. Durch diese Konstellation wird zusammen mit der Reibung, die in den Gelenken des Hilfsbügels und des Abdeckbügels einer Schwenkbewegung entgegensteht, und die vorzugsweise einstellbar ist, beispielsweise durch einstellbare Schrauben oder Zwischenscheiben, erreicht, dass das System aus Hilfsbügel und Abdeckbügel immer in der Stellung verharrt, in der es durch die axiale Verlagerung der beweglichen Teile des Verdeckgestells entlang der Führung verbracht wurde. Hierdurch wird vorteilhaft vermieden, dass der Abdeckbügel aufgrund seines Eigengewichts bei Erschütterungen auf den Unterbau bzw. den Rahmenabschnitt fällt.

Vorzugsweise ist das zweite Vorspannglied ausgewählt aus der Gruppe umfassend eine Zugfeder, ein Zugband, ein elastischer Gurt, eine elastische Bahn oder Plane oder Kombinationen hieraus. Die Gruppe umfasst auch weitere elastische Mittel, die die Funktion eines Vorspanngliedes wahrnehmen können.

Gemäß einer bevorzugten Ausgestaltung ist vorgesehen, dass das zweite Vorspannglied beidendig an dem vordersten Holm angeschlossen ist, und dass ein mittlerer Bereich des zweiten Vorspannglieds um den Hilfsbügel gelegt ist. Hierdurch wird sichergestellt, dass das zweite Vorspannglied auch dann, wenn der Hilfsbügel sich an den vordersten Holm anlehnt, nicht vollständig entspannt ist, sodass eine Restspannung bestehen bleibt. Das Vorspannglied ist in diesem Fall z.B. als elastischer Gurt ausgebildet, der zwischen seinen beiden Enden bereits ein ausreichendes Maß an Spannung aufweist, der ein Entspannen bei Heranziehen des Hilfsbügels vermeidet.

Im Unterschied hierzu ist das erste Vorspannglied dann, wenn der Abdeckbügel in einer ebenfalls überschlagenen Position gegen den Hilfsbügel und gegen den Holm angelehnt ist, weitgehend entspannt, sodass bei aufgeschwenktem Hilfsbügel das zweite Vorspannglied stärker gespannt ist als das erste Vorspannglied.

Vorzugsweise gleichen die Vorspannglieder das durch die Masse des Abdeckbügels erzeugte Moment der Schließrichtung zumindest teilweise vorzugsweise zumindest überwiegend aus, sodass für die Verlagerung des Abdeckbügels eine reduzierte Kraft aufgebracht werden muss. Entsprechend kann der an den seitlichen Schenkel des Abdeckbügels angeschlossene Betätigungslenker kurz, jedenfalls kürzer als die Länge des seitlichen Schenkels des Abdeckbügels, ausgeführt sein, ohne dass die sich durch die Übersetzung und den Massenunterschied ergebende Last das Aufziehen der beweglichen Teile des Verdeckgestells blockiert.

Vorzugsweise ist ferner vorgesehen, dass der Fortsatz über ein Lenkergetriebe zum Verschwenken des Abdeckbügels in eine seiner beiden Endpositionen, also einer herabgeschwenkten Position oder einer heraufgeschwenkten Position, verschwenkbar ist. Hierdurch kann der Abdeckbügel vollständig von einer Endposition in die andere Endposition verschwenkt werden, wobei das Lenkergetriebe die Relativbewegung des Verdeckgestells entlang der Führung in eine Schwenkbewegung des Abdeckbügels überführen kann

Zweckmäßigerweise umfasst das Lenkergetriebe einen Betätigungslenker und einen Zwischenlenker, die miteinander gekoppelt sind und zu der Verschwenkung des Abdeckbügels beitragen. Es ist möglich, weitere Lenker und Hebel in das Lenkergetriebe zu integrieren, beispielsweise wenn ein Gelenk durch ein Mehrgelenk ersetzt wird.

Zweckmäßigerweise ist zumindest eines der Gelenke des Lenkergetriebes ergänzend in einer langlochartigen Kulissenbahn geführt, so dass ein Ausschlagen der Teile des Lenkergetriebes in seitliche Richtung vermieden wird. Hierzu ist der Gelenkbereich nach Art einer Tragrolle mit seitlichen Flanschen ausgebildet, die in der vorzugsweise kreisbogenförmigen Kulissenbahn gegen seitliches Auswandern abgestützt sind.

Der Zwischenlenker ist hierbei jeweils gelenkig mit dem Fortsatz und mit dem Betätigungslenker gekoppelt, so dass eine Schwenkbewegung des Betätigungslenkers in einer Schwenkbewegung des Zwischenlenkers resultiert, die wiederum über den Fortsatz den Abdeckbügel antreibt.

Vorzugsweise ist eine Anlenkung des Betätigungslenkers der Anlenkung des Abdeckbügels vorgelagert, d.h. weiter von dem Holm des vordersten Schlittens entfernt als die Anlenkung des Abdeckbügels. Hierdurch kann ein günstiger Hebelarm des Betätigungslenkers erreicht werden. Insbesondere wird so eine vergleichsweise geringe Kraft bei vergleichsweise langem Weg zum Umschwenken des Betätigungslenkers erreicht, so dass die zum Verschwenken des Abdecklenkers erforderliche Kraft nicht dazu geeignet ist, die Verlagerung des Verdeckgestells zu blockieren.

Der Betätigungslenker weist zweckmäßigerweise einen gebogenen Endabschnitt auf, der mit einem Umlenkglied wie beispielsweise einer Rolle, die an der Führung oder dem Unterbau angeordnet ist, zumindest eines von die Aufschwenkbewegung und die Abschwenkbewegung des Abdeckbügels bewirkt. Hierbei kann eine erste Rolle die Aufschwenkbewegung des Abdeckbügels bewirken, während eine zweite Rolle, die mit dem umgelegten Betätigungslenker zusammenwirkt, die Abschwenkbewegung des Abdeckbügels bewirkt. Hierzu ist der Betätigungslenker bei geöffnetem Abdeckbügel etwa in der Ebene eines den vordersten Schlitten verlängernden Rahmenabschnitts angeordnet, so dass das dann nach vorne weisende Ende des Betätigungslenkers mit dem Umlenkglied in Kontakt gelangen kann. Die konvex verlaufende Seite des gebogenen Endabschnitts verlagert dabei vorzugsweise in Herabschwenkrichtung, während die konkav verlaufende Seite des gebogenen Endabschnitts in Heraufschwenkrichtung verlagert, wenn die entsprechende Seite mit dem Umlenkglied in Eingriff gelangt.

Das Lenkergetriebe lässt hierbei zweckmäßig ein teilweises Aufschwenken des Abdeckbügels bei Kippen des Unterbaus zu, so dass der Unterbau als Kippmulde ausgebildet sein kann, aus der das enthaltene Ladegut durch eine Muldenklappe, die aufschwenkbar ist, abgeführt werden kann. Zugleich kann das Lenkergetriebe aber den maximalen Winkel, den der Abdeckbügel von dem Unterbau abschwenken kann, begrenzen, so dass nur ein Winkel von etwa beispielsweise 30° zwischen Unterbau und Abdeckbügel ermöglicht ist, aber kein darüber hinaus gehender Winkel. Vorzugsweise ist hierzu aber ein gesonderter, außerhalb des Lenkergetriebes angeordneter Haken vorgesehen; die Verriegelung kann aber auch an gegenseitig verschwenkbaren Teilen des Lenkergetriebes erfolgen.

Gemäß einer zweckmäßigen Ausführungsform ist vorgesehen, dass der Abdeckbügel an beiden Längsseiten des Verdeckgestells bzw. seiner Anlenkung jeweils einen Fortsatz aufweist, der gemeinsam mit dem Abdeckbügel um dessen Anlenkung verschwenkbar ist, und dass jeder der Fortsätze über jeweils ein eigenes Lenkergetriebe zum Verschwenken des Abdeckbügels in eine seiner Endpositionen verschwenkbar ist. Die beiden Lenkergetriebe sind dann vorteilhaft spiegelbildlich bezüglich einer den Planenaufbau längshalbierenden Ebene angeordnet. Hierdurch wird vorteilhaft erreicht, dass die Aufschwenkbewegung des Abdeckbügels von beiden Schenkeln, die an dem Schlitten angelenkt sind, in etwa gleichmäßig erfolgt, so dass eine symmetrische Belastung des Abdeckbügels und eine gleichmäßige Faltung der Plane erreicht wird.

Gemäß einer bevorzugten Weiterbildung ist vorgesehen, dass das Lenkergetriebe auf der einen Seite des Verdeckgestells zum Aufschwenken des Abdeckbügels gesteuert wird und dass das gegenüberliegende Lenkergetriebe auf der anderen Seite des Verdeckgestells zum Herabschwenken des Abdeckbügels gesteuert wird. Hierdurch wird vorteilhaft erreicht, dass die Lenker des Lenkergetriebes einen großen Schwenkwinkel überfahren können, ohne hierbei mit dem weiteren Umlenkglied zu kollidieren, da auf jeder der beiden Seiten jeweils nur ein Umlenkglied zum Umlenken in die eine bzw. in die andere Seite vorgesehen ist. Die Umlenkglieder weisen hierbei zweckmäßig einen Abstand in Längsrichtung der Führung auf, der größer ist als die Länge des Betätigungslenkers, so dass ein gleichzeitiger Eingriff des Betätigungslenkers mit beiden Umlenkgliedern vermieden ist.

Zweckmäßig weist die Führung überdies einen Anschlag für die maximale Verlagerung des vordersten Schlittens nach vorne, also in Schließrichtung, auf, wodurch verhindert wird, dass der Schlitten über das Ende der Führung oder über die ihm bei geschlossenem Planenaufbau zugedachte Position hinaus verfahren wird.

Die Anlenkung des Abdeckbügels recht weit vorne ermöglicht es vorteilhaft, dass der Abdeckbügel einen recht kurzen Abstand zwischen Anlenkung und seiner mit der Anlenkung über Schenkel verbundene Basis aufweist, so dass die benötigte Höhe, um den Abdeckbügel zu verschwenken, klein bemessen sein kann.

Gemäß einem Aspekt ist der Abdeckbügel mit dem vordersten Schlitten über einen verschwenkbaren Haken verriegelbar. Durch die Verriegelung des Abdeckbügels an dem vordersten Schlitten, insbesondere an einem von dem vordersten Schlitten vorstehenden Rahmenabschnitt, der nur in Längsrichtung der Führung verlagerbar ist, wird vorteilhaft eine günstige Möglichkeit geschaffen, die Plane an dem Unterbau festzulegen, ohne dabei zugleich den Abdeckbügel an den Unterbau verriegeln zu müssen. So kommt es zu einer günstigen Entkopplung der Verriegelung des Schlittens an der Führung und damit an den Unterbau einerseits und des Abdeckbügels an den Schlitten andererseits.

Der Haken kann wahlweise über mindestens ein Gelenk an den Abdeckbügel schwenkbar angeschlossen sein, oder aber der Haken kann über mindestens ein Gelenk an dem vordersten Schlitten angeschlossen sein. In beiden Fällen greift dann der Haken zweckmäßig mit einem Gegenlager, das an den jeweils anderen Teil angeordnet ist, zusammen, so dass es zu einem formschlüssigen Verriegeln der beiden genannten Teile kommt. Ein besonderer Vorteil des Vorsehens eines Hakens besteht darin, dass beim Verschwenken des Unterbaus, beispielsweise wenn es sich um eine Kippmulde handelt, die entleert werden muss, der Haken die Verriegelung freigeben kann, wodurch der Abdeckbügel ein Stück weit nach oben schwenken kann. Dies ist deswegen zweckmäßig, weil die Anlenkung einer Muldenklappe, die an dem oberen Bereich der Mulde am hinteren Ende derselben angelenkt ist, für ihre Verschwenkung einen Freiraum benötigt, der von dem Abdeckbügel im geschlossenen Zustand des Planenaufbaus bedeckt ist. Durch das Abschwenken des Abdeckbügels beim Kippen der Mulde wird damit der für die Bewegung der Muldenklappe erforderliche Freiraum freigegeben, indem der Haken außer Eingriff mit dem Gegenlager schwenkt, ohne dass hierfür ein Teil des Verdeckgestells entlang der Führung axial vorgeschoben werden muss. Wird die Mulde wieder in die horizontale Lage verbracht, schwenkt der Haken wieder in Eingriff mit dem Gegenlager, so dass der Haken auf Grund seiner Schwerkraft wieder in eine verriegelte Position einschwenkt.

Vorzugsweise weist der Haken eine Anschlagfläche auf, die ein Freischlagen des Hakens aus einer verriegelten Position ermöglicht, so dass der Haken auch dann Abdeckbügel und vordersten Schlitten außer Eingriff bringt, wenn die beweglichen Teile des Planenaufbaus zum Öffnen des Planenaufbaus verlagert werden. Die Anschlagfläche schlägt dann zweckmäßig gegen ein an dem Unterbau oder an der Führung oder nahe der Führung vorgesehenes Anschlagglied, wodurch der Haken um seine mindestens eine Schwenkachse verschwenkt wird und damit den Abdeckbügel von dem vordersten Schlitten freigibt. Das Anschlagglied ist hierzu derart positioniert, dass bei Öffnen des Planenaufbaus die Anschlagfläche gegen das Anschlagglied verbringbar ist. Die Anschlagfläche und der Haken gleiten dann beim Öffnen über das Anschlagglied und lassen zu, dass der Abdeckbügel bei Öffnen der beweglichen Teile des Planenaufaus aus seiner herabgeschwenkten Position in eine aufgeschwenkte Position verschwenkbar ist. Zweckmäßigerweise ist die Achse des mindestens einen Gelenks des Hakens parallel zu der Schwenkachse des Abdeckbügels angeordnet, so dass die Teile funktionell günstig aufeinander abstimmbar sind.

Vorzugsweise weist der Haken eine Führungsfläche auf, die ein Anheben des Hakens aus seiner abgesenkten Position ermöglicht, wobei die Führungsfläche mit dem Anschlagglied derart zusammenwirkt, dass bei Schließen des Planenaufbaus durch Verlagerung der beweglichen Teile des Verdeckgestells entlang der Führung der Haken das Anschlagglied überfahren kann. Hierdurch wird günstig sichergestellt, dass Haken und Anschlagglied sich beim Schließen des Planenaufbaus nicht gegenseitig blockieren und ein gesonderter Eingriff zur Freigabe nicht erforderlich ist. Auch beim Schließen des Planenaufbaus verschwenkt der Haken um seine gelenkige Anlenkung, wobei die Schwenkrichtung vorzugsweise entgegengesetzt derjenigen Richtung ist, in die der Haken beim Freischlagen aus seiner verriegelten Position verschwenkt wird.

Gemäß einer bevorzugten Ausgestaltung ist vorgesehen, dass der Haken an dem vordersten Schlitten bzw. an einem mit dem vordersten Schlitten baueinheitlich gebildeten Rahmenabschnitt, der oberhalb der Führung in einer horizontalen Ebene angeordnet ist, schwenkbar angeschlossen ist, wobei sowohl eine Verschwenkung um ein einzelnes Gelenk als auch um eine Mehrgelenkanordnung in Betracht kommt. Hierbei ist vorzugsweise der Massenschwerpunkt des Hakens unterhalb von dessen Anlenkung vorgesehen, so dass der Massenschwerpunkt bei Verschwenken des Unterbaus zu einer Schwenkbewegung veranlasst wird, die von dem Gegenlager fort und damit außer Eingriff schwenkt. Der eigentliche Haken bzw. die die Hakenfunktion übernehmenden Rastvorsprünge sind dann auf der dem Massenschwerpunkt bezüglich der Anlenkung gegenüberliegenden Seite angeordnet.

Gemäß einer alternativen Ausgestaltung ist vorgesehen, dass der Haken an den Abdeckbügel gelenkig angeschlossen ist und mit dem Rahmenabschnitt, der den vordersten Schlitten verlängert und vorzugsweise oberhalb der Führung in einer horizontalen Ebene mit dem vordersten Schlitten baueinheitlich ausgebildet ist, verriegelbar ist. In diesem Fall ist vorzugsweise der Massenschwerpunkt auf Seiten des eigentlichen Hakens bzw. des Rastvorsprungs, der mit dem Gegenlager in Eingriff gelangt, so dass eine Verschwenkung beim Abkippen des Unterbaus erreicht wird.

Vorzugsweise ist der Haken mit einem Rahmenabschnitt, der oberhalb der Führung in einer horizontalen Ebene an dem vorderen Schlitten angeordnet ist, verriegelbar. Weiter ist vorteilhaft vorgesehen, dass der Haken durch Verschwenken des Planenaufbaus und/oder des Unterbaus in eine entriegelte Lage verschwenkbar ist. Des Weiteren weist der Haken gemäß einer bevorzugten Ausgestaltung seinen Schwerpunkt unterhalb seiner Anlenkung an dem Abdeckbügel oder an dem vordersten Schlitten bzw. dem Rahmenabschnitt auf.

In vorteilhafter Weiterbildung ist vorgesehen, dass der Haken an dem einen von Abdeckbügel und vordersten Schlitten über zumindest ein Gelenk schwenkbar angeschlossen ist, wobei in weiterer Verbesserung vorgesehen ist, dass an dem anderen von Abdeckbügel und vordersten Schlitten ein Gegenlager, das insbesondere als Bolzenabschnitt ausgebildet ist, angeordnet ist. Hierbei werden durch den Haken und das Gegenlager, die miteinander vorteilhaft einen Formschluss bilden, der herabgeschwenkte Abdeckbügel und der vorderste Schlitten gegenseitig verriegelt. Zweckmäßigerweise ist das als Bolzenabschnitt ausgebildete Gegenlager an einem Ende des vordersten Schlittens angeordnet, so dass der Haken in derselben vertikalen Ebene an dem Abdeckbügel angeordnet werden kann. Um den Bolzenabschnitt hintergreifen zu können, ist zwischen dem Bolzenabschnitt und dem verbleibenden Schlitten zweckmäßig eine Aussparung vorgesehen.

Eine besonders bevorzugte Ausführung ergibt sich dann, wenn der Haken mehrere Rastvorsprünge aufweist, weil dann jeder der Rastvorsprünge des Hakens mit dem Gegenlager eine Verriegelung erlaubt. Hierdurch lässt sich eine Toleranz beim Herabschwenken des Abdeckbügels ausgleichen, indem nämlich mehrere untereinander angeordnete Rastvorsprünge mit dem Gegenlager in Eingriff gelangen können, und dementsprechend auch dann, wenn durch die Ladung oder mechanische Deformationen der zusammenwirkenden Teile die Teile sich nicht mehr vollständig zusammenführen lassen, trotzdem eine Verriegelung gegeben ist.

Zweckmäßigerweise weist der Haken auch einen Führungsabschnitt auf, der sicherstellt, dass wenn der Haken auf Grund seiner Schwerkraft mit einer der dem Rastvorsprung abgekehrten äußeren Seite auf das Gegenlager trifft, der Haken derart an dem Gegenlager vorbei verschwenkt wird, dass das Gegenlager anschließend mit einem der Rastvorsprünge zusammengreifen kann.

Vorzugsweise ist der Haken mit einer Muldenklappe oder einem anderen beweglichen Teil des Unterbaus kinematisch gekoppelt, beispielsweise über ein Zugseil, das auch umgelenkt sein kann, einen Lenker oder auch ein Getriebe. Hierdurch wird sichergestellt, dass die Schwenkbewegung des beweglichen Teils des Unterbaus auf den Haken übertragen wird, und dementsprechend der Haken außer Eingriff gelangt.

Gemäß einer bevorzugten Ausgestaltung ist vorgesehen, dass das vordere Schlittenpaar durch einen Holm und durch den Abdeckbügel miteinander verbunden ist, so dass die genannten Teile ein Portal bilden, das im Wesentlichen verkanntungsfrei entlang der Führung verlagerbar ist. Hierdurch kann der vorderste Schlitten zum Einleiten der Verlagerungsbewegung genutzt werden, die dann auf die weiteren Schlitten übertragen wird.

Zweckmäßigerweise ist der Abdeckbügel mit der Plane verbunden, so dass die Herabschwenkbewegung des Abdeckbügels die Plane, die mit den weiteren Holmen und Bügeln verbunden ist, insgesamt spannt und damit sicherstellt, dass die Schlitten mit den Holmen in den ihnen zugedachten Positionen angeordnet sind. Hierzu ist die Plane auch mit sämtlichen Holmen und möglichst auch mit sämtlichen Bügeln verbunden, wobei im Bereich der Schlitten oder der Verbindung mit den Holmen und den Bügeln die Plane vorzugsweise verstärkt ist, um ein Beschädigen der Plane zu verhindern. Die an der Plane angeschlossenen Gurte verhindern insbesondere eine Beschädigung der Plane wegen durch den Anschluss der Schlitten, Bügel und/oder Holme eingeleiteter Kräfte.

Gemäß einer bevorzugten Ausführung ist vorgesehen, dass die über den Abdeckbügel geführte Plane einen seitlichen Saum aufweist, in dem ein in der Länge einstellbares zumindest zugsteifes Zugmittel wie z.B. ein Draht geführt ist, wobei die Einstellung des Drahts über ein Schraubgewinde oder dergleichen möglich ist. Dies ermöglicht, dass der Draht in dem Saum unter einer gewissen Spannung geführt ist. Der Draht ist bei herabgeschwenktem Abdeckbügel unterhalb der horizontalen Ebene der Anlenkung des Abdeckbügels angeordnet und hält den Abdeckbügel damit ein Stück weit in Position, da der Draht zum Überwinden des durch die Anlenkachse des Abdeckbügels definierten Totpunktes beim Aufschwenken zunächst gedehnt werden muss. Erst wenn der Draht über die Anlenkachse des Abdeckbügels hinübergeführt wurde, entspannt sich dieser wieder und kann sich ein Stück weit verkürzen.

Gemäß einer bevorzugten Weiterbildung ist vorgesehen, dass die Anlenkung des Abdeckbügels an dem vordersten Schlitten weiter vorne erfolgt als jede der den vordersten Schlitten abstützenden Tragrollen angeordnet ist. Insoweit ist der Schlitten über die diesen an die Führung anschließenden Tragrollen hinaus verlängert, so dass der Hebelarm des Abdeckbügels vorteilhaft verkürzt wird.

In günstiger Ausgestaltung ist vorgesehen, dass der Abdeckbügel in seinem geöffneten Zustand vollständig vor dem Holm des vordersten Schlittenpaares angeordnet ist. Durch diesen in jeder Schwenklage des Abdeckbügels gegebenen Mindestabstand wird vorteilhaft ein ungünstiges Kippmoment auf die Tragrollen, die mit der Führung zusammenwirken, vermieden. Ferner ist sichergestellt, dass die weiteren an dem Holm vorgesehenen Funktionen wie die Verriegelung an dem Unterbau und/oder an die Führung und die Schwenkbewegung des Abdeckbügels entkoppelt sind.

Gemäß einem Aspekt zeichnet sich der Planenaufbau dadurch aus, dass einer der Holme eine einseitig entriegelbare Verriegelungsanordnung aufweist, die es vorteilhaft ermöglicht, den Holm mit den hieran angeschlossenen Schlitten an die Führung und/oder den Unterbau festzulegen und damit eine zuverlässige Arretierung des Planenaufbaus bzw. der verlagerbaren Teile des Planenaufbaus sicherzustellen.

Die Verriegelungsanordnung umfasst hierbei ein erstes Riegelglied und ein zweites Riegelglied, die an verschiedenen Längsseiten des Planenaufbaus angeordnet sind, so dass das erste Riegelglied auf der einen Längsseite für eine Verriegelung mit der Führung und/oder dem Unterbau Sorge trägt, während das zweite Riegelglied auf der anderen Längsseite des Planenaufbaus eine Verriegelung mit dem Unterbau und/oder der Führung bewirkt. Durch das Verriegeln auf beiden Seiten des Planenaufbaus wird vorteilhaft eine hohe Zuverlässigkeit der Verriegelung erreicht. Trotzdem kann die Verriegelungsanordnung einseitig entriegelt werden, ohne dass hierfür der von dem Planenaufbau bedeckte Innenbereich des Unterbaus betreten werden muss. Hierbei ist weiter vorgesehen, dass das erste Riegelglied zum Entriegeln in eine erste Entriegelungsrichtung und das zweite Riegelglied zum Entriegeln zugleich mit der Entriegelungsbewegung des ersten Riegelglieds in eine zweite Entriegelungsrichtung verlagerbar ist, wobei das erste Riegelglied und das zweite Riegelglied gemeinsam durch Ziehen an dem ersten Riegelglied von außerhalb des Verdeckgestells bzw. des Planenaufbaus entriegelbar sind. Es ist somit nicht erforderlich, die beiden Riegelglieder gesondert zu entriegeln, vielmehr wird der zweckmäßig hohl ausgeführte Holm dazu genutzt, die beiden Riegelglieder derart miteinander zu verbinden, dass die Bewegung des einen Riegelglieds auf eine Bewegung des anderen Riegelglieds übertragen wird, wobei die Verbindung geschützt ist, damit geladenes Gut sie nicht stören kann.

Die erste Entriegelungsrichtung ist zweckmäßigerweise der zweiten Entriegelungsrichtung entgegengesetzt gerichtet, so dass, wenn die erste Entriegelungsrichtung nach unten weist, die zweite Entriegelungsrichtung nach oben weist etc. Dies wird vorteilhaft dadurch erreicht, dass das erste Riegelglied über ein zumindest zugsteifes Kraftübertragungsglied wie ein Seil, eine Kette, ein Draht, ein Bautenzug oder dergleichen mit dem zweiten Riegelglied verbunden ist, wobei zweckmäßigerweise das zugsteife Kraftübertragungsglied in dem an dem vordersten Schlittenpaar angeschlossenen Holm geführt ist. Hierdurch ist es möglich, das Kraftübertragungsglied zwischen den beiden Längsseiten des Planenaufbaus anzuordnen, ohne dass es durch die Beladung des Unterbaus oder die in dem Unterbau enthaltene Ladung behindert werden könnte. Hierdurch wird weiter vorteilhaft sichergestellt, dass eine Zugbewegung auf das erste Riegelglied zuverlässig auf das zweite Riegelglied übertragen wird. Der Holm ist hierbei vorzugsweise als U-förmiger Holm mit zwei vertikalen Schenkeln und einer horizontalen, die Schenkel verbindenden Basis ausgebildet, so dass durch die an dem Holm oder in Verlängerung des Holms an den Schlitten angeordneten Riegelglieder die entgegengesetzten Entriegelungsrichtungen einfach erzielbar sind. Alternativ kann der Holm auch als die beiden Schlitten in einer gemeinsamen Ebene verbindender Spriegel ausgebildet sein, oder eine beliebige andere Konfiguration aufweisen.

Hierbei ist zu bemerken, dass die Verriegelungsanordnung nicht auf obere Öffnungen des Unterbaus beschränkt ist, sondern dass auch eine seitliche Öffnung eines Unterbaus, beispielsweise eine seitliche Ladeöffnung eines sogenannten Curtainsiders durch die Verriegelungsanordnung verriegelbar ist. Der Holm bzw. seine Basis bzw. der Spriegel verläuft dann nicht in einer horizontalen Ebene, sondern in einer vertikalen Ebene. In einem solchen Fall ist es beispielsweise möglich, dass die erste Entriegelungsrichtung und die zweite Entriegelungsrichtung dieselben Entriegelungsrichtungen sind.

Gemäß einer bevorzugten Ausgestaltung ist vorgesehen, dass dem ersten Riegelglied eine Federanordnung zugeordnet ist, die das erste Riegelglied entgegen der ersten Entriegelungsrichtung belastet, und dass dem zweiten Riegelglied eine zweite Federanordnung zugeordnet ist, die das zweite Riegelglied entgegen der zweiten Entriegelungsrichtung belastet. Hierdurch ist sichergestellt, dass für den Fall, dass das Federglied einer Federanordnung bricht, zumindest eines der beiden Riegelglieder in die Verriegelungsrichtung vorgespannt ist und damit den vordersten Schlitten an der Führung und/oder an dem Unterbau zuverlässig verriegelt. Alternativ ist es möglich, die Vorspannung der beiden Riegelglieder durch eine einzige und damit gemeinsame Federanordnung zu realisieren, deren Kraft über das Kraftübertragungsglied auf das andere Riegelglied übertragen wird.

Gemäß einer zweckmäßigen Ausgestaltung ist die erste Entriegelungsrichtung vertikal nach unten und die zweite Entriegelungsrichtung vertikal nach oben gerichtet, so dass beim Herunterziehen des ersten Riegelglieds das zweite Riegelglied nach oben gezogen wird. Die Federanordnung belastet hierbei die Riegelglieder jeweils entgegen der jeweiligen Entriegelungsrichtung, so dass die Federanordnung jeweils beim Entriegeln gespannt werden muss.

Zweckmäßigerweise ist an jedem der vordersten Schlitten oder alternativ an den Schenkeln des Holms eine Längsführung für jeweils ein Riegelglied vorgesehen, die sicherstellt, dass das Riegelglied nur in Richtung der Längsführung verlagert werden kann. Die Längsführung ist hierbei zweckmäßig in der jeweiligen Entriegelungsrichtung orientiert und stellt dadurch auch sicher, dass im Falle einer auf das Riegelglied wirkenden Zugkraft mit einer Komponente in Entriegelungsrichtung zunächst das Riegelglied entriegelt und anschließend der Schlitten erst entlang der Führung verlagert wird.

Zweckmäßigerweise ist die erste Federanordnung bzw. die zweite Federanordnung jeweils im Bereich der Längsführung für das erste Riegelglied bzw. das zweite Riegelglied angeordnet, so dass sich die Federanordnung an der Längsführung bzw. an dem die Längsführung aufweisenden Teil, Schlitten oder Holm, abstützen kann. Das jeweils andere Ende der Federanordnung stützt sich dann z.B. gegen das jeweilige Federglied ab.

Vorzugsweise ist die Federanordnung als Druckfeder oder als Zugfeder ausgebildet, die das Riegelglied entgegen der jeweiligen Entriegelungsrichtung belastet. Besonders günstig ist die Ausführung als Druckfeder, die sich leicht an dem Riegelglied ansetzten lässt. Will man die Teilevielfalt nicht zu groß werden lassen, kann auch vorgesehen sein, dass das eine Riegelglied von einer Druckfeder belastet wird, während das andere Riegelglied von einer Zugfeder belastet wird, wodurch die selben Einbauräume genutzt werden können.

Gemäß einer besonders günstigen Ausgestaltung ist vorgesehen, dass das Riegelglied jeweils einen Führungsabschnitt aufweist, der in einem ersten Höhenniveau in einer Riegelfalle arretierbar ist und durch vertikale Verlagerung von der Riegelfalle freigebbar ist. Der Führungsabschnitt des Riegelglieds ist dazu bestimmt, mit einem das Riegelglied verlagernden Riegelabschnitt in Kontakt zu gelangen, der das Riegelglied und den Führungsabschnitt nach Art einer Rampe oder eines Keils in seiner Höhe einstellt. Hierdurch kann das Riegelglied auf andere Weise als durch externe Betätigung in die Entriegelungsrichtung verlagert werden.

Gemäß einer bevorzugten Weiterbildung ist vorgesehen, dass die Riegelfallen eine vorzugsweise zentrale Arretierungsposition aufweist, wobei einerseits oder beiderseits der Arretierungsposition jeweils eine Einlaufschräge vorgesehen ist, wobei die Einlaufschräge mit dem Führungsabschnitt zusammenwirkt, um das Riegelglied beim Schließen des Planenaufbaus in die Arretierungsposition zu verlagern. Hierzu wird das Führungsglied mit seinem Führungsabschnitt entlang der Einlaufschräge bewegt, wobei die Einlaufschräge zu einer axialen Verlagerung des Riegelglieds in Entriegelungsrichtung führt. Ist die Einlaufschräge überfahren, bewirkt die Federanordnung das Eindringen in die zentrale Arretierungsposition, in der die beweglichen Teile des Planenaufbaus an den Unterbau und/oder an der Führung verriegelt sind.

Zweckmäßigerweise fasst die Riegelfalle das Riegelglied so ein, dass es die beweglichen Teile des Verdeckgestells an einer Verlagerung entlang der Führung und/oder des Unterbaus hindert, so dass das Riegelglied in der Riegelfalle gefangen ist.

Die Einlaufschräge der ersten Riegelfalle fällt zweckmäßigerweise zur Arretierungsposition des ersten Riegelglieds hin ab, während die Einlaufschräge der zweiten Riegelfalle zur Arretierungsposition des zweiten Riegelglieds hin ansteigt. Damit sind die Einlaufschrägen so angeordnet bzw. geneigt, dass sie die jeweilige Federanordnung belasten, die beim Eindringen des Riegelglieds in die Arretierungsposition wieder entlastet wird.

Gemäß einer bevorzugten Ausgestaltung ist vorgesehen, dass wenigstens eines der beiden Riegelglieder einen umgebogenen Abschnitt aufweist, wobei der Führungsabschnitt an dem Ende des umgebogenen Abschnitts angeordnet ist. Damit ist es vorteilhaft möglich, dieses Riegelglied wie das andere Riegelglied zu orientieren, wobei der Führungsabschnitt an dem Ende des umgebogenen Abschnitts mit der Einlaufschräge zusammen wirkt.

Vorzugsweise greift an dem ersten Riegelglied eine Zuglasche an, die zwischen Plane und Verdeckgestell über einen äußeren Bereich des Planenaufbaus vorsteht, wobei die Zuglasche zum Entriegeln der Verriegelungsanordnung und zum Verlagern der beweglichen Teile des Verdeckgestells entlang der Führung greifbar ist. Wird die Zuglasche von einer Bedienperson gezogen, insbesondere nach unten gezogen, wird das erste Riegelglied entgegen der Verrieglungsrichtung verlagert, bis es aus der Arretierungsposition herausbewegt ist und eine Verlagerung des zugehörigen Schlittens und/oder Holms entlang der Führung zulässt. Hierzu ist die Zuglasche zum Entriegeln der Verriegelungsanordnung und zum Verlagern der beweglichen Teile des Verdeckgestells entlang der Führung greifbar, so dass nicht nur das Ziehen oder Schleppen der Schlitten in Richtung der Führung durch die Zuglasche bewirkt wird, sondern auch das Entriegeln des Schlittens von der Führung.

Zweckmäßigerweise ist nicht nur in der geschlossenen Position des Planenaufbaus jeweils eine Riegelfalle vorgesehen, sondern auch in der geöffneten Position des Planenaufbaus. Dadurch wird sichergestellt, dass aufgrund der Masse sowie der Vorspannung aufgrund der Eigenschaften der Plane die beweglichen Teile des Planenaufbaus nicht wieder in Richtung auf die geschlossene Position verlagert werden und damit der Zugang zu dem Unterbau reduziert wird. Die Federanordnung stellt hierbei sicher, dass die Riegelglieder in die Arretierungsposition eingreifen.

Gemäß einem Aspekt ist vorgesehen, dass einer der Holme eine durch eine einseitige Betätigung entriegelbare Verriegelungsanordnung aufweist, wobei die Verriegelungsanordnung ein erstes Riegelglied und ein zweites Riegelglied aufweist, die an verschiedenen Längsseiten des Planenaufbaus angeordnet sind. Das erste Riegelglied ist hierbei zum Entriegeln in eine erste Entriegelungsrichtung, das zweite Riegelglied zum Entriegeln ebenfalls in die erste Entriegelungsrichtung verlagerbar, sodass die Entriegelungsrichtung für das erste und das zweite Riegelglied dieselbe ist. Hierdurch ist vorteilhaft eine Kinematik geschaffen, mit der beide Riegelglieder von einer Seite in dieselbe Richtung betätigt werden können, um sie zu entriegeln. Es ist möglich, hierzu eine Betätigung auf beiden Längsseiten des Unterbaus vorzusehen, zweckmäßig ist aber nur auf einer Längsseite eine Betätigung vorgesehen.

Zweckmäßigerweise ist dem ersten Riegelglied eine erste Federanordnung zugeordnet, die das erste Riegelglied entgegen der ersten Entriegelungsrichtung belastet, sodass ohne Kraftbeaufschlagung von außen das erste Riegelglied entgegen der Entriegelungsrichtung eingerückt ist. Die erste Federanordnung kann auch zugleich das zweite Riegelglied belasten, vorzugsweise ist jedoch vorgesehen, dass dem zweiten Riegelglied eine zweite Federanordnung zugeordnet ist, die das zweite Riegelglied entgegen der ersten Entriegelungsrichtung belastet. Hierdurch sind insgesamt zwei, nämlich eine erste und eine zweite Federanordnung vorgesehen, die das erste Riegelglied und das zweite Riegelglied jeweils und/oder gemeinsam belasten. Durch die Redundanz der Federanordnungen ist ein sicherer Betrieb auch dann gewährleistet, wenn eine der beiden Federanordnungen wegen Defekt ausfällt.

Vorzugsweise ist vorgesehen, dass das Riegelglied jeweils einen Führungsabschnitt aufweist, bei dem es sich vorzugsweise um ein distales Ende des als Riegel gebildeten Riegelglieds handelt, wobei der Führungsabschnitt in einem ersten, tieferen Höhenniveau in einer Riegelfalle arretierbar ist und von der Riegelfalle durch vertikale Verlagerung nach oben freigebbar ist. Die Riegelfalle blockiert hierbei das Riegelglied vorzugsweise so, dass es die beweglichen Teile des Verdeckgestells an einer Verlagerung zumindest in eine Richtung entlang der Führung und/oder des Unterbaus hindert. Das Riegelglied und die Riegelfalle sind somit gemeinsam für die Arretierung von den beweglichen Teilen des Verdeckgestells einschließlich der hieran angeschlossenen Plane bestimmt.

Zweckmäßigerweise weist die Riegelfalle eine Arretierungsposition auf, in der das jeweilige Riegelglied durch Formschluss in zumindest eine Richtung blockiert oder fixiert ist. Ferner ist einerseits oder beiderseits der Arretierungsposition eine Einlaufschräge der Riegelfalle vorgesehen, wobei die Einlaufschräge mit dem Führungsabschnitt des Riegelglieds zusammenwirkt, um das Riegelglied beim Verlagern des Planenaufbaus, beispielsweise beim Öffnen oder beim Schließen, anzuheben und in die Arretierungsposition zu verlagern. Dies geschieht zweckmäßig dadurch, dass das Riegelglied durch die Einlaufschräge in die Entriegelungsrichtung verschoben wird, in der Regel unter Spannen der dem Riegelglied zugeordneten Federanordnung, wobei das Riegelglied nach Überwinden der Einlaufschräge die Arretierungsposition erreicht, in der die zugeordnete Federanordnung das Riegelglied derart vor die Riegelfalle verschiebt, dass es zu einem formschlüssigen Blockieren kommt. Es versteht sich, dass bei Betätigung der beweglichen Teile des Verdeckgestells in dem Fall, in dem das Riegelglied in der Arretierungsposition vorgesehen ist, die Federanordnung nicht gespannt werden kann, sodass es zu einem manuellen Entriegeln kommen muss. Es versteht sich ferner, dass mehr als eine Riegelfalle über die Länge der Führung vorgesehen sein kann, da eine Verriegelung nicht nur bei vollständig geschlossenem Planenaufbau zweckmäßig ist, sondern auch bei vollständig geöffnetem Planenaufbau.

Vorzugsweise steigt die Einlaufschräge der Riegelfalle zur Arretierungsposition des Riegelglieds hin an, sodass die Entriegelungsrichtung des Riegelglieds in diesem Fall auch vertikal nach oben weist. Das Vorsehen der Einlaufschräge wirkt wie eine Rampe, das heißt die Kraft, die ein Benutzer zum Verlagern der beweglichen Teile des Verdeckgestells in das Verdeckgestell einleitet, wird durch die Rampe der Einlaufschräge in die Entriegelungsrichtung umgelenkt.

Gemäß einer bevorzugten Ausführung ist vorgesehen, dass das erste Riegelglied und das zweite Riegelglied jeweils an den beiden vordersten Schlitten des vordersten Holms vertikal geführt sind. Die vertikale Führung lässt eine Bewegung des Riegelglieds nur in Entriegelungsrichtung oder entgegen der Entriegelungsrichtung zu, und stellt zugleich ein minimales Spiel zwischen den zu arretierenden vordersten Schlitten und der Führung, an der zweckmäßig die Riegelfalle angeschlossen ist, sicher.

Gemäß einer bevorzugten Ausführung ist vorgesehen, dass an dem Holm ein Kipphebel angeschlossen ist, der einenends mit dem ersten Riegelglied in Wirkverbindung steht und der anderenends mit einem vertikal verlagerbaren ersten Zughebel gekoppelt ist, der zum Anheben des ersten Riegelglieds vertikal betätigbar ist. Der Kipphebel dient vorteilhaft in erster Linie dazu, dass die übliche Entriegelungsrichtung, die durch vertikales Ziehen an einer Zuglasche nach unten für eine Bedienperson gegeben ist, in eine Zugbewegung in Entriegelungsrichtung, also nach oben, des ersten Riegelglieds umgesetzt wird. Die Zuglasche ist hierbei an den Zughebel angeschlossen, sodass die beiden Teile durch ihre Kopplung dieselbe vertikale Bewegung ausführen. Es ist möglich, den Kipphebel und den Zughebel auch im Bereich des zweiten Riegelglieds vorzusehen, wenn an dieser Seite eine Entriegelung vorgesehen sein soll. Dann sind aber das erste Riegelglied und das zweite Riegelglied bzw. hieran angeschlossene Teile derart zu koppeln, dass beide gleichzeitig angehoben oder angesenkt werden.

Gemäß einer besonders bevorzugten Ausgestaltung ist jedoch vorgesehen, dass die Entriegelung an der Längsseite des ersten Riegelglieds erfolgt, sodass die Verriegelungsanordnung das zweite Riegelglied zweckmäßig derart mit dem ersten Riegelglied und/oder dem ersten Zughebel koppelt, so dass es zu einem Anheben des zweiten Riegelglieds etwa synchron und/oder zeitgleich mit dem ersten Riegelglied kommt. Hierzu ist zweckmäßig der erste Zughebel endseitig mit einem nach Art einer Wippe ausgebildeten ersten Dreieckslenker verbunden, während das zweite Riegelglied endseitig mit einem nach Art einer Wippe ausgebildeten zweiten Dreieckslenker verbunden ist, wobei der erste und der zweite Dreieckslenker jeweils an dem vordersten Holm befestigt sind. Der erste Dreieckslenker und der zweite Dreieckslenker sind dann jeweils über ein zumindest zugsteifes Kraftübertragungsglied wie ein Seil oder vorzugsweise eine Stange miteinander verbunden, wobei das zumindest zugsteife Kraftübertragungsglied an dem an dem vordersten Schlittenpaar angeschlossenen Holm durch die beiden Dreieckslenker geführt ist. Das Kraftübertragungsglied führt bei Betätigung des ersten Zughebels nach unten aufgrund des ersten Dreieckslenkers eine Verlagerung in Richtung auf die Längsseite des ersten Riegelglieds aus, die durch den zweiten Dreieckslenker in eine vertikale Zugbewegung des zweiten Riegelglieds umgesetzt wird. Es versteht sich, dass zum Erreichen dieser kinematischen Kopplung auch andere Teile eingesetzt oder vorgesehen sein können, insbesondere weitere Zwischenteile, die zwischen den genannten Teilen geschaltet sein können. Um keine kinematische Überbestimmung zu erreichen, ist vorgesehen, dass im Bereich der Dreieckslenker, die eine Schwenkbewegung ausführen und damit zur Übertragung einer linearen Bewegung nur bedingt geeignet sind, Langlöcher vorgesehen sind, die diese Toleranz auszugleichen vermögen. Es ist möglich, das zumindest zugsteife Übertragungsglied zum Vermeiden von Ausknicken oder Verhaken mit Ladung in einem Saum oder einer Hülle oder einer Öse, welche jeweils an dem Holm befestigt ist, zu führen, solange die axiale Bewegung des zumindest zugsteifen Übertragungsglieds hierdurch nicht behindert wird.

Gemäß einer vorteilhaften Ausführung ist vorgesehen, dass die erste Federanordnung einenends an den Holm angeschlossen ist, und anderenends an den Kipphebel angeschlossen ist, sodass das erste Riegelglied nicht unmittelbar von der ersten Federanordnung beaufschlagt ist, sondern mittelbar durch eine Zugkraft auf den dem ersten Riegelglied abgekehrten Hebelarm des Kipphebels. Hierdurch wird eine Spannung des ersten Riegelglieds in Verriegelungsrichtung in günstiger Weise erreicht.

Gemäß einer zweckmäßigen Weiterführung ist vorgesehen, dass die zweite Federanordnung einenends an den Schlitten angeschlossen ist und anderenends an das zweite Riegelglied angeschlossen ist, sodass das zweite Riegelglied in Verriegelungsrichtung gespannt ist. Es versteht sich, dass auch die erste Federanordnung wie für die zweite Federanordnung beschrieben ausgeführt sein kann. Es ist auch möglich, dass zwei Federn das erste Riegelglied beaufschlagen, nämlich eine wie die vorstehend erläuterte erste Federanordnung und eine wie die vorstehend erläuterte zweite Federanordnung.

Zweckmäßigerweise sind die erste Federanordnung und die zweite Federanordnung jeweils als preiswert erhältliche und leicht auf Funktion zu überprüfende Zugfedern, nach Art einer Schraubenfeder ausgebildet, ausgeführt, die sich leicht in dem zur Verfügung stehenden Einbauraum einhängen lassen.

Vorzugsweise ist vorgesehen, dass eine Zugschlaufe zum Verlagern der beweglichen Teile des Verdeckgestells entlang der Führung an einem an dem vordersten Schlittenpaar angeschlossenen Bügel angeschlossen ist, der einem benachbarten Schlittenpaar zugekehrt ist, so dass dieses Paar von miteinander gekoppelten Bügeln bei Betätigung der Zugschlaufe nicht nur in Verlagerungsrichtung, sondern auch nach unten belastet ist. Hierdurch wird in günstiger Weise erreicht, dass sich das Paar miteinander verbundener, einander zugekehrter Bügel erst zu einem recht späten Zeitpunkt aufrichtet, und so das vorderste Schlittenpaar und das benachbarte Schlittenpaar während eines Großteils der Verlagerungsbewegung einen großen Abstand aufweisen, der einem Verkanten der Holme durch die einseitig eingeleitete Zugkraft entgegenwirkt.

Der Planenaufbau zeichnet sich vorzugsweise dadurch aus, dass eine endlose Antriebseinrichtung vorgesehen ist, die mit einem der beiden Schlitten eines vordersten Schlittenpaars gekoppelt ist, und dass die Antriebseinrichtung einen Zahnriemen umfasst, der um zwei gezahnte Rollen gelegt ist. Hierdurch ist die Antriebseinrichtung durch einen geschlossen umlaufenden Zahnriemen gebildet, der von einer der beiden gezahnten Rollen angetrieben wird. Hierzu kann die angetriebene gezahnte Rolle entweder auf einer angetriebenen Welle sitzen, oder mit der angetriebenen Welle im Getriebeeingriff stehen. Das Vorsehen eines Zahnriemens ist aufgrund des geringen Schlupfes und der präzisen Ansteuerbarkeit sehr vorteilhaft. Ferner ermöglicht das Vorsehen eines Zahnriemens die Übertragung von recht hohen Kräften auf den Schlitten, die erforderlich sind, um den vordersten Schlitten nicht nur zu verlagern, sondern auch die hieran kinematisch gekoppelten Teile wie Abdeckbügel oder Bügel oder Hilfsbügel zu verschwenken.

Zweckmäßigerweise ist der Zahnriemen vollständig unterhalb der Führung angeordnet, so dass es nicht erforderlich ist, den Zahnriemen an weitere Schlitten des Verdeckgestells oder an verschwenkbare Teile des Verdeckgestells wie einen Betätigungslenker für einen Abdeckbügel oder dergleichen anzuschließen.

Gemäß einer bevorzugten Ausgestaltung ist vorgesehen, dass an beiden Längsseiten, also beiderseits des Unterbaus, jeweils ein endloser Zahnriemen vorgesehen ist, der jeweils mit einem der beiden Schlitten eines vordersten Schlittenpaares gekoppelt ist, so dass die beiden gegenüberliegenden Schlitten des vordersten Schlittenpaares synchron in Öffnungs- oder Schließrichtung verlagert werden können. Hierdurch wird vorteilhaft ein Verkanten vermieden, und bei Blockieren eines der beiden vordersten Schlitten auch eine Beschädigung des Verdeckgestells vermieden.

Gemäß einer bevorzugten Weiterbildung ist vorgesehen, dass die beiden Zahnriemen von einer gemeinsamen Antriebswelle antreibbar sind, die die Synchronität der Antriebsbewegung sicherstellt. Bei einer ersten Ausführung ist vorteilhaft vorgesehen, dass die Antriebswelle durch einen Elektromotor antreibbar ist, der durch Betätigung eines Druckknopfes in dem Führerhaus eines Nutzfahrzeugs beispielsweise betätigbar ist. Alternativ kann die Antriebswelle aber auch durch eine Handkurbel angetrieben werden, oder andere geeignete Antriebsmöglichkeiten sind hierfür vorgesehen.

Eine bevorzugte Weiterbildung zeichnet sich dadurch aus, dass zumindest eine gezahnte Rolle, vorzugsweise die nicht angetriebene gezahnte Rolle, über eine Verbindungsplatte mit der Führung gekoppelt ist, und dass die zumindest eine gezahnte Rolle durch ein in der Verbindungsplatte oder in der Führung vorgesehenes Langloch einstellbar ist. Hierdurch kann die Spannung des endlosen Zahnriemens eingestellt werden, und wetter- oder verschleißbedingte Längungen ausgeglichen werden. Insbesondere kann der Zahnriemen auf diese Weise auch auf die Position der Schlitten des vordersten Schlittenpaares ausgerichtet werden.

Zweckmäßigerweise ist eine gezahnte Rolle, im Falle einer angetriebenen gezahnten Rolle die angetriebene gezahnte Rolle, an einer dem Unterbau in Öffnungsrichtung anschließenden Platte angeschlossen. Hierdurch kann die Antriebswelle außerhalb der eigentlichen Aufnahmeöffnung des Unterbaus angeordnet werden, sodass diese nicht in Kontakt mit dem transportierten Gut gelangt.

Gemäß einer bevorzugten Ausgestaltung ist vorgesehen, dass der Zahnriemen den vordersten Schlitten in einer geschlossenen Position schlupffrei arretiert, ohne dass es einer zusätzlichen Verriegelung bedarf. Hierdurch kann eine manuell betätigbare Verriegelung eingespart werden. Zusätzlich bewirkt das Arretieren des vordersten Schlittens auch die Positionierung der hieran angeschlossenen Teile wie Abdeckbügel und dergleichen.

Es ist zu verstehen, dass bei Anordnung des Zahnriemens unterhalb der Führung die Schwenkbewegung der Bügel durch die Verlagerung der Schlitten durch die Zahnriemen nicht beeinträchtigt wird, sodass die Schwenkbewegungen der Bügel durch die Verlagerung entlang der Führung außerhalb der Zahnriemen erfolgt. Hierdurch ist es vorteilhaft möglich, dass durch die axiale Bewegung der beweglichen Teile des Verdeckgestells verschwenkte Teile nicht mit der Antriebseinrichtung kollidieren.

Zweckmäßigerweise ist vorgesehen, dass die Holme (umgekehrt) U-förmig ausgeführt sind, und dass eine Basis des U-förmigen Holms im geschlossenen Zustand des Planenaufbaus auf derselben Höhe angeordnet ist wie dem Schlitten abgekehrte Bereiche der Bügel. Hierdurch ergibt sich ein Planenaufbau, der im geschlossenen Zustand im Wesentlichen auf einer Höhe liegt, wenn die Plane an die Holme und die Basen der Bügel angeschlossen ist. Alternativ ist es möglich, dass der Holm auf einer geringeren Höhe angeordnet ist als die minimale Höhe der Bügel. Die Plane ist ferner zweckmäßigerweise auch an den Schenkeln der U-förmigen Holme angeschlossen, möglicherweise auch zusätzlich im Bereich der Schlitten. Es ist möglich, die Plane auch an die Schenkel der U-förmigen Bügel anzuschließen. Durch die insgesamt geringe Bauhöhe des Planenaufbaus kann dieser insbesondere günstig zur Abdeckung von auf der Straße oder der Schiene zu transportierenden Containern eingesetzt werden. Durch die erzielbaren Abstände zwischen benachbarten Schlitten weist der Planenaufbau auch ein geringes Gewicht auf.

Vorzugsweise weist der Schlitten zumindest eine obere Tragrolle und zumindest eine untere Gegenrolle auf, wobei die zumindest eine obere Tragrolle und die zumindest eine untere Gegenrolle mit einer Umfangsfläche an den Schmalseiten einer im Querschnitt rechteckigen Führungsschiene der Führung anliegen, wobei mindestens eine der zumindest einen oberen Tragrolle und der zumindest einen unteren Gegenrolle beiderseits der Umfangsfläche jeweils einen Ringflansch aufweisen, und wobei die über den Durchmesser der Umfangsfläche vorstehenden, einander zugekehrten Stirnseiten der beiden Ringflansche die Breitseite der Führungsschiene teilweise einfassen. Die Ausgestaltung der Tragrolle oder der Gegenrolle, die den Anschluss des Schlittens an die rechteckige Führungsschiene sicherstellt, lässt nicht nur eine Verlagerung des Schlittens in Richtung der Führungsschiene zu, sondern verhindert darüber hinaus ein Herausgleiten der Tragrolle bzw. der Gegenrolle von der Führungsschiene, indem die Ringflansche die Breitseite der Führungsschiene einfassen, wobei der radiale Überstand der Ringflansche gegenüber der Umfangsfläche recht klein ist. Hierdurch ist es möglich, dass sowohl an der Tragrolle als auch an der Gegenrolle jeweils die Führungsschiene einfassende Ringflansche angeordnet sind, und der Schlitten insgesamt nicht von der Führungsschiene herabfallen kann. Dadurch kann der Schlitten über die Tragrollen und/oder die Gegenrollen auch Kräfte in Y-Richtung aufnehmen.

Zweckmäßigerweise weist der Schlitten zwei Tragrollen auf, die vertikal von oben auf der Schmalseite der Führungsschiene aufliegen. Zweckmäßigerweise ist bei einer Gegenrolle diese so angeordnet, dass sie mit den beiden Tragrollen ein gleichschenkliges Dreieck aufspannt, und damit in etwa mittig zwischen den beiden Tragrollen an der unteren Schmalseite anliegt. Alternativ ist es aber auch möglich, jeweils zwei Paare aus Tragrolle und Gegenrolle jeweils gegenüberliegend beiderseits der Führungsschiene vorzusehen.

Die Auswahl der Führungsschiene als langgestrecktes rechteckiges Profilteil, vorzugsweise aus Stahl oder eloxiertem Aluminium, lässt sich leicht beschaffen und/oder ersetzen, da solche Teile als Standardbandmaße im Markt gut verfügbar sind.

Die Führungsschiene ist zweckmäßigerweise an eine seitliche Außenwand des Unterbaus über Verbindungsmittel angeschlossen, wobei die Verbindungsmittel die Breitseite der Führungsschiene durchsetzen. Als Verbindungsmittel kommen beispielsweise Schrauben oder Nieten in Betracht, die zweckmäßig durch eine Distanzhülse geführt sind, um die Führungsschiene möglichst im konstanten Abstand von der Außenwand des Unterbaus anzuschließen. Es versteht sich, dass die Außenwand des Unterbaus hierbei möglichst in einer Ebene liegen soll. Weist der Unterbau Einkerbungen oder Vorsprünge oder Rücksprünge auf, sind die Distanzhülsen entsprechend zu dimensionieren, so dass die beiderseits des Unterbaus angeschlossenen Führungsschienen in parallelen Ebenen liegen. Da die Hersteller um das Ausbeulen von Containern bei großem Gewicht oder heißer Ladung wissen, weisen die Seitenwände schon mal eine konkave Ausgangskontur auf, der die Führungsschiene dann zu folgen hat. Dadurch, dass die Schmalseite der Führungsschiene nach oben gerichtet ist, kann die Führungsschiene eng an die Außenseite des Unterbaus gerückt werden, wobei die Führungsschiene außerhalb der Distanzhülsen und Verbindungsmittel einen Abstand zu dem Unterbau einhält, der es zulässt, dass die an dem Schlitten angeordneten Tragrollen und Gegenrollen die Breitseiten der Führungsschiene umgreifen. Zweckmäßigerweise durchsetzen die Verbindungsmittel die Breitseite der Führungsschiene daher mittig, um nicht als Hindernis für die Tragrollen und Gegenrollen im Weg zu stehen.

Zweckmäßigerweise ist zwischen der Führungsschiene und der Außenwand des Unterbaus ein Spalt vorgesehen, so dass zwischen die Führungsschiene und die Außenwand des Unterbaus fallende Verunreinigungen herabfallen können, beispielsweise zwischen zwei Verbindungsmitteln für den Anschluss der Führungsschiene. Um das Herabfallen von Teilen, die auf der Schmalseite der Führungsschiene zum Liegen kommen könnten, durch diesen Spalt zu ermöglichen, ist der Abstand der Führungsschiene von der Außenwand des Unterbaus nicht kleiner als die Erstreckung von der Schmalseite der Führungsschiene. Zweckmäßigerweise ist der Abstand der Führungsschiene von der Außenwand des Unterbaus gleich der Erstreckung der Schmalseite der Führungsschiene, beispielsweise jeweils 8 mm.

Zweckmäßigerweise ist die Dicke der Tragrolle oder die Dicke der Gegenrolle schmaler als die zweifache Erstreckung der Schmalseite der Führungsschiene. Hierdurch ist sichergestellt, dass die Tragrollen und Gegenrollen an der Außenwand des Unterbaus vorbei rollen können, ohne an der Außenwand des Unterbaus hängen zu bleiben. Da tatsächlich nur ein Ringflansch der Tragrolle bzw. der Gegenrolle in Richtung auf die Außenwand des Unterbaus über die Führungsschiene vorsteht, ist die Dicke der entsprechenden Rolle in der Regel deutlich kleiner als der Abstand der gegenüberliegenden Breitseiten der Führungsschiene, bei einer Führungsschiene von 8 mm Breite und 40 mm Höhe nicht größer als 2 - 3 mm Dicke des Ringflanschs.

Gemäß einer bevorzugten Ausgestaltung ist vorgesehen, dass die Höhe der Führungsschiene, also deren Breitseite, die vertikal angeordnet ist, größer ist als die Höhe der Tragrolle und/oder der Gegenrolle. Die Tragrolle und/oder die Gegenrolle sind jeweils geringfügig kleiner ausgebildet als die Höhe der Führungsschiene.

Gemäß einer besonders bevorzugten Ausgestaltung ist die Führungsschiene aus mehreren hintereinander angeordneten Schienenabschnitten gebildet, die jeweils an der Außenwand des Unterbaus angeschlossen sind. Dies hat den Vorteil, dass im Falle einer Beschädigung nicht die gesamte Schiene von dem Unterbau abgelöst, repariert oder ausgetauscht und wieder befestigt werden muss, sondern nur der beschädigte Bereich instand gesetzt werden muss. Ferner passt sich eine in Abschnitten gebildete Führungsschiene auch besser an Deformationen des Unterbaus, beispielsweise eines Containers, dessen Dimensionen sich mit Füllung oder Temperatur der Füllung verändern können, an. Schließlich ermöglicht das Ausgestalten der Führungsschiene in einzelne Teilsegmente auch den Austausch eines Schlittens, indem ein Segment, an dem der Schlitten angeordnet ist, abgelöst wird und dann von dem Schlitten abgezogen wird, der dann repariert oder ausgetauscht werden kann. Es ist nicht länger erforderlich, den gesamten Planenaufbau zu demontieren, die Plane von dem Verdeckgestell abzunehmen oder aber mehrere Teile des Verdeckgestells abzubauen.

Das Material, aus dem die Führungsschiene hergestellt ist, ist zweckmäßigerweise ausgewählt aus der Gruppe umfassend Stahl und eloxiertes Aluminium. Zahlreiche Container sind aus Aluminium hergestellt, so dass sich eine Führungsschiene aus Aluminium gut an die Eigenschaften des Containers anpasst. Stahl ist kostengünstig und kann einfach verarbeitet werden. Wenn das Aluminium eloxiert ist, weist es dieselbe Oberflächenhärte auf wie Stahl, sodass die Rollen aus Stahl die Führungsschiene nicht zu beschädigen vermögen.

Eine besonders wichtige Anforderung bei einem Planenaufbau besteht darin, dass der Planenaufbau seitlich nicht wesentlich über die Breite des Unterbaus ragen darf. Daher ist zweckmäßig vorgesehen, dass die Außenseite der Führungsschiene weniger als 25 mm, vorzugsweise weniger als 20 mm, und möglichst ca. 15 mm von der Außenseite des Unterbaus beabstandet ist.

Hierbei ist weiter zweckmäßig, wenn der Abstand einer Außenseite des Schlittens zu der Außenseite der Führungsschiene geringer ist als der Abstand der Außenseite der Führungsschiene von einer Außenseite des Unterbaus. Hierdurch wird vorteilhaft ein schmalbauender Planenaufbau geschaffen, der trotzdem stabil an der Führungsschiene geführt ist.

An dem vordersten Schlittenpaar ist - nach vorne weisend - zweckmäßig schwenkbar ein Abdeckbügel angeschlossen, wobei der Abdeckbügel bei Verschieben des vordersten Schlittenpaares herabgeschwenkten Stellung und einer heraufgeschwenkten Stellung verschwenkbar ist.

Es ist zweckmäßig möglich, dass der an dem Paar vorderster Schlitten angeschlossene, von dem Abdeckbügel fort weisende Bügel über den mit diesem unmittelbar oder über eine Lenkerkinematik bzw. auch durch die Plane verbundenen Bügel des benachbarten Paares Schlitten in eine Richtung entgegen dem Anheben der Plane belastet ist, um eine möglichst lange Krafteinleitung in Richtung der Führung zu gewährleisten. Insbesondere kann diese Belastung dadurch erfolgen, dass der Anstellwinkel der Bügel geringer ist als bei den anderen Bügelpaaren, beispielsweise indem ein längerer Bügel eingesetzt wird, ober aber die Masse der Bügel erhöht ist, beispielsweise indem ein schwereres Material eingesetzt wird. Auch kann die Vorspannung der Schenkel der Bügel zueinander bei den Bügelpaaren unterschiedlich ausgebildet sein, sodass durch die unterschiedliche Verspannung der Bügelpaare die Belastung entgegen der Aufstellrichtung der Plane verschieden ist. Schließlich kann auch eine Expander oder eine Feder eine solche entgegen der Aufstellrichtung wirkende Kraft vorsehen.

Zweckmäßigerweise sind die Schlitten nur über zumindest eine obere Tragrolle und zumindest eine untere Gegenrolle an die Führung angeschlossen, sodass sowohl die Aufnahme von Kräften in Richtung der Führung als auch in der horizontalen Richtung senkrecht hierzu, also quer zu dem Unterbau, durch die Tragrollen erfolgt. Damit die Schlitten mit den Tragrollen der Führung folgen können, auch wenn die Führungsschienen nicht ganz zueinander parallel sind, können die U-förmig ausgeführten Holme und Bügel aufspreizen, wodurch ein Verkanten vorteilhaft vermieden wird.

Gemäß einer bevorzugten Ausgestaltung ist vorgesehen, dass die beweglichen Teile des Verdeckgestells sich von hinten nach vorne zusammenfalten. Gemäß einer anderen bevorzugten Ausgestaltung ist vorgesehen, dass die beweglichen Teile des Verdeckgestells sich von vorne nach hinten zusammenfalten. Als bewegliche Teile des Verdeckgestells sind im Wesentlichen die Planenfalthilfen anzusehen, während die Holme mit den hieran angeschlossenen Schlitten zusammenrücken. Besonders bevorzugt ist jedoch eine Ausgestaltung, bei der die verbundenen Bügel zwischen dem vordersten Schlittenpaar und dem unmittelbar benachbarten Schlittenpaar sich bei der Verlagerung in Öffnungsrichtung als letzte Planenfalthilfe anheben. Die Reihenfolge, in der sich die weiteren Bügelpaare bzw. Planenfalthilfen anheben, ist dann von untergeordneter Bedeutung, da durch die vorlaufende Achse durch das unmittelbar benachbarte Schlittenpaar einerseits, und durch den Abdeckbügel andererseits eine sehr stabile Laufwagenkonzeption erreicht ist, die eine langlebige und zuverlässige Betätigung des Verdeckgestells ermöglicht.

Die Plane ist vorzugsweise an zumindest einem von Schlitten und Holmen angeschlossen, zweckmäßigerweise sowohl an dem Schlitten als auch an den Holmen, und zwar an der Basis ihrer federnden U-Form. Da die Plane den Unterbau nicht nur überdeckt, sondern das Verdeckgestell auch seitlich begrenzt, ist zweckmäßigerweise auch eine Anbindung im Bereich der Schenkel der U-förmigen Holme vorgesehen, wobei die Anbindung auch im Bereich der Schlitten erfolgen kann.

Die Schlitten sind zweckmäßigerweise so konzipiert, dass der Schlitten eine flache Platte umfasst, und dass die Tragrollen auf derselben Seite der Platte vorstehen, an der auch die Bügel schwenkbar angeschlossen sind. Dadurch wird vorteilhaft vermieden, dass bewegliche Teile mit Ausnahme der Plane seitlich über die Ebene der flachen Platte des Schlittens vorstehen und entsprechend eine sehr kompakte Bauform erreicht.

Zweckmäßigerweise sind die Holme U-förmig ausgeführt, wobei eine Basis des U-förmigen Holmes im geschlossenen Zustand des Planenaufbaus auf derselben Höhe angeordnet ist wie dem Schlitten abgekehrte Bereiche des Bügels. Es ist aber auch möglich, dass die Holme die Schlitten verbinden, ohne eine U-Form anzunehmen, wenn die Holme beispielsweise als Spriegelschaft oder dergleichen realisiert sind.

Die Führung ist zweckmäßigerweise in einem Abstand zu dem Unterbau angeordnet, der größer ist als eine nach oben weisende Schmalseite der Führung, sodass Verunreinigungen, die auf der Schmalseite abgelegt sein sollten, nach beiden Seiten herabfallen können, ohne Brücken zu bilden und damit die Funktionalität des Planenaufbaus zu beschränken.

Zweckmäßigerweise ist das Verdeckgestell in einer horizontalen Querrichtung zu der Verlagerungsrichtung nachgiebig ausgebildet, um Toleranzen oder Deformationen des Unterbaus auszugleichen. Dies wird schon durch die U-förmige Ausgestaltung der Bügel erreicht, aber auch des Abdeckbügels, und die Holme müssen entsprechend nachgiebig sein, damit insbesondere Bereiche, in denen der Abstand der beiderseitigen Führungsschienen der Führung nicht konstant ist, durchlaufen werden können. Dem liegt der Gedanke zugrunde, dass anders als bei anderen Planenaufbauten, bei denen ein Längsträger aus Aluminium dem Verdeckgestell folgt, das heißt durch Deformation sich an dessen Maße anpasst, vorliegend das Verdeckgestell sich an die Deformationen des Unterbaus anpassen soll.

Der Planenaufbau zeichnet sich insgesamt dadurch aus, dass die Kraft zum Öffnen oder Schließen einseitig einleitbar ist, wobei die Kraft zum Öffnen oder Schließen zweckmäßig an nur einem der beiden vordersten Schlitten eingeleitet wird. Hierzu ist beispielsweise eine Gurtschlaufe an den vordersten Schlitten angeschlossen, die mit einem Werkzeug oder auch von einem motorisch angetriebenem Teil ergriffen werden kann. Da das Verdeckgestell einen Unterbau überbaut, der auch eine gewisse Höhe aufweist, beispielsweise bei einem auf einem Fahrzeug montierten Muldenkipper, muss der Widerstand des Verdeckgestells gegen die Öffnungskraft gering dimensioniert sein.

Das Verdeckgestell ist zweckmäßig breiter als der Unterbau, sodass er an einer Außenwand des Unterbaus angeschlossen werden kann. Die Teile des Verdeckgestells sind zweckmäßigerweise als Stahlteile ausgeführt, wobei die Führungsschiene alternativ zu einer Ausführung als Stahlteil auch als eloxiertes Aluminiumteil ausgeführt sein kann, das mit beweglichen Stahlteilen gut zusammenwirkt.

Eine vorteilhafte Verwendung des Planenaufbaus ergibt sich als Abdeckung bei einem Container, bei einem Lastkraftwagen, bei einem Bahnwaggon, bei einem Schwimmbad, bei einem Carport, bei einem Gebäude als Dachersatz, oder bei einem Muldenkipper.

Weitere Eigenschaften, Vorteile und Weiterbildungen der Erfindung ergeben sich aus der nachfolgenden Beschreibung eines bevorzugten Ausführungsbeispiels sowie aus den abhängigen Ansprüchen.

Die Erfindung wird nachstehend und unter Bezugnahme auf die anliegenden Zeichnungen anhand eines bevorzugten Ausführungsbeispiels näher erläutert.
- Fig. 1: zeigt eine perspektivische Ansicht auf das Verdeckgestell eines erfindungsgemäßen Planenaufbaus für einen Container im geschlossenen Zustand.
- Fig. 2: zeigt eine Seitenansicht des Verdeckgestells aus Fig. 1 in einer Seitenansicht.
- Fig. 3: zeigt eine vergrößerte Ansicht eines Schlittens aus Fig. 1 und 2.
- Fig. 4: zeigt eine vergrößerte Ansicht eines Lenkergetriebes aus Fig. 1 und 2.
- Fig. 5: zeigt eine vergrößerte Ansicht des vordersten Holms aus Fig. 1 und 2 bei herabgeschwenktem Abdeckbügel.
- Fig. 6: zeigt eine vergrößerte Ansicht des vordersten Holms aus Fig. 1 und 2 bei heraufgeschwenktem Abdeckbügel.
- Fig. 7: zeigt eine Seitenansicht des vordersten Holms aus Fig. 1 und 2 bei herabgeschwenktem Abdeckbügel
- Fig. 8A: zeigt einen vergrößerten Ausschnitt des vordersten Schlittens auf der einen Längsseite des Planenaufbaus mit Einzelheiten einer Verriegelungsanordnung.
- Fig. 8B: zeigt einen vergrößerten Ausschnitt des vordersten Schlittens auf der anderen Längsseite des Planenaufbaus mit Einzelheiten einer Verriegelungsanordnung.
- Fig. 9: zeigt eine schematische Darstellung zur Erläuterung der Verriegelungsanordnung aus Fig. 8.
- Fig. 10: zeigt eine perspektivische Ansicht auf das Verdeckgestell eines weiteren bevorzugten Ausführungsbeispiels eines erfindungsgemäßen Planenaufbaus für einen Container im geschlossenen Zustand.
- Fig. 11: zeigt eine Seitenansicht des Verdeckgestells aus Fig. 10.
- Fig. 12: zeigt eine vergrößerte Ansicht eines Schlittens aus Fig. 10 und Fig. 11.
- Fig. 13: zeigt eine vergrößerte Ansicht des hinteren Lenkergetriebes aus Fig. 10 und Fig. 11.
- Fig. 14: zeigt eine vergrößerte Ansicht des vordersten Holms aus Fig. 10 und Fig. 11 bei herabgeschwenktem Abdeckbügel.
- Fig. 15: zeigt eine vergrößerte Ansicht des vordersten Holms aus Fig. 10 und Fig. 11 bei heraufgeschwenktem Abdeckbügel.
- Fig. 16: zeigt eine Seitenansicht des Verdeckgestells aus Fig. 10 und 11 bei herabgeschwenktem Abdeckbügel.
- Fig. 17: zeigt eine perspektivische, vergrößerte Ansicht von außen mit Einzelheiten einer Verriegelung des Verdeckgestells aus Fig. 10 und 11.
- Fig. 18: zeigt eine weitere perspektivische, vergrößerte Ansicht von außen mit Einzelheiten einer Verriegelung des Verdeckgestells aus Fig. 10 und 11.
- Fig. 19: zeigt eine perspektivische, vergrößerte Ansicht von innen des Verdeckgestells gemäß Fig. 10 und 11.
- Fig. 20: zeigt eine weitere perspektivische, vergrößerte Ansicht von innen des Verdeckgestells gemäß Fig. 10 und 11.
- Fig. 21: zeigt eine perspektivische Ansicht auf das Verdeckgestell eines weiteren bevorzugten Ausführungsbeispiels eines erfindungsgemäßen Planenaufbaus für einen Container im geschlossenen Zustand.
- Fig. 22: zeigt vergrößert Einzelheiten der Führung und des Antriebs des Verdeckgestells aus Fig. 21.

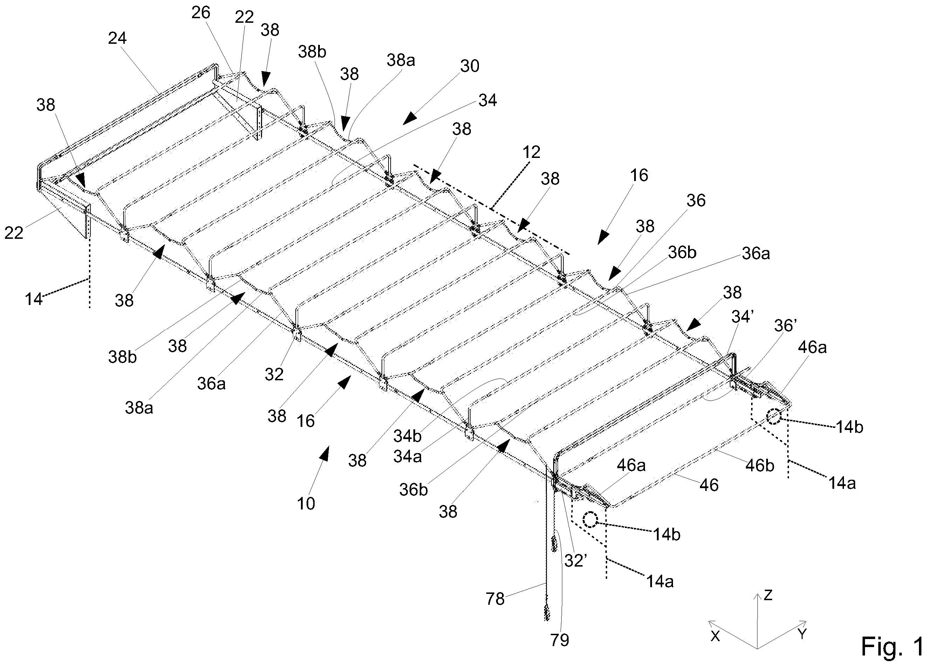

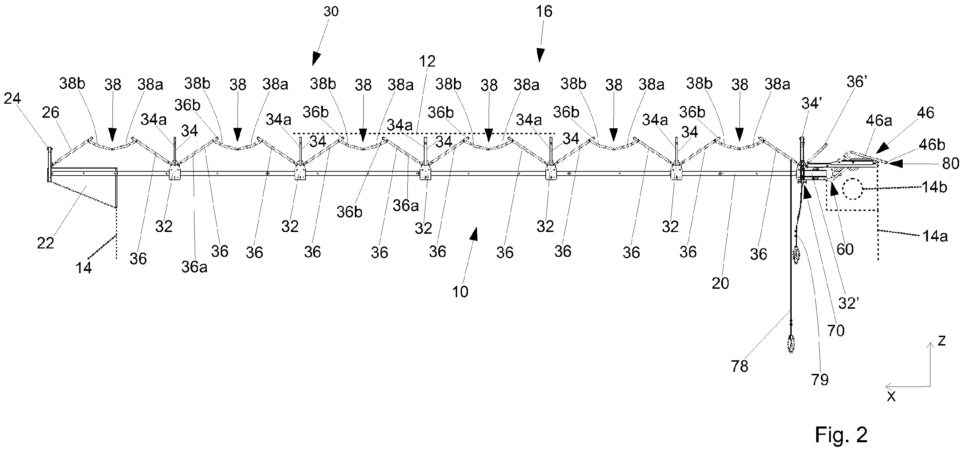

In Fig. 1 und 2 ist eine perspektivische Ansicht von der Seite bzw. eine Seitenansicht eines Planenaufbaus 10 dargestellt, bei dem eine strichpunktiert dargestellte Plane 12 angedeutet ist, die zur besseren Darstellbarkeit in den weiteren Figuren nicht dargestellt ist. Ferner ist gestrichelt der Teil einer Silhouette eines Containers 14 angedeutet, der von dem Verdeckgestell 16 überbaut wird. Der Container 14 ist beispielsweise als Schuttmulde ausgebildet, in der Geröll, aber auch staubende Materialen aufgenommen werden können, weshalb die Abdeckung durch den Planenaufbau 10 zweckmäßig, unter Umständen sogar beim Transport auf einem LKW vorgeschrieben ist. Eine vordere Stirnwand 14a des Containers 14 ist als Muldenklappe ausgebildet, die über ein Schwenkgelenk 14b an den Container 14 angeschlossen ist und die ein Entleeren des Containers durch Abkippen ermöglicht.

Der Planenaufbau 10 weist beiderseits des Containers 14 an dessen seitlicher Außenwand jeweils eine angeschlossene Führungsschiene 20 auf, die aus einer Mehrzahl von Führungsschienenabschnitten besteht, die in einem Abstand zu der Containeraußenwand an dieser festgelegt sind, beispielsweise durch Niete, Schrauben oder andere geeignete Befestigungsmittel, die einen definierten Abstand zu der Außenwand des Containers 14 ermöglichen. Hierdurch ist die Führungsschiene 20 als durchgehendes Teil, zusammengesetzt aus mehreren Teilstücken, mit einem rechteckigen Profil gebildet, die im eingebauten Zustand Ober- und Unterseite als Schmalseiten und die Breitseiten parallel zur Containerwand aufweist.

An dem in Öffnungsrichtung hinteren Ende des Verdeckgestells 16, das in Fig. 1 links dargestellt ist, kragt das Verdeckgestell 16 über das Ende des Containers 14 hinaus, wobei in Verlängerung der Außenwand des Containers 14 eine im Wesentlichen dreieckige Konsole oder Platte 22 auf der Rückseite des Containers 14 angeschlossen ist, an der auch die Führungsschiene 20 sich fortsetzt. Zweck des überkragenden Bereichs ist es, im geöffneten Zustand die gesamte Füllöffnung des Containers 14 vollständig freigeben zu können, indem die noch zu beschreibenden beweglichen Teile des Verdeckgestells 16 dorthin verschoben werden können. Insbesondere sollen keine Teile des Planenaufbaus 16 die Befüllung des Containers 14 behindern. Die dreieckige Platte 22 reicht höher als die Ebene der Führungsschiene 20 und verlängert die seitliche Außenwand des Containers 14 auch in dieser Höhe nach hinten. In der Praxis werden die Seiten eines Containers häufig gemäß der Richtung, in der er verfahren wird, bezeichnet, wobei die angedeutete Klappe 14a meist auf dem Fahrzeug hinten angeordnet ist; vorliegend wird aber der Bereich, in dem die beweglichen Teile des Verdeckgestells 16 sich bei geöffnetem Planenaufbau 10 sammeln, als hinteres Ende bezeichnet, und das vordere Ende ist dasjenige, das ausgehend von einem geschlossenen Planenaufbau 10 zuerst freigegeben wird.

Weiter ist ein die Containerbreite überspannender Endanschlag 24 vorgesehen, der im Wesentlichen in einer Ebene senkrecht zu den Führungsschienen 20 liegt und eine umgedrehte U-Form aufweist, und mit den Enden des U an den dreieckigen Platten 22 an deren Ende angeschlossen ist.

Das Verdeckgestell 16 weist ferner eine entlang der Führungsschienen 20 bewegliche Schiebeverdeckanordnung 30 auf, die zum Freigeben der Beladeöffnung des Containers 14 geöffnet und zum Abdecken auch wieder verschlossen werden kann.

Die Schiebeverdeckanordnung 30 umfasst eine Mehrzahl von Schlitten 32, die entlang der Führungsschiene 20 verschoben werden können. Jeder bezüglich einer Längshalbierenden, das ist die Ebene, die mittig zwischen den Seitenwänden des Containers 14 angeordnet ist oder diejenige Ebene, die mittig und parallel zu den Führungsschienen 20 verläuft, gegenüberliegende Schlitten 32 ist über einen U-förmigen Holm 34 miteinander verbunden, wobei der Holm 34 zwei gebogene Eckstücke 34a und wahlweise ein langgestrecktes Verbindungsstück 34b aus einem Rundrohr aufweist, die zusammengesteckt sind, wodurch eine günstige Standardisierung der Teile erreicht wird. Alle an den Schlitten 32 vorgesehenen Holme 34 liegen auf derselben Höhe, die in etwa der Höhe der Plane 12 bei geschlossenem Planenaufbau 10 entspricht. Hierzu ist die Plane 12 über geeignete Anschlussmittel mit den Holmen 34 verbunden, beispielsweise über Schnallen oder Gurte oder in der Plane 12 ausgebildete Aufnahmen. Die Zahl der Schlitten 32 und damit der Holme 34 kann je nach Länge des Planenaufbaus 10 variieren.

An jedem Schlitten 32 ist ferner beiderseits des Holms 34 jeweils ein Schwenkbügel 36 über ein Gelenk 37 schwenkbar angelenkt, der ebenfalls über ein Winkelstück 36a und ein langgestrecktes Verbindungsstück 36b jeweils aus einem zylindrischen Rohr zusammengesteckt ist. Auch an dem Endanschlag 24 ist in Höhe der Schlitten 32 ein Schwenkbügel 26 angelenkt, der aber nicht entlang der Führungsschienen 20 verlagerbar ist. Insgesamt ist es möglich, die Schwenkbügel 26, 36 auch gegenüber den Schlitten weiter oben, also an den von den Eckstücken 34a gebildeten Schenkeln der Holme 34, anzuordnen. Bei Planenaufbauten, die zum Beispiel nur eine Ladepritsche überbauen, reichen etwa Bügel aus, die in einer mittleren Höhe der Bügel angeschlossen sind. Die Schwenkbügel 26, 36 stehen unter einem flachen Winkel von etwa 30° zur Horizontalen ab und schließen einen Winkel von etwa 60° mit dem zugehörigen Holm 34 bzw. dem Endanschlag 24 ein. Die Schwenkbügel 26, 36 lassen sich jeweils in eine Winkelposition von etwa 90° zur Horizontalen hochschwenken, in dem sie praktisch parallel zu den jeweiligen Holmen 34 oder Endanschlag 24 verlaufen.

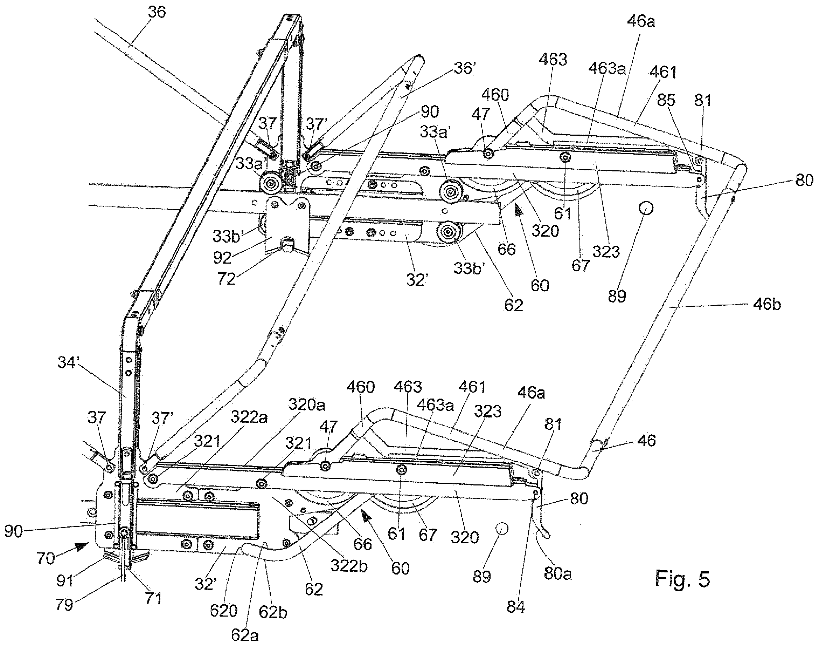

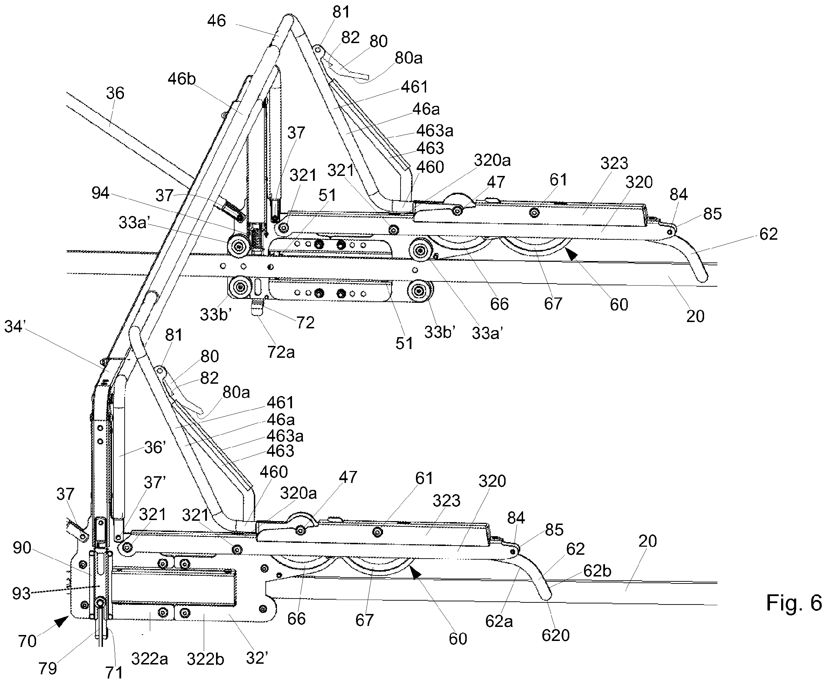

An dem vordersten Paar Schlitten 32', die von einem gegenüber den anderen Holmen 34 stabileren Holm 34' miteinander verbunden sind, ist auf der von dem übrigen Verdeckgestell 16 fort weisenden Seite ein Abdeckbügel 46 in einem Gelenk 47 angeschlossen, der zwischen einer in Fig. 5 dargestellten herabgeschwenkten, im Wesentlichen horizontalen Position, also etwa 0° Neigung zur Horizontalen, und einer in Fig. 6 dargestellten vertikalen Position, also ca. 135° Neigung zur Horizontalen, schwenkbar ist. Die Schwenkbewegung des Abdeckbügels 46 spannt hierbei die Plane 12. Man erkennt, dass der Abdeckbügel 46 wiederum zwei (mehrfach) gebogene Bügelabschnitte 46a und ein langgestrecktes Verbindungsstück 46b umfasst, die beabstandet von dem Holm 34' an einem Rahmenabschnitt 320 des vordersten Schlittens 32' angeschlossen sind. Zwischen der Anlenkung 47 des Abdeckbügels 46 und dem Holm 34' ist ein Hilfsbügel 36' in einem Gelenk 37' angelenkt, der in einem Winkel von ca. 45° gegen die Horizontale absteht.

Eine Besonderheit eines Planenaufbaus 10 für einen Container 14 besteht darin, dass der Container 14 eine hohe Steifigkeit aufweist, sodass das Verdeckgestell 16 den Formänderungen des Containers folgen muss. Diese können durch thermische Ausdehnung, beispielsweise bei heißer Befüllung, oder Deformation des Containers, beispielsweise durch die Masse der Befüllung oder durch mechanische Beschädigung, hervorgerufen werden. Daher ist ein Merkmal des Verdeckgestells, dass die U-förmigen Holme 34, Schwenkbügel 36 und Abdeckbügel 46 eine gewisse federnde Deformation in Y-Richtung, das ist die horizontale Achse quer zur Verlagerungsrichtung (X-Achse), zulassen. Damit kann das Verdeckgestell 16 Toleranzen von bis zu 50 mm ausgleichen, ohne dass es zu einer nachhaltigen Behinderung der Bewegung der Schlitten kommt. Da es bei der Manipulation des Containers 14 auch schon mal zu einer Beschädigung der Führungsschiene 20 kommen kann, ist diese vorteilhaft aus Teilstücken zusammengesetzt, die bei Bedarf jeweils gelöst und ausgetauscht oder geradegebogen werden können. Die vorstehend angegebenen Winkel bezeichnen auch den Winkel der Ebene, in der der Bügel liegt, zur Horizontalen - die Schwenkachse der Gelenke 37 liegt jeweils in Y-Richtung.

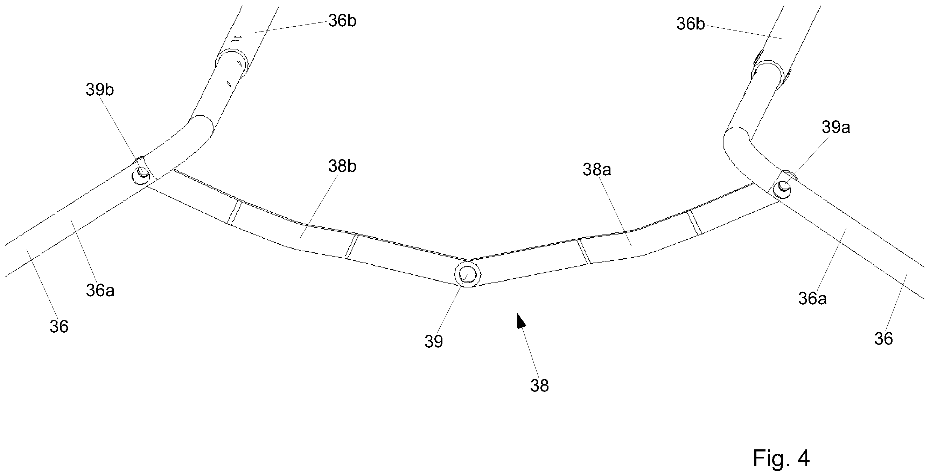

Einander zugekehrte Bügel 36 benachbarter Schlitten 32 sind im Bereich der Winkelstücke 36a über zwei Lenkerkinematiken 38 miteinander verbunden, von denen eine 38 insbesondere in Fig. 4 vergrößert dargestellt ist. Die Lenkerkinematik ist vorliegend als Kniegelenk ausgebildet, mit einem ersten Lenker 38a und einem zweiten Lenker 38b, die in einem gemeinsamen Gelenk 39 schwenkbar miteinander verbunden sind. Der erste Lenker 38a ist an einem nach hinten weisenden, an den jeweiligen Schlitten 32 angelenkten Schenkel des Winkelstücks 36a des Bügels 36 über ein Gelenk 39a angeschlossen, während der zweite Lenker 38b an einem nach vorne weisenden, an den jeweiligen Schlitten 32 angelenkten Schenkel des Winkelstücks 36a des Bügels 36 über ein Gelenk 39b angeschlossen ist. Durch die Art der gelenkigen Verbindung bewegt sich die Lenkerkinematik 38 jeweils in einer vertikalen Ebene, die vollständig außerhalb der oberen Öffnung des Unterbaus 34 liegt und daher mit geladenem Gut nicht in Kontakt gelangen kann, wobei das durch das Gelenk 39 gebildete Knie nach unten ausweicht, wenn die beiden Anlenkungen 39a, 39b beim Zusammenschieben der Schlitten 32, 32' zueinander bewegt werden. Hierdurch wird das Knie bei Zusammenklappen der Lenker 38a, 38b in einem unproblematischen Bereich zusammengelegt, und, was von Bedeutung ist, der von der Plane 12 umschlossene Raum nicht durchstoßen. Es ist aber zusätzlich oder alternativ auch möglich, einander zugekehrte Bügel 36 im Bereich ihrer Verbindungsstücke 36b über die Lenkerkinematik 38 miteinander zu koppeln bzw. zu verbinden, die sich dann in einer horizontalen Ebene zusammenlegen. Es ist möglich, dass die Lenker 38a, 38b so ausgebildet bzw. angeordnet sind, dass das Knie zwar überwiegend vertikal nach unten verlagerbar ist, zugleich aber auch ein wenig nach außen, um die Plane 12 bei Zusammenfahren der Schlitten 32 ein Stück weit nach außen zu drücken.

Im geschlossenen Zustand des Planenaufbaus 10 sind die Lenker 38a, 38b recht ausgestreckt angeordnet und schließen jeweils einen Winkel von etwa 20° zur Horizontalen ein, wodurch der Öffnungswinkel etwa 40° beträgt. Wenn die zugehörigen Holme zusammengeschoben sind, nehmen die Lenker 38a, 38b einen Winkel von nahezu 86° gegenüber der Horizontalen ein, wodurch der Öffnungswinkel der Lenker 38a, 38b weniger als 10° beträgt.

Zwei Lenkerkinematiken 38 sind auch zwischen dem an den Endanschlag 24 angelenkten Bügel 26 und dem hintersten der Bügel 36 vorgesehen, so dass der von den Schlitten 32, 32' getragene bewegliche Teil des Verdeckgestells 18 mit dem nicht beweglichen Teil, zu dem der Endanschlag 24 gehört, gekoppelt ist. Hierdurch wird der Planenaufbau 10 auch in diesem Bereich günstig ausgesteift. Es ist möglich, auch nur in diesem Bereich eine Lenkerkinematik 38 vorzusehen und die Bügel 36 sonst in anderer Weise miteinander zu koppeln. Vorzugsweise sind jedoch alle einander zugewandten Bügel 36 mit einer Lenkerkinematik 38 und in der Regel zwei Lenkerkinematiken 38 ausgestattet, die mit den beiden Bügeln 36 gemeinsam eine Planenfalthilfe für die Plane 12 bildet. Besonders bevorzugt ist jedenfalls der Bügel 26 mit dem ihm zugekehrten Bügel 36 über eine Lenkerkinematik 38 verbunden, die erstmals eine flexible Verbindung der beweglichen Teile des Verdeckgestells 16, also der Schiebeverdeckanordnung 30, und eines feststehenden Teils, also des Endanschlags 24, ermöglicht.

Man erkennt insbesondere in Fig. 2, dass im geschlossenen Zustand des Planenaufbaus 10 der von dem Schlitten 32 beabstandete Bereich der starren Holme 34 einerseits und der Schwenkbügel 36 andererseits auf einer Höhe liegen, sodass die Plane 12 im Wesentlichen in einer horizontalen Ebene liegt.

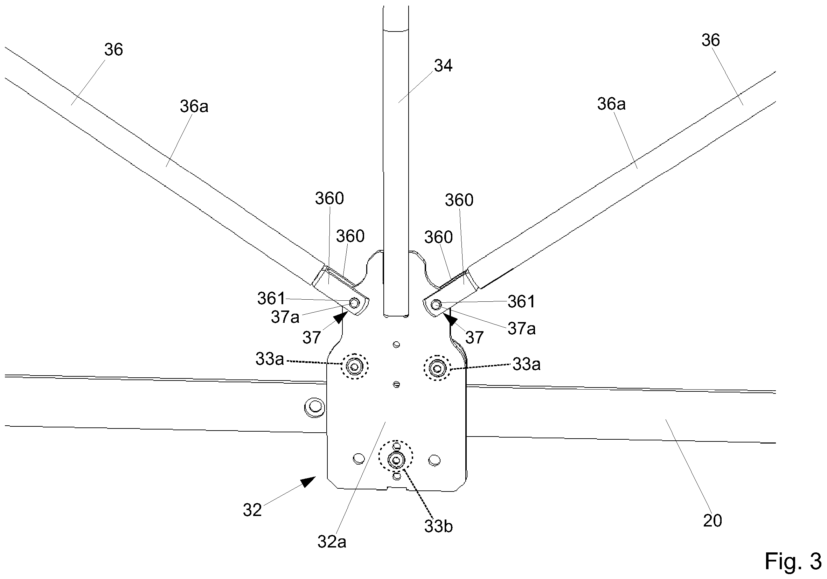

In Fig. 3 sind Einzelheiten der Anbindung der Holme 34 und Schwenkbügel 36 an einen Schlitten 32 im Einzelnen gezeigt. Der Schlitten 32 umfasst eine Schlittenplatte 32a, an der zwei obere Tragrollen 33a und eine untere Gegenrolle 33b gelenkig angeschlossen sind, die um eine Achse in Y-Richtung rotieren, und die, da sie auf der Innenseite der Schlittenplatte 32a angeschlossen sind, gestrichelt dargestellt sind. Das gebogene Endstück 34a des Bügels 34 ist als ein um 90° gebogenes Rohrstück in einer vertikalen Ebene in Y-Richtung angeordnet und an einem oberen Ende der Schlittenplatte 32a angeschlossen. Die zwei Winkelstücke 36a der zwei Schwenkbügel 36 sind über Gelenkzapfen 37a an Gelenke 37 bildende Bohrungen in der Schlittenplatte 32a schwenkbar angeschlossen. Man erkennt, dass die Enden der Winkelstücke 36a zwei Vorsprünge 360 mit je einem Gelenkauge 361 aufweisen, mithin als zweischnittiges Gelenklager ausgeführt sind, so dass die Schlittenplatte 32a mit ihren Bohrungen zwischen die beiden Vorsprünge 360 eindringt. Damit lässt sich eine besonders biegesteife Führung des Bügels 36 an dem Schlitten 32 erreichen. Man erkennt ferner, dass für die Gelenke 37 keine Schwenkbegrenzung vorgesehen ist.

In Fig. 5 bis 7 sind Einzelheiten der Anbindung von Holm 34', Schwenkbügel 36, Hilfsbügel 36' und Abdeckbügel 46 an einen vordersten Paar Schlitten 32' gezeigt.

Fig. 5 und 6 zeigen in größeren Einzelheiten den vordersten Schlitten 32' mit daran angelenktem verstärktem Holm 34', von dem in Öffnungsrichtung ein an den Gelenken 37 angelenkter Bügel 36 abgeht. Auf der der Anlenkung 37 bzgl. des Holms 34' gegenüberliegenden Seite ist ein Hilfsbügel 36' in einem Gelenk 37' angelenkt, der weniger hoch ausfällt als der Bügel 36 und der ebenfalls umgekehrt U-förmig ausgeführt ist. Der Hilfsbügel 36' bildet, wie in Fig. 2 gut zu erkennen, eine Flucht mit dem Abdeckbügel 46 dahingehend, dass die Plane 12 auch ausgehend von dem rohrförmigen Verbindungsstück des Holms 34' über den Hilfsbügel 37' zu dem vorderen Verbindungsstück 46b des Abdeckbügels 46 reicht und damit eine in etwa schräg abfallende Planenführung ermöglicht, die mit dem Ende des Unterbaus 14 zusammenläuft und diesen damit sicher abdeckt.

Der Schlitten 32' weist eine recht breite Schlittenplatte 32a' auf, die über je zwei Tragrollen 33a' und eine jeder Tragrolle 33a' gegenüberliegend bzgl. der Führung 20 angeordnete Gegenrolle 33b' geführt ist. Zur besseren Abstützung gegen den Unterbau bzw. die Führung 20 weist der Schlitten 32 weiter zwei Führungsrollen 51 auf (Fig. 6), die um eine vertikale Achse drehbar sind und die sich gegen die Breitseite der Führungsschiene 20 abstützen, wobei es möglich ist, dass die Führungsrollen 51 auch gegen die Seitenwandung des Unterbaus 14 abrollen. Der Schlitten 32' kann auch vier Führungsrollen 51 vorsehen.

Der vorderste Schlitten 32' weist jeweils einen Rahmenabschnitt 320 auf, der sich oberhalb der Führung 20 in einer horizontalen Ebene, die in etwa mit den Anlenkungen 37, 37' zusammenfällt, erstreckt und nach vorne, also in Schließrichtung des Planenaufbaus 10, die vorderste Tragrolle 33a' überragt. Der Rahmenabschnitt 320 ist hierbei als U-förmiges Blechbiegeteil ausgebildet, das an der Basisplatte 32a' des vordersten Schlittens 32' mittels Nieten 321 oder alternativ auch Schrauben festgelegt ist. Der Rahmenabschnitt 320 ist dabei nach unten offen ausgebildet und verbindet damit zwei Plattenhälften 322a, 322b der Grundplatte 32a' des vordersten Schlittens 32', die weiterhin über andere Verbindungsmittel miteinander verbunden sind.

Auf der nach oben weisenden Basis des Rahmenabschnitts 320 ist ein mit dem Rahmenabschnitt 320 verbundener Beschlag oder Abschnitt 323 vorgesehen, in dem das Drehlager für die Anlenkung 47 des Abdeckbügels 46 vorgesehen ist, ferner ein weiteres Drehlager 61 für ein weiter unten noch näher beschriebenes Lenkergetriebe 60 zum Verschwenken des Abdeckbügels 46 vorgesehen. Die nach oben weisende Fläche des Abschnitts 323 bildet ein Auflager für den Abdeckbügel 46 in seiner herabgeschwenkten Stellung, wodurch der Abdeckbügel 46 mit dem Schlitten 32' gekoppelt ist und über den Rahmenabschnitt 320 auf diesem aufliegt, so dass ein unmittelbares Aufliegen auf dem Unterbau 14 vermieden wird. Dies hat weiter den Vorteil, dass der vorderste Schlitten 32' nach Entriegeln einer Verriegelungsanordnung 70, die nachstehend näher erläutert wird, auch mit herabgeschwenktem Abdeckbügel 46 entlang der Führung 20 verlagert werden kann, so dass der Vorgang des Entriegelns der Verriegelungsanordnung 70, des Verlagerns des vordersten Holms 34' und das Aufschwenken des Abdeckbügels 46 nicht gleichzeitig, sondern in kurzer Folge erfolgen kann. Weiter bildet der Rahmenabschnitt 320 auch einen Auflagebereich 320a auf seiner nach oben weisenden Basis für den Schenkel 46a des Abdeckbügels 46, wenn dieser in seiner heraufgeschwenkten Stellung ist.

Der Schwenkbügel 46 ist, wie in Fig. 5 und 6 in größeren Einzelheiten zu erkennen, aus mehreren Rohrabschnitten zusammengesetzt, nämlich aus je zwei einen seitlichen Schenkel definierenden gebogenen Abschnitten 46a, die jeweils in der Anlenkung 47 verschwenkbar sind, und einem rohrförmigen Verbindungsstück 46b, der die beiden gebogenen Abschnitte 46a miteinander verbindet.

Hierbei ist der gebogene Abschnitt 46a mehrfach gebogen, so dass ein winkelförmiger Schenkel entsteht, der dann einen Winkel aufweist, der durch das rohrförmige Verbindungsstück 46b verlängert wird. Der winkelförmige Schenkel 46a weist einen kurzen Schenkelabschnitt 460 und einen langen Schenkelabschnitt 461 auf, die um einen Schenkelwinkel von ungefähr 120° gegenseitig abgebogen sind, wobei das dem Schenkelwinkel abgekehrte Ende des kurzen Schenkelabschnitts 460 gelenkig an dem Gelenk 47 des vordersten Schlittens 32' angeschlossen ist, und das dem Schenkelwinkel abgekehrte Ende des langen Schenkelabschnitts 461 endseitig in Richtung auf dem rohrförmigen Abschnitt 46b umgebogen ist.

Der kurze Schenkelabschnitt 460 und der lange Schenkelabschnitt 461 werden durch eine Strebe 463 miteinander verbunden, die selbst wiederum abgewinkelt ist und mit dem kurzen Schenkel senkrecht auf dem kurzen Schenkelabschnitt 460 steht, während ihr langer Schenkel in einem spitzen Winkel mit dem langen Schenkelabschnitt 461 zusammenläuft. Die Strebe 463 steift den Schenkel 46a in einer vertikalen Ebene aus, indem eine Art Dreieck aufgebaut ist.

Die von dem langen Schenkelabschnitt 461 fort weisende Seite der Verbindungsstrebe 463 bildet einen Stützbereich 463a aus, die eine Auflagefläche bildet, die bei herabgeschwenktem Abdeckbügel 46 auf dem Auflager 323 vollflächig zum Aufliegen kommt. Hierdurch ruht der Abdeckbügel 46 im herabgeschwenkten Zustand auf dem Auflager 363 und kann ohne weiteres, insbesondere ohne Geräuschentwicklung, mit dem Schlitten 32' entlang der Führung 20 verlagert werden, ohne selbst an der Führungsschiene 20 geführt zu sein.

An der Verbindungsstrebe 463 ist an deren Ende, das mit dem langen Schenkelabschnitt 461 verbunden ist, ein Haken 80 über ein Gelenk 81 schwenkbar angeschlossen (Fig. 5). Der Haken 80 weist eine Rastausnehmung 82 auf, die mit einem in einem Auge 84 an dem von dem Holm 34' abgekehrten Ende des Rahmenabschnitts 320 einsetzten Bolzen 85 durch die Schwerkraft des Hakens 80 so koppelbar ist, dass der Rastvorsprung 82 hinter den Bolzen 85 gleitet und so ein Heraufschwenken des Abdeckbügels 46 bei horizontaler Anordnung des Planenaufbaus 10 verhindert.

Es ist möglich, dass der Haken 80 mehrere Rastabschnitte 82 aufweist, die bei herabgeschwenktem Haken 80 in etwa untereinander angeordnet sind und damit wie ein Sägezahnprofil aussehen, damit bei nicht vollständig herabgeschwenktem Abdeckbügel 46, beispielsweise auf Grund von Verformungen, Verunreinigungen oder überstehender Ladung, gleichwohl eine Verriegelung des Hakens 80 mit dem Bolzen 85 gegeben ist.

Es ist ferner möglich, den Haken 80 an dem Rahmenabschnitt 320 anzuordnen und den ein Gegenlager bildenden Bolzenabschnitt an dem Abdeckbügel 46 anzuordnen, wobei dann dafür Sorge zu tragen ist, dass der Schwerpunkt des an dem Rahmenabschnitt 320 angelenkten Hakens unterhalb seiner Anlenkung liegt, damit der Rastabschnitt zum Bilden einer formschlüssigen Verriegelung mit dem Gegenlager sicher ergriffen wird.

Ein besonderer Vorteil des Hakens 80 besteht darin, dass in dem Fall, in dem der Unterbau 14 verschwenkt wird, beispielsweise um ein Abkippen von Ladegut aus dem Unterbau 14 durch Aufschwenken der Klappe 14a um die Anlenkung 14b zu bewirken, der Haken 80 ebenfalls außer Eingriff mit dem Bolzen 85 gelangt. In diesem Fall erfordert die Schwenkbewegung der Klappe 14a um die Anlenkung 14b, dass ein Teil der Klappe 14a in denjenigen Bereich verschwenkt wird, in dem sich der geschlossene Abdeckbügel 46 mit der hieran angeschlossenen Plane 12 befindet. Die Schwenkbewegung des Unterbaus 14 führt jedoch dazu, dass auf Grund der Schwerkraft der Haken 80 ebenfalls verschwenkt wird, so dass der Haken 80 von dem Gegenlager 85 freikommt und dem Abdeckbügel 46 eine Schwenkbewegung ermöglicht. Hierdurch wird günstig verhindert, dass die Klappe 14a des Unterbaus 14 den Abdeckbügel 46 trotz seiner Verriegelung an dem Rahmenabschnitt 320 des Schlittens 32' deformiert.

Der Haken 80 weist ferner eine Anschlagfläche 80a auf, die ein Freischlagen des Hakens 80a aus seiner mit dem Bolzen 85 verriegelten Position ermöglicht. Hierzu ist ein Anschlagglied 89 an der Führung 20 vorgesehen, das bolzenartig von der Breitseite der Führungsschiene 20 vorsteht und gegen das beim Öffnen des Planenaufbaus 10 die Anschlagfläche 80a verbracht wird. Durch die abgeschrägte oder abgerundete Form der Anschlagfläche 80a wird der Haken 80 um die Anlenkung 81 und damit außer Eingriff von dem Bolzen 85 an dem Rahmenabschnitt 320 verschwenkt. Hierdurch wird vorteilhaft ermöglicht, dass der Schlitten 32' mit dem hieran angeschlossenen Abdeckbügel 46 auch entlang der Führung 20 verlagert werden kann und die Verriegelung des Abdeckbügels 46 an dem vordersten Schlitten 32' freigegeben wird, ohne dass hierfür der Haken 80 gesondert betätigt werden muss. Mithin ermöglicht die Anschlagfläche 80a es, dass der Haken 80 bei axialer Verlagerung des Schlittens 32' außer Eingriff mit dem Bolzen 85 gelangt und so die verriegelten Abdeckbügel 46 und Schlitten 32' entkoppelt werden. Der Haken 80 hat mithin zwei Entriegelungsmöglichkeiten, nämlich zum einen durch Verschwenken des Unterbaus 14 und zum anderen durch axiales Verlagern der beweglichen Teile des Verdeckgestells 16 entlang der Führung 20.

Zweckmäßigerweise kann der Haken 80 insbesondere dann, wenn er an dem Rahmenabschnitt 320 angeschlossen ist, eine Führungsfläche aufweisen, die ein Verschwenken des Hakens ermöglicht, wenn dieser das Anschlagglied 89 bei Verlagern des vordersten Schlittens 32' in Schließrichtung erneut überfährt, damit der Haken 80 nicht mit dem Anschlagglied 89 blockiert. Bei dem vorliegenden Ausführungsbeispiel, bei dem der Haken 80 an dem Abdeckbügel 46 angeschlossen ist, übernimmt die Anschlagfläche 80a auch die Funktion der Führungsfläche.

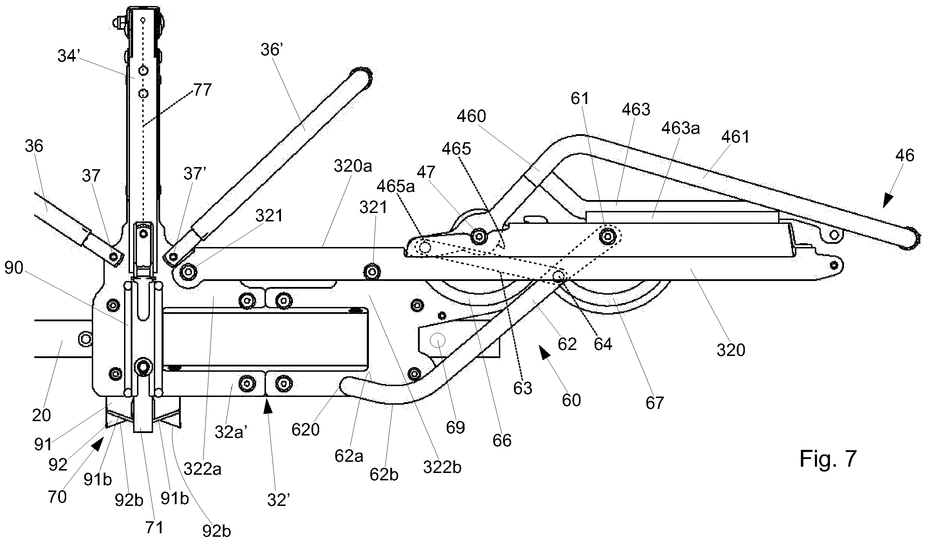

Man erkennt ferner in Fig. 5 und 7, dass das langgestreckte Verbindungsstück 46b des Abdeckbügels 46 im herabgeschwenkten Zustand bis auf das Niveau des Rahmenabschnitts 320 abtaucht, so dass die Plane 12 praktisch bis an die Oberkante des Unterbaus 14 reicht.

Insbesondere in Fig. 7 erkennt man, dass der Lenker 46 im Bereich seiner Anlenkung 47, also in Verlängerung des Schenkels 46a bzw. des kurzen Schenkelabschnitts 460, einen Fortsatz 465 aufweist, der in einem nach oben offenen Bereich des Teils 323 des Rahmenabschnitts 320 aufgenommen und daher nur teilweise erkennbar ist. An dem der Anlenkung 47 abgekehrten Ende des Fortsatzes 465 ist eine Lagerstelle 465a ausgebildet, die eine Krafteinleitung zum Verschwenken des Abdeckbügels 46 ermöglicht. Es ist möglich, an die Lagerstelle 465a einen längs verlagerbaren Antrieb anzuschließen, der sich beispielsweise gegen den Schlitten 32' abstützt und damit motorisch die Verschwenkung der Abdeckklappe 46 bewirkt. In dem vorliegenden Ausführungsbeispiel ist hierzu jedoch ein Lenkergetriebe 60 vorgesehen, das eine Verlagerungsbewegung des Schlittens 32' entlang der Führung 20 in eine Schwenkbewegung des Abdeckbügels 46 umwandelt.

Das Lenkergetriebe 60 umfasst einen Betätigungslenker 62, der in der Lagerstelle 61 gelenkig gelagert ist, und einen Zwischenlenker 63, der einen Ends in der Lagerstelle 465a gelenkig gelagert ist und anderen Ends über ein Gelenk 64, das im Abstand zu der Lagerstelle 61 an dem Betätigungslenker 62 vorgesehen ist, gelagert ist. Die Gelenkzapfen in den Lagerstellen 465a, 64 sind jeweils als Kulissensteine ausgeführt, die jeweils in kreisbahnförmigen Kulissenbahnen 66, 67 um das Gelenk 47 bzw. die Anlenkung 61 verlagerbar sind, wobei die Kulissenbahnen 66, 67 ein seitliches Ausknicken der Lenker 62, 63 des Lenkergetriebes 60 verhindern sollen. Es ist möglich, die in dem Schlitten 32' ausgebildeten Kulissenbahnen 66, 67 auch wegzulassen, ohne dass die grundsätzliche Funktion des Lenkergetriebes 60 dadurch beeinträchtigt wird. Auch eine seitliche Führung der Teile des Lenkergetriebes 60 in dem Rahmenabschnitt 320 ist möglich.

Man erkennt, das die Anlenkung 61 des Betätigungslenkers 62 der Anlenkung 47 des Abdeckbügels 46 vorgelagert ist, wobei die beiden Anlenkungen 47, 61 in derselben horizontalen Ebene angeordnet sind. Der Abstand der Anlenkung zu der jeweiligen Kulissenbahn 66, 67 ist jedoch unterschiedlich, so dass ein Übersetzungsverhältnis zwischen den beiden Kulissensteinen 465a, 64 vorteilhaft erzielt ist. Es ist möglich, die Anlenkungen 47, 61 auch in unterschiedlichen Ebenen vorzusehen, oder aber anstelle des Verbindungslenkers 63 mehrere Verbindungslenker z.B. nach Art eines Viergelenkgetriebes vorzusehen, die den Fortsatz 465 mit dem Betätigungslenker 62 koppeln.

Der Betätigungslenker 62 wirkt mit einem auf der Führungsschiene 20 angebrachten Umlenkglied 69, bei dem es sich um eine Rolle oder einen Zapfen oder dergleichen handeln kann, zusammen. Wird der Schlitten 32' verlagert, gelangt der Betätigungslenker 62 mit seiner dem Umlenkglied 69 zugekehrten Innenseite 62a eines der Anlenkung 61 abgekehrten gebogenen Endabschnitts mit dem Umlenkglied 69 in Eingriff, und das Umlenkglied 69 veranlasst den Betätigungslenker 62 zu einer Schwenkbewegung um die Anlenkung 61. Hierdurch wird über den Zwischenlenker 63 der Fortsatz 465 zu einer Schwenkbewegung gezwungen, wodurch der Abdeckbügel 46 heraufgeschwenkt wird. Die Kulissenführungen 66, 67 sind dabei so ausgebildet, dass sie den Schwenkwinkel des Abdeckbügels 46 begrenzen können.

Wird der Schlitten 32' entlang der Führung 20 verlagert, gelangt die Innenseite 62a des Betätigungslenkers 62 mit dem Umlenkglied 69 in Kontakt, so dass bei weiterem Verlagern des Schlittens 32' entlang der Führung 20 der Abdeckbügel 46 hochgeschwenkt wird. Durch die gekrümmte oder gebogene Form des Endabschnitts des Betätigungslenkers 62 wird der Betätigungslenker 62 bis in eine Lage verschwenkt, bei der das Ende 620 des Betätigungslenkers 62 in einer Ebene oberhalb des Umlenkgliedes 69 liegt, so dass der Schlitten 32' mit dem Lenkergetriebe 60 und dem dann in Verlängerung des Rahmenabschnitts 320 angeordneten Betätigungshebel 62 über das Umlenkglied 69 hinübergleiten kann. Hierbei kann die Kulissenbahn 67 einen solchen Überstand aufweisen, dass der Betätigungslenker 62 gerade eben über das Anlenkglied 69 gehoben wird, sodann aber wieder ein Stück weit herabfällt, so dass die äußere Seite 62b des Betätigungslenkers 62 beim Zurückfahren des vordersten Schlittenpaares 32' mit seiner äußeren Seite 62b gegen das Umlenkglied 69 gelangt und in umgekehrte Richtung verlagert wird, so dass der Abdeckbügel 46 wieder in seine herabgeschwenkte Position verschwenkt wird. Hierbei ist aufgrund der Symmetrie vorgesehen, dass der Abdeckbügel 46 jeweils an seinen beiden Schenkeln 46a je einen Fortsatz 465 aufweist, und dass beiderseits jeweils ein Lenkergetriebe 60 zum Verschwenken des Abdeckbügels 46 an dem Fortsatz 465 vorgesehen ist, wobei auf der einen Seite des Verdeckgestells 16 ein Umlenkglied 69 zum Steuern der Aufschwenkbewegung des Abdeckbügels 46 vorgesehen ist, wenn auf der anderen Seite des Verdeckgestells 16 ein Umlenkglied 69 zum Steuern der Herabschwenkbewegung des Abdeckbügels 46 vorgesehen ist.

Es versteht sich, dass das Umlenkglied 69 in einem solchen Abstand von dem Schlitten 32' bzw. dem hieran angelenkten Lenkergetriebe 60 vorgesehen ist, dass bei einer axialen Verlagerung des Schlittens 32' in X-Richtung zunächst der Haken 80 freigeschlagen wird und anschließend erst der Abdeckbügel 46 aufgeschwenkt wird. Es ist möglich, das Lenkergetriebe 60 mit dem Haken 80 zu verbinden, so dass anstelle eines Aufschlagens des Hakens 80 dieser von dem Lenkergetriebe 60 verlagert wird, wobei dann unter Schwerkraft auch das Lenkergetriebe 60 schwenkbeweglich ausgeführt sein muss, um den Haken 80 außer Eingriff mit dem Gegenlager 85 zu bringen, was vorliegend aber ohne weiteres gegeben ist. Das Lenkergetriebe 60 erlaubt ein teilweises Aufschwenken des Abdeckbügels 46 bei Kippen des Unterbaus 14.

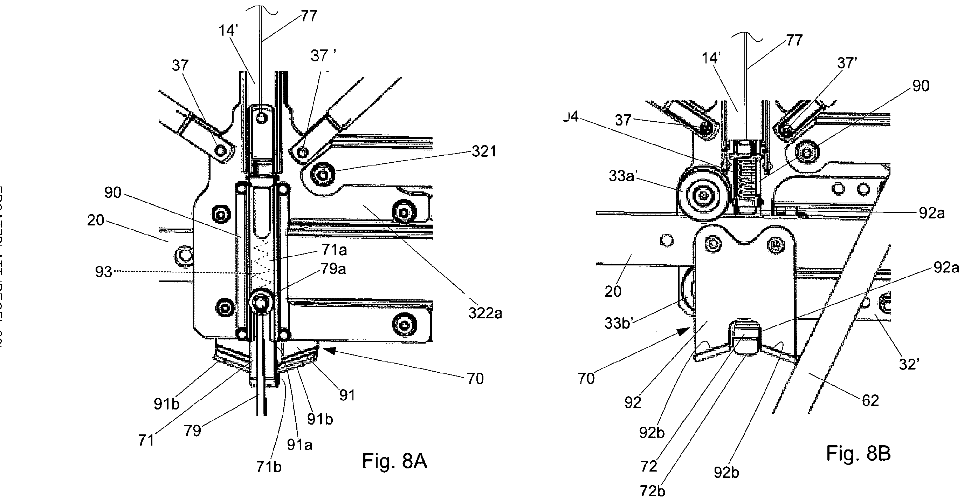

In Fig. 8A und 8B ist jeweils vergrößert ein Teil des vordersten Schlittens 32' der einen Längsseite (Fig. 8A) und der anderen Längsseite (Fig. 8B) des Planenaufbaus 10 gezeigt, an dem die Verrieglungsanordnung 70 angeschlossen ist. Die Verriegelungsanordnung 70 weist ein erstes Riegelglied 71 auf, das in Fig. 8A gezeigt ist, wobei das erste Riegelglied 71 als Flachmaterialzuschnitt aus einem streifenförmigen Band ausgeführt ist. Das Riegelglied 71 weist einen ersten Abschnitt 71a auf, der in einer an dem vordersten Schlitten 32' vorgesehenen Längsführung 90 axial verlagerbar angeordnet ist.

Das erste Riegelglied 71 weist einen dem ersten Abschnitt 71a abgekehrten, nach Art eines U doppelt umgebogenen Endabschnitt auf, der ein in Richtung auf die längshalbierende gerichtete Abfaltung und eine hierzu senkrechte weitere Abfaltung enthält, wobei die weitere Abfaltung ein nach oben gerichtetes Ende aufweist, das einen Führungsabschnitt 71b des Riegelgliedes 71 bildet. Auf der gegenüberliegenden Längsseite ist ein zweites Riegelglied 72 in einer entsprechenden Längsführung 90 mit einem ersten Abschnitt 72a längsverschiedlich geführt, wobei das aus der Längsführung 90 vorstehende zweite Riegelglied 72 einen von dem Führungsabschnitt 72a in der Längsführung 90 abgekehrten nach Art eines Z doppelt umgebogenen Abschnitt aufweist, der einen in Richtung auf die Längshalbierende, in horizontaler Ebene liegenden ersten Abfaltbereich und einen hiervon vertikal nach unten vorstehenden weiteren Abfaltabschnitt mit einem Ende aufweist, das einen Führungsabschnitt 72b des zweiten Riegelglieds 72 bildet.

Dem ersten Riegelglied 71 ist im Bereich der Führungsschiene 20 an dem Unterbau 14 eine erste Riegelfalle 91 zugeordnet, und auf der gegenüberliegenden Seite ist dem zweiten Riegelglied 72 eine zweite Riegelfalle 92 zugeordnet, die an die Innenseite der Längsführung 20 festgeschraubt ist derart, dass die Tragrollen 33a' und Gegenrollen 33b' entlang der Schiene 20 an der Riegelfalle 92 vorbeilaufen können. Die Riegelfalle 91 des ersten Riegelglieds 71 bzw. die Riegelfalle 92 des zweiten Riegelglieds 72 weist jeweils eine zentrale Aussparung 91a, 92a auf, die beiderseits von der Riegelfalle derart begrenzt ist, dass bei eingerückter Stellung des Riegelglieds 71, 72 dieses nicht in Richtung der Führungslinie 20 verlagert werden kann, so dass der Schlitten 32' jeweils an der Schiene 20 arretiert ist.

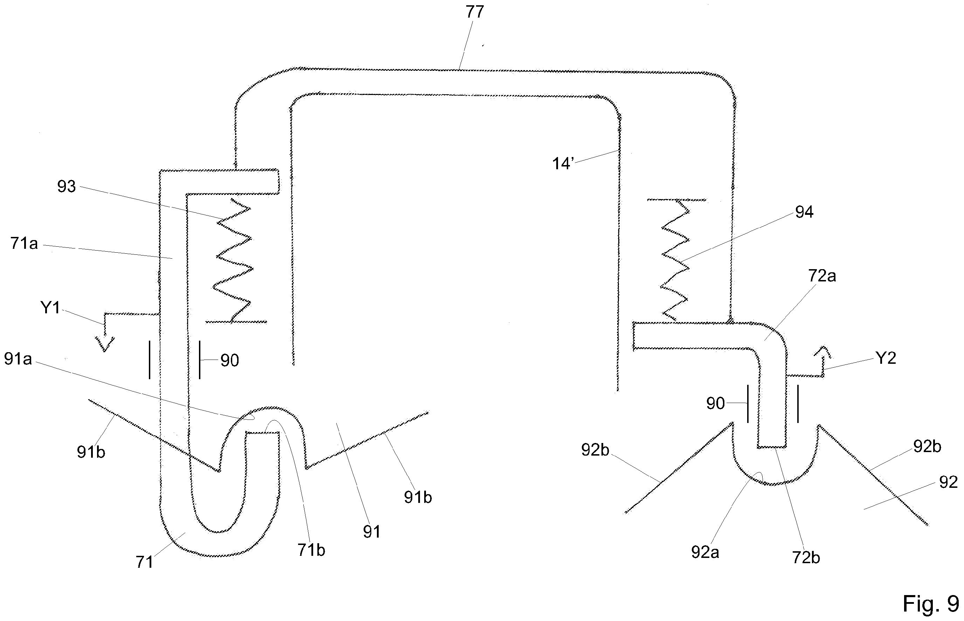

Das erste Riegelglied 71 ist zum Entriegeln in eine erste Entriegelungsrichtung, Y1 (Fig. 9), die vertikal nach unten zeigt, verlagerbar, so dass der Führungsabschnitt 71b unterhalb der Riegelfalle 91 gelangt und damit an der Riegelfalle 91 vorbei verlagerbar ist. Das zweite Riegelglied 72 ist zum Entriegeln in eine zweite Verriegelungsrichtung Y2 (Fig. 9) verlagerbar, die der ersten Verriegelungsrichtung Y1 entgegengesetzt ist und damit vertikal nach oben zeigt, wodurch der Führungsabschnitt 72b des zweiten Riegelglieds 72 von der Riegelfalle 92 freikommt.

Hierbei sind das erste Riegelglied 71 und das zweite Riegelglied 72 mittels eines in dem vorderen Holm 34' von einer Längsseite zur anderen Längsseite geführten, als Seil 77 ausgebildetes zumindest zugsteifes Kraftübertragungsglied miteinander verbunden, wobei das Seil 77 mit den beiden Riegelgliedern 71, 72 verbunden ist. Wird über eine Zuglasche 79, die über ein Gelenk 79a an dem ersten Riegelglied 71 angeschlossen ist, das erste Riegelglied 71 nach unten gezogen, bewirkt das Seil 77 ein nach oben Ziehen des zweiten Riegelglieds 72. Es ist möglich, anstelle des Seils 77 auch ein Gestänge, eine Kette oder ein anderes zumindest zugsteifes Kraftübertragungsglied vorzusehen.

Die Riegelfalle 91, 92 weist eine zentrale Ausnehmung 91a, 92a auf, die eine Arretierungsposition bildet, die ausreichend breit bemessen ist, dass die Riegelglieder 71, 72 darin einrücken können. Beiderseits der Arretierungsposition 91a, 92a ist jeweils eine Einlaufschräge 91b, 92b ausgebildet, die von einem an die Führungsschiene 20 angeschlossenen Basisbereich so abgefaltet vorsteht, dass sie mit zumindest dem nach unten weisenden Ende des Führungsgliedes 71, 72 zusammengreift. Die Einlaufschräge wird jeweils in X-Richtung überfahren und weist eine Steigung nach Art eine Rampe in Y-Richtung auf.

Das erste Riegelglied 71 und das zweite Riegelglied 72 sind jeweils durch eine als Schraubenfeder ausgebildete Druckfeder 93, 94 in Richtung auf die Ausnehmung 91a, 91b der Riegelfalle 91, 92 vorgespannt, so dass das erste Riegelglied 71 nach oben gedrückt wird, und das zweite Riegelglied 72 nach unten gedrückt wird. Die die erste Druckfeder 93 enthaltende erste Federanordnung bzw. die die zweite Druckfeder 94 enthaltende zweite Federanordnung ist jeweils im Bereich der Längsführung 90 angeordnet, wobei ein seitlich von dem Riegelglied 71, 72 abstehender Bereich das eine Widerlager für die Druckfeder 93, 94 bildet, und ein an der Längsführung 90 vorgesehener Absatz das zweite Widerlager für die jeweilige Druckfeder 93, 94 bildet, was schematisch in Fig. 9 dargestellt ist.

Man erkennt in Fig. 8A, dass die Einlaufschräge 91b der ersten Riegelfalle 91 in Richtung auf die Arretierungsposition 91a von der Längsführung 90 fort, also nach unten abgeschrägt ist, während die Einlaufschräge 92b der zweiten Riegelfalle 92 (Fig. 8B) in Richtung auf die Arretierungsposition 92a nach oben, also in Richtung auf die Führung 90, abgeschrägt ist. Hierbei wird der Führungsabschnitt 71b des ersten Riegelgliedes 71 in Richtung auf die untere Fläche der Einlaufschräge 91b von der Feder 93 gespannt, während der Führungsabschnitt 72b des zweiten Riegelgliedes 71 in Richtung auf die obere Fläche der Einlaufschräge 92b von der Feder 94 gespannt wird.

Läuft nun beim Verlagern der jeweilige Führungsabschnitt 71b, 72b auf die Einlaufschräge 91b, 92b, verlagert bei Überfahren der nach Art einer Keilrampe ausgeführten Einlaufschräge 91b, 92b die horizontale Bewegung in X-Richtung das Riegelglied 71, 72 in Entriegelungsrichtung Y1, Y2, bis der Führungsabschnitt 71b, 72b an der Einlaufschräge 91b, 92b vorbei geführt ist. Dann verlagert die Feder 93, 94 unter Entspannung die Riegelglieder 71, 72 entgegen der Entriegelungsrichtung Y1, Y2, so dass die Riegelglieder 71, 72 bzw. deren Führungsabschnitte 71b, 72b in der Arretierungsposition 91a, 92a gehalten sind und verriegelt damit dem vordersten Schlitten 32' an der Führung 20.

Man versteht, dass in der Endposition, in der der vorderste Schlitten 32' gehalten ist, grundsätzlich eine Einlaufschräge 91b, 92b ausreichend ist, vorliegend ist die Riegelfalle 91, 92 jedoch von beiden Seiten mit Einlaufschrägen 91b, 92b ausgebildet, damit das selbe Bauteil auch am anderen Ende der Führung 20 vorgesehen werden kann, um das zusammengeschobene, geöffnete Verdeckgestell 16 in der maximal geöffneten Position arretieren zu können.

An dem ersten Riegelglied 71 greift eine Zuglasche 79 an, die in Fig. 8a zum Teil dargestellt ist, mit der das erste Riegelglied 71 nach unten und über das Seil 77 zugleich das zweite Riegelglied 72 nach oben verlagert werden kann. Hierzu reicht es aus, wenn eine ausreichend hohe Kraftkomponente nach unten an der Zuglasche 79 angreift, so dass die Verriegelungsanordnung 70 aus dem ersten Riegelglied 71 und dem zweiten Riegelglied 72 gegenüber den Riegelfallen 91 und 92 freigegeben wird und die horizontale Kraftkomponente als Verlagerungskraft in den vordersten Schlitten 32' eingeleitet wird. Es ist möglich, nach dem Entriegeln und Verlagern des Schlittens 32' fort von der Arretierungsposition nicht die Zuglasche 79 zu betätigen, sondern eine weitere Zugeinrichtung 78 (Fig. 1), die an einem der Bügel 36 angreift. Hierdurch wird die Kraft in X-Richtung gleichmäßiger in die beiden vordersten Schlitten 32', die durch den Schwenkbügel 36 verbunden sind, eingeleitet.

Man erkennt in den Zeichnungen, dass die Rollen 33a, 33b jeweils eine genutete Umfangsfläche aufweisen, wobei die Nutbreite gleich oder geringfügig größer ist als die Schmalseite der rechteckigen Führungsschiene 20. Hierdurch zentrieren sich die Schlitten 32, 32' selbständig an der Schmalseite der Führungsschiene 20, und es wird vorteilhaft vermieden, dass die Rollen von der Schiene 20 abrutschen können.

Jeder weitere Schlitten 32 weist, wie in Fig. 3 gezeigt, zwei obere Tragrollen 33a und eine oder zwei Gegenrollen 33b auf, deren Umfangsfläche im genuteten Bereich mit einer oberen Schmalseite bzw. eine unteren Schmalseite der Führungsschiene 20 in Kontakt steht. Beiderseits der Umfangsfläche weisen die Rollen 33a, 33b einen Flansch auf, der auch als Ringflansch bezeichnet wird, der die Breitseite der Führungsschiene 20, die in einer vertikalen Ebene liegt, über eine geringe Höhe, die dem Überstand der Ringflansche über der Umfangsfläche entspricht, einfasst. Der Überstand beträgt etwa einige Millimeter, so dass ausreichend Höhe der Führungsschiene 20 von etwa 40 mm verbleibt, um Schrauben zum Anschluss an den Container 14 durch die Breitseite etwa mittig zu setzen. Die Höhe der Rollen 33a, 33b beträgt gleichermaßen einschließlich Ringflansch 38 mm und ist damit geringer als die Höhe der Führungsschiene 20. Der Abstand der Führungsschiene 20 von der Außenwand ist gleich groß wie ihre Breite, nämlich 8 mm (oder auch 7,5 mm). Der Abstand der Außenseite der Schlitten 32, 32' zu der Außenseite der Führungsschiene 20 beträgt ca. 10 mm, so dass der Überstand des Verdeckgestells 16 über den Unterbau 14 in Y-Richtung auf jeder Seite weniger als 30 mm, vorzugsweise um die 25 mm ausmacht.

Das Verdeckgestell 16 des Planenaufbaus kann Toleranzschwankungen im Abstand der beiden Führungsschienen 20 von bis zu +/- 50 mm ausgleichen, indem die Bügel 26, 36, 36', 46 und Holme 34 mit ihren Schenkeln voneinander fort gespreizt oder zueinander hin gestaucht werden. Die Elastiztiät der Bügel 26, 36, 36', 46 und Holme 34 stellt dieses Spiel auf Höhe der Schlitten 32, 32' bereit.

Um die Schlitten 32, 32' im geschlossenen Zustand des Planenaufbaus exakt entlang der Führungsschiene 20 zu verteilen, ist an beiden Längsseiten des Planenaufbaus 10 an die Schlitten 20 und an den Endanschlag 24 ein Zugband, das als Draht ausgebildet ist, jeweils angeschlossen. Das Zugband verhindert, dass die Schlitten 32, 32' einen größeren Abstand zueinander einnehmen als für die geschlossene Position erwünscht, und da das Zugband weniger dehnbar ist als die an die Holme 34, 34' und Bügel 36 angeschlossene Plane, entlastet das Zugband die Plane 12 auch. Das Zugband ist hierbei fest an die Tragplatten der Schlitten angeschlossen und in einem Saum der Plane 12 geführt, so dass es nicht herabhängen kann und zugleich den Saum gegen den Unterbau 14 spannt. Die Plane 12 kann, um die durch die Schlitten eingeleiteten Kräfte besser aufzunehmen, im Bereich der Schlitten eine Verstärkung wie einen eingearbeiteten Gurt aufweisen.

Die Erfindung funktioniert nun wie folgt:
In der geschlossenen Position des Planenaufbaus 10, die in Fig. 1 und 2 gezeigt ist, ist der Abdeckbügel 46 durch je einen der Haken 80 gegen jeweils einen der vordersten Schlitten 32' verriegelt. Die vordersten Schlitten 32' sind wiederum durch die Verriegelungsanordnung 70 an der Führung 20 festgelegt.

Durch den abgesenkten Abdeckbügel 46 ist die Plane 12 gespannt, wobei die Plane 12 an zumindest einem der Holme 34 und der Schwenkbügel 36 festgelegt ist. Überdies ist die Plane 12 zweckmäßig im Bereich der Schlitten 32, 32' an diese angeschlossen, um auch seitlich den Raum, der durch den Planenaufbau 10 abgedeckt werden soll, möglichst blickdicht und zugriffssicher abzusichern. Es ist möglich, dass die Plane 12 hierzu im Bereich ihres Saums Drähte oder dergleichen aufweist, die den Saum bei geschlossenem Planenaufbau 10 spannen, bei geöffnetem Planenaufbau 10 aber in der Lage sind, dem Anheben der Plane 12 aufgrund des Anhebens der durch zwei Schwenkbügel 36 und dazwischen angeordneten Lenkerkinematiken 38 gebildeten Planenfalthilfe zu folgen.

Ausgehend von dieser geschlossenen Position wird der Abdeckbügel 46 bzw. der vordere Schlitten 32' entriegelt, und die Bedienung des Verdeckgestells 16 kann von nur einer Seite erfolgen.

Zum Öffnen des Planenaufbaus 10 wird in einem ersten Schritt die Zugschlaufe 79 mit einer abwärts gerichteten Komponente gezogen. Die Verriegelungsanordnung 70 entriegelt dann die Riegelglieder 71, 72 aus den Riegelfallen 91, 92, und sobald der vorderste Schlitten 32' ein Stück weit in X-Richtung verlagert ist, können die Riegelglieder 71, 72 nicht mehr von den Federn 93, 94 in die Riegelfalle 91, 92 zurückgedrängt werden.

Zum weiteren Öffnen des Planenaufbaus 10 schlägt in einem zweiten Schritt der Haken 80 mit seiner Anschlagfläche 80a gegen das Anschlagglied 89, so dass der Haken 80 um seine Anlenkung 81 veschwenkt und damit den Abdeckbügel 46 von dem vordersten Schlitten 32' freigibt.

Zum weiteren Öffnen des Planenaufbaus 10 schlägt in einem dritten Schritt der Betätigungslenker 62 gegen das Umlemkglied 69, so dass die Bewegung zum Verlagern des vordersten Schlittens 32' in eine Aufschwenkbewegung des Abdeckbügels 46 umgewandelt wird, bis dieser mit seinem kurzen Schenkelabschnitt 460 auf dem Bereich 320a des Rahmenabschnitts 320 liegt.

Es versteht sich, dass die vorstehenden drei Schritte auch zeitlich überlappend oder in unterschiedlicher Reihenfolge ausführbar sind.

In weiterer Folge der Verlagerungsbewegung entlang der Führung 20 legen sich die Planenfalthilfen zusammen, bis alle Schlitten in einem zusammengeschobenen Paket im hinteren Bereich der Führung 20 an den Platten 22 angeordnet sind. Dort verriegelt die Verriegelungsanordnung 70 das Paket an einer weiteren Riegelfalle 91, 92.

Die Schließbewegung erfolgt in umgekehrter Reihenfolge zu der Öffnungsbewegung, wobei auch hier die Krafteinleitung einseitig an dem vordersten Schlitten 32' erfolgt, beispielsweise über eine hieran angeschlossene Schlaufe. Es ist aber auch möglich, ein motorisch angetriebenes Zugmittel an einen der vordersten Schlitten 32' anzuschließen, um die Plane 12 automatisch zu öffnen und zu schließen. Während des Ziehens des vordersten Schlittens 32' entlang der Führungsschiene 20 entfalten sich wieder die Plane 12 und die Planenfalthilfen aus den Schwenkbügelpaaren 36.

Erst wird die hintere Riegelanordnung entriegelt, dann die Planenfalthilfen 36, 38 auseinandergefaltet und schließlich über das Lenkergetriebe 60 der Abdeckbügel 46 herabgeschwenkt, wonach der Haken 80 in Eingriff mit dem Gegenlager 85 kommt, bevor die Riegelglieder 71, 72 wieder in die vorderen Riegelfallen 91, 92 über die Einlaufschrägen 91b, 92b überführt werden und dort unter Entlastung der Federn 93, 94 in die Arretierungsposition verbracht werden.

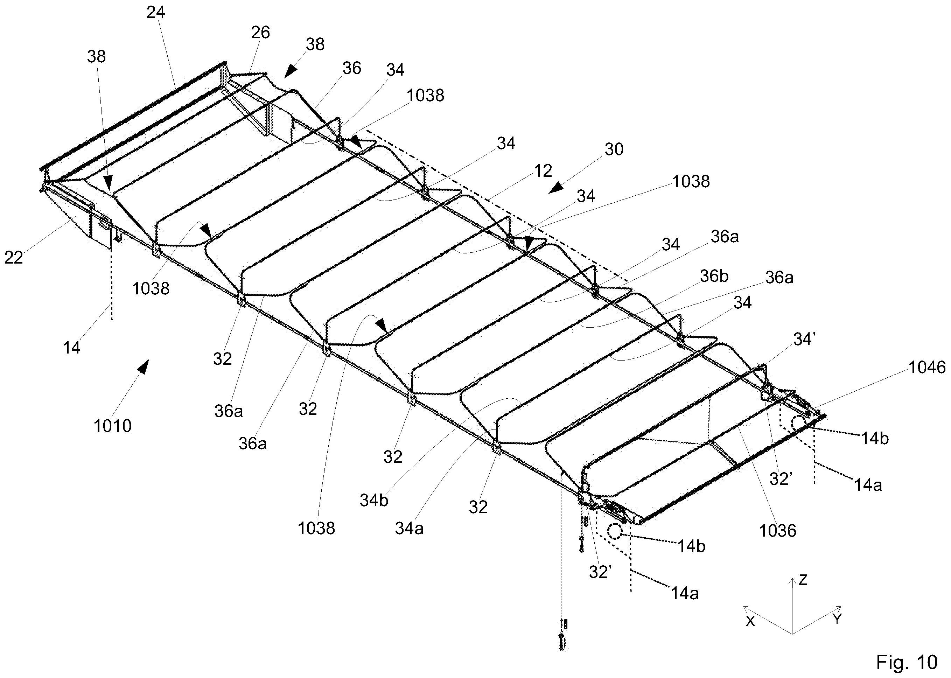

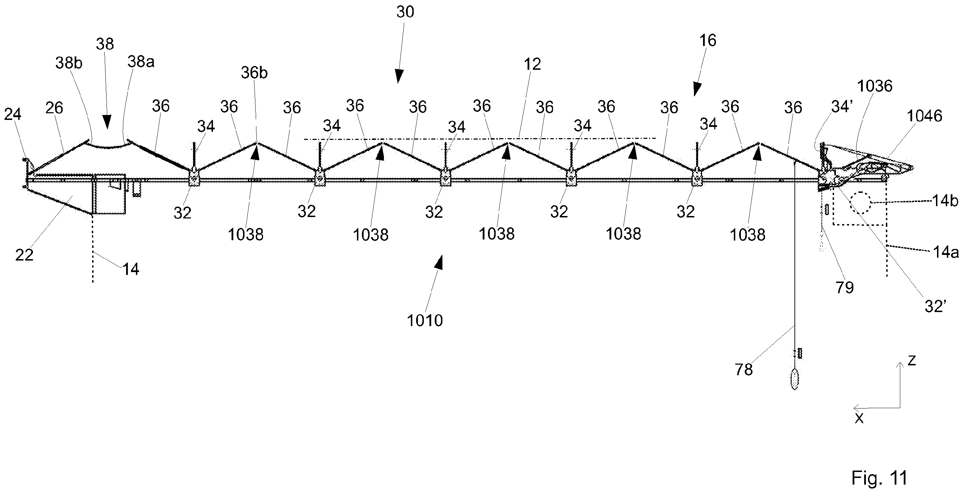

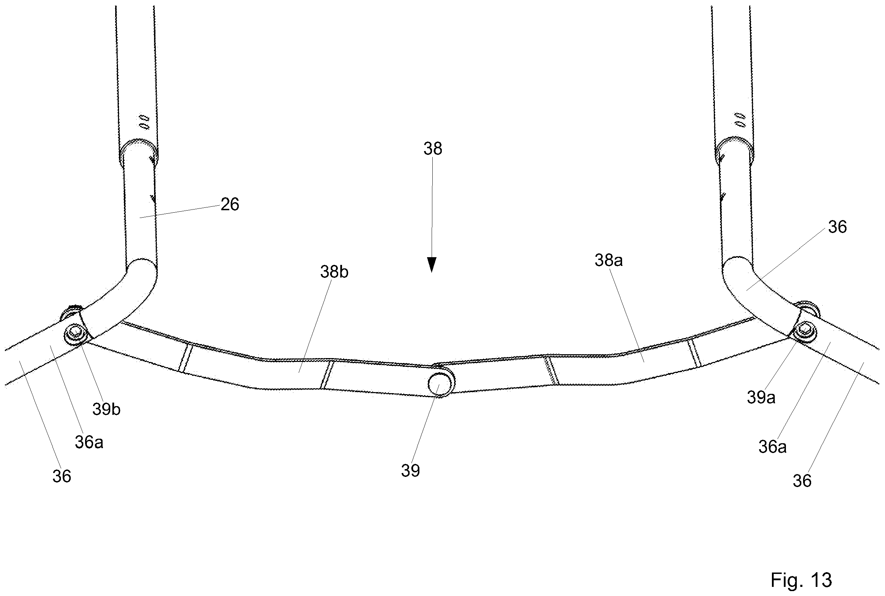

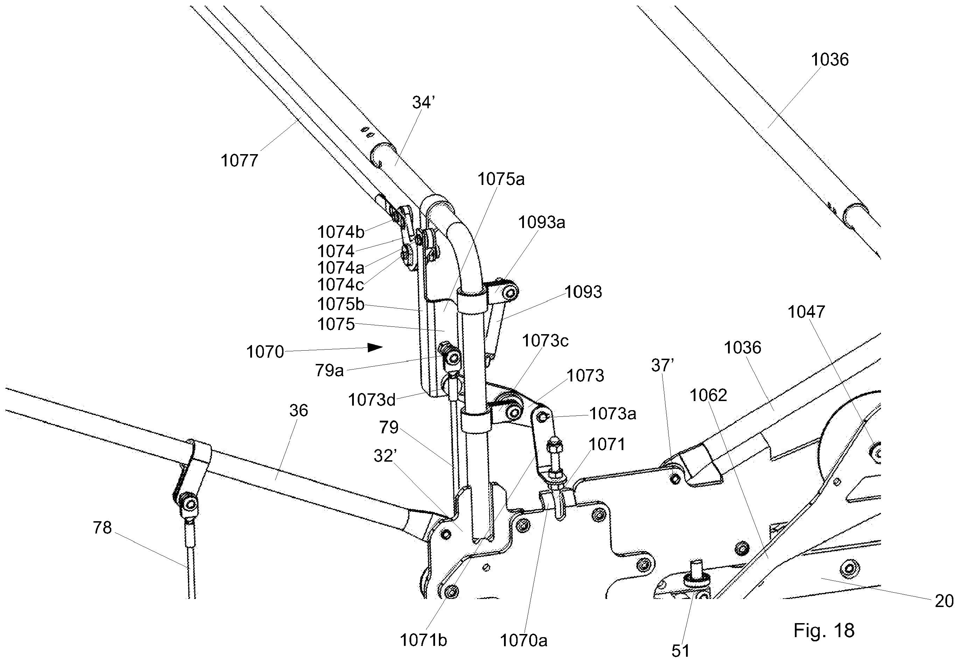

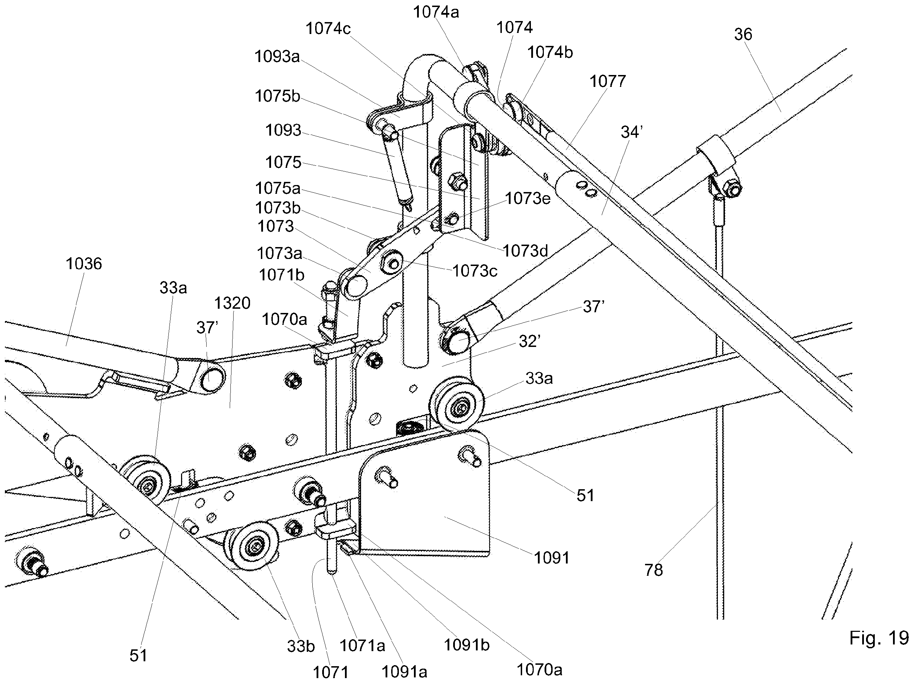

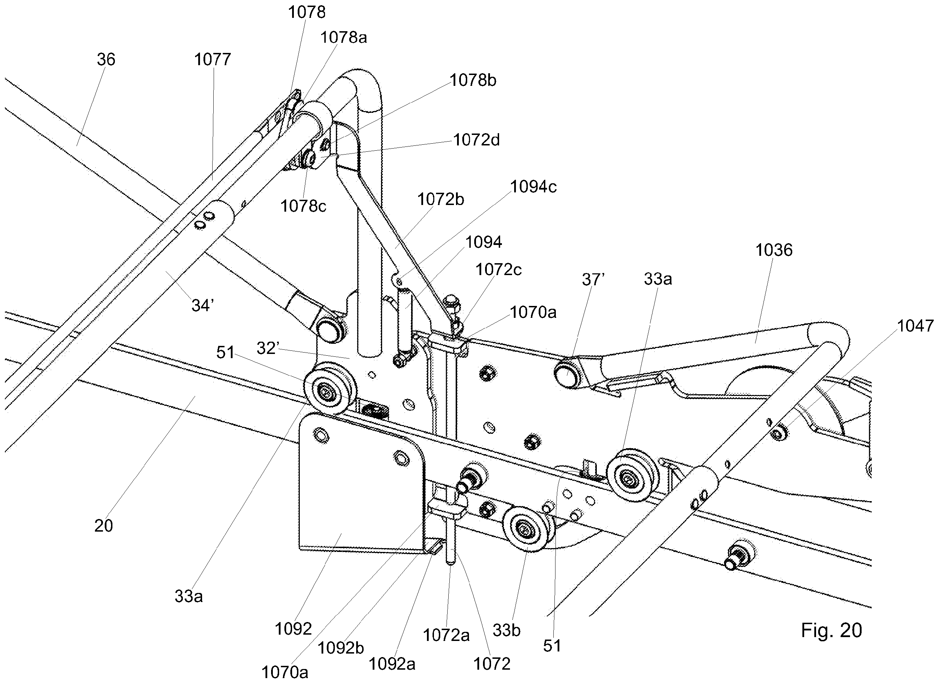

In Fig. 10 bis 20 ist ein weiteres Ausführungsbeispiel eines Verdeckgestells 1010 für einen Planenaufbau gezeigt, wobei dieselben Bezugszeichen wie bei dem vorhergehenden Ausführungsbeispiel dieselben oder strukturell vergleichbare Teile bezeichnen, und veränderte Teile, auf die in den nachstehenden Erläuterungen im Wesentlichen eingegangen wird, um 1000 inkrementiert sind.

Zunächst erkennt man in Fig. 10 und 11 sowie Fig. 13, dass eine Lenkerkinematik 38 nur zwischen den an dem Endanschlag 24 angelenkten Schwenkbügel 26 und dem hintersten Schwenkbügel 36 der Schiebeverdeckanordnung 30 vorgesehen ist. Die weiteren Bügel 36 der Schiebeverdeckanordnung 30 sind hingegen an ihren Verbindungsstücken 36b miteinander gekoppelt, wobei ein Schwenkwinkelbegrenzer 1038 ein Übereinanderschieben der Bügel 36 verhindert.

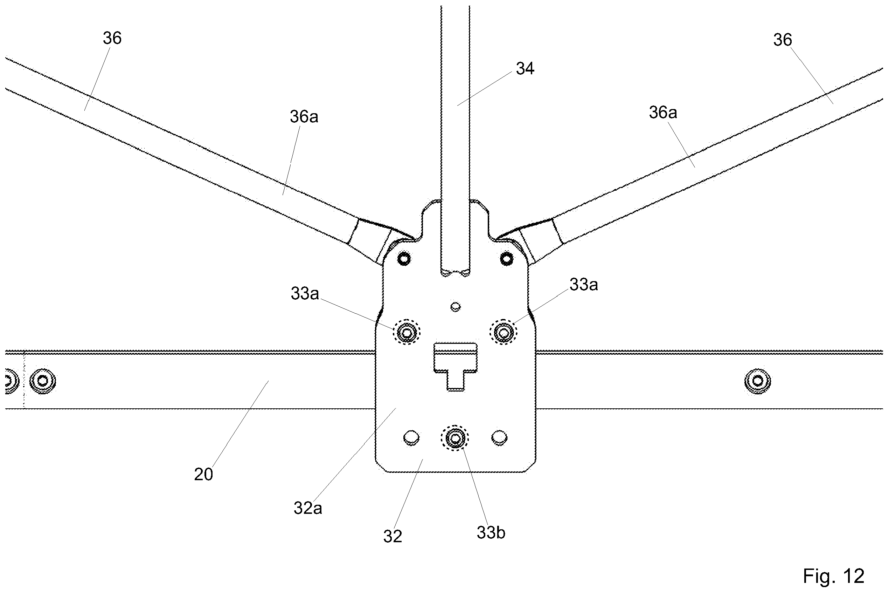

Man erkennt in Fig. 12, dass die Bügel 36 bzw. ihre Eckstücke 36a nur einseitig an der Basisplatte 32a des Schlittens 32 angeschlossen sind, der von den Tragrollen 33a und den Gegenrollen 33b entlang der Führung 20 verlagerbar angeschlossen ist. Der Holm 34 ist hierbei fest mit der Basisplatte 32a des Schlittens 32 verbunden.

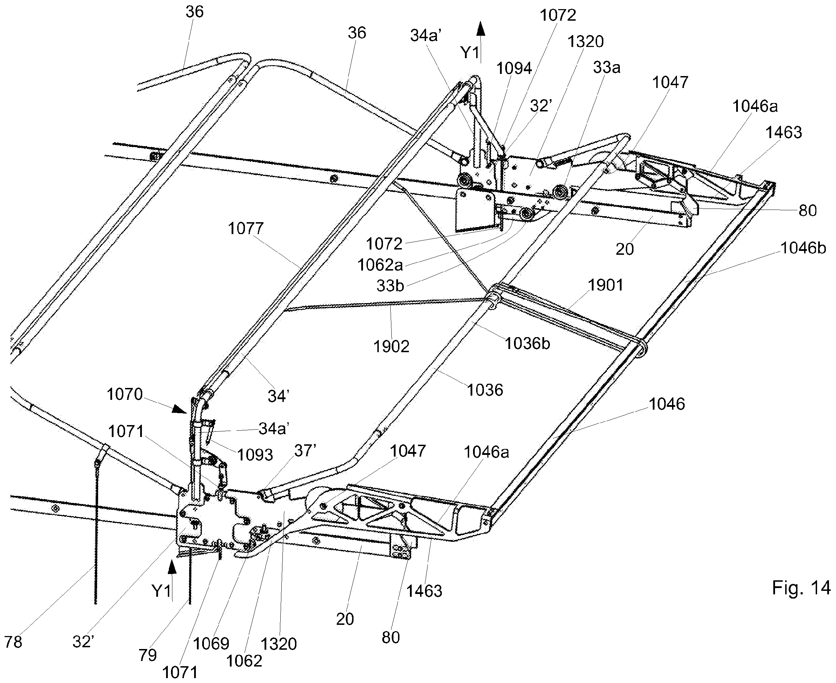

Wie in weiteren Einzelheiten in Fig. 14 bis 16 zu erkennen, ist an dem vordersten Paar Schlitten 32', die durch den vordersten Holm 34' miteinander verbunden sind, ein Rahmenabschnitt 1320 angeschlossen, der sowohl eine Tragrolle 33a als auch eine Gegenrolle 33b trägt, die beiderseits der Führung 20 angeordnet sind, wobei weiter an dem Rahmenabschnitt 1320 der vorderste Schlitten 32' ein Hilfsbügel 1036 gelenkig angeschlossen ist. Der Hilfsbügel 1036 ist hierbei so weit von dem vordersten Holm 34' beabstandet, dass er überschlagen kann, sodass er sich gegen den Bügel 34' anlehnen kann. Weiterhin ist an dem Rahmenabschnit 1320 ein Abdeckbügel 1046 gelenkig angeschlossen, der um ein Gelenk 1047 verschwenkbar ist. Der Abdeckbügel 1046 ruht in der geschlossenen Position (Fig. 14) auf dem Rahmenabschnitt 1320, und zwar mit einem als Strebe ausgeführten unteren Abschnitt 1463 seines nach Art eines Fachwerks gebildeten Schenkels 1046a. Hierbei überragt der Abdeckbügel 1046 im geschlossenen Zustand (Fig. 14) den Rahmenabschnitt 1320, wobei in etwa in der Mitte des Schenkels 1046a ein Gelenk vorgesehen ist, das einen nicht dargestellten Haken lagert, der mit dem Rahmenabschnitt 1320 eine Verbindung schafft. Durch das Verriegeln des Abdeckbügels 1046 an dem Rahmenabschnitt 1320 näher an dem Drehpunkt 1047 des Abdeckbügels 1046 kann die Führung 20 insgesamt kürzer ausgebildet werden, da dort der Haken 80 aus seiner Verriegelung geschlagen wird.

Weiterhin weist der Abdeckbügel 1046 einen von dem Schenkel 1046a abgehenden Betätigungslenker 1062 auf, der von einem an der Führungsschiene 20 angebrachten Umlenkglied derart verdrehbar ist, dass der Abdeckbügel 1046 in seiner angehobenen Stellung verlagert wird. Das Umlenkglied ist hierbei nach Art einer Abfaltung mit einer Schräge ausgeführt, die zum Anheben des Abdeckbügel 1046 einen ausreichenden Widerstand bildet, im Falle des Zurückfahrens des möglicherweise abgesenkten Abdeckbügels jedoch überfahren werden kann.

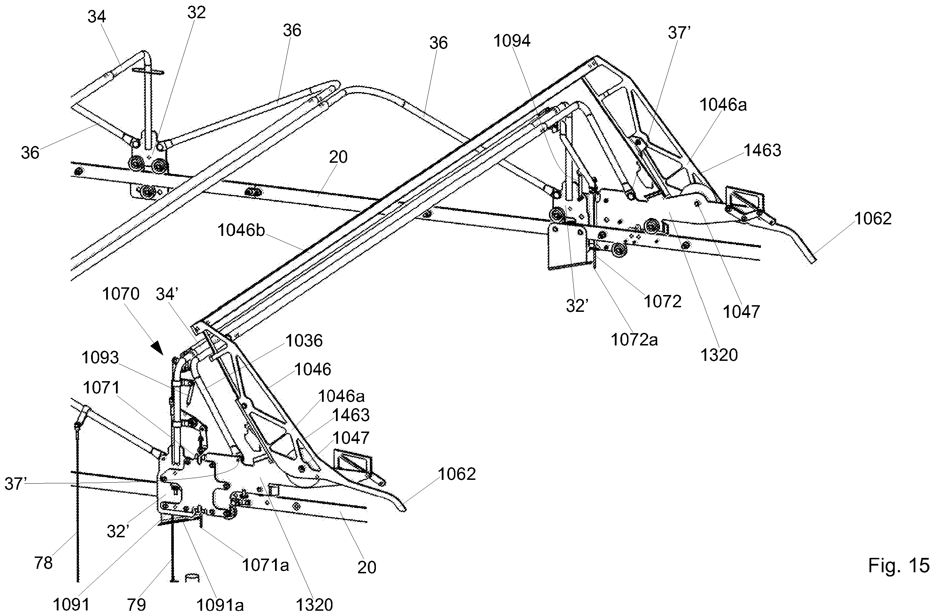

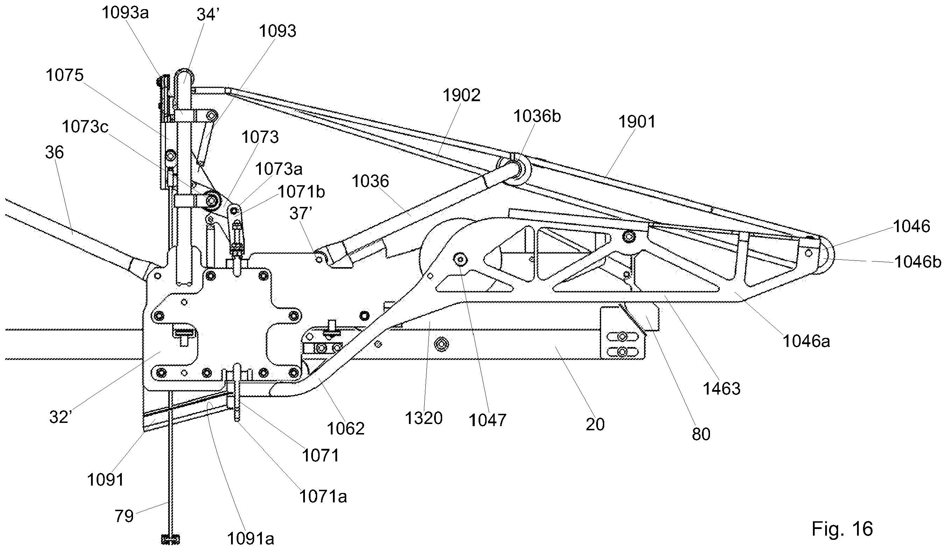

Man erkennt in Fig. 14 und 16, dass ein erstes Vorspannglied 1901 den Abdeckbügel 1046 mit dem Hilfsbügel 1036 im Bereich von deren Verbindungsstücke 1046b, 1036b miteinander verbindet. Das Vorspannglied 1901 ist hierbei als Gurt ausgeführt, der in der abgesenkten Konfiguration des Abdeckbügels 1046 wie in Fig. 14 dargestellt gespannt ist, aber bei angehobenem Abdeckbügel wie in Fig. 15 dargestellt weitgehend entspannt ist. Soweit dient das erste Vorspannglied 1901 im Wesentlichen dazu, den Abdeckbügel 1046 dann anzuheben, wenn die Verriegelung zwischen dem Abdeckbügel 1046 und dem Rahmenabschnitt 1320 gelöst ist. Hierdurch ist die in dem Betätigungslenker 1062 einzuleitende Kraft geringer, als durch die Masse und die Dimensionen des Abdeckbügels 1046 vorgegeben.

Des Weiteren ist das Verbindungsstück 1036b des Hilfsbügels 1036 durch ein zweites Vorspannglied 1902, das als elastischer Gurt ausgeführt ist, mit dem Verbindungsabschnitt des vordersten Holms 34' gekoppelt. Die beiden Enden des zweiten Vorspanngliedes 1902 sind hierbei mit dem Bügel 34' im Bereich von dessen Verbindungsstück angeschlossen, während ein mittlerer Bereich zweimal um das Verbindungsstück 1036b des Hilfsbügels 1036 gelegt ist. Hierdurch wird vorteilhaft erreicht, dass das zweite Vorspannglied 1902 selbst dann, wenn der Hilfsbügel 1036 in Anlage gegen den vordersten Holm 34' gezogen ist, nicht vollständig entspannt ist, wobei die Spannung, die auf den Hilfsbügel 1036 wirkt, über das erste Vorspannglied 1901 auch auf den Abdeckbügel 1046 übertragen wird. Durch die beschriebenen Maßnahmen wird insbesondere erreicht, dass sich der Abdeckbügel 1046 weitgehend unabhängig von seiner Öffnungsstellung auch dann, wenn die Zugbewegung auf die beweglichen Teile des Schiebeverdeckanordnung 30 erfolgt, im Wesentlichen in der angesteuerten Position verharrt, und nicht aufgrund seiner Masse zurück auf den Rahmenabschnitt 1320 fällt.

Man erkennt, dass die Länge des Betätigungslenkers 1062 in etwa zwei Drittel des Abstands des Verbindungsstücks 1046b von dem Drehpunkt 1047 ausmacht, sodass eine ausreichend günstige Übersetzung gegeben ist, die es einer Bedienperson ermöglicht, durch Ziehen an der Zugeinrichtung 78 den Abdeckbügel 1046 aufzuschwenken. Ungeachtet dessen verschwenkt der Abdeckbügel 1046 auch dann, wenn der Unterbau 14, beispielsweise eine Kippmulde, abgekippt wird, wie für das vorhergehende Ausführungsbeispiel erläutert.

Des Weiteren ist in Fig. 14 bis 20 eine gegenüber dem vorhergehenden Ausführungsbeispiel geänderte Verriegelungsanordnung 1070 zu erkennen, die ein Entriegeln der Schiebeverdeckanordnung 30 von an der Führung 20 vorgesehene Verriegelungspositionen durch Betätigen einer Zuglasche 79 ermöglicht. Ist die Verriegelungsvorrichtung 1070 von der Verriegelungsposition freigegeben, kann das Schiebeverdeckanordnung 30 durch Ziehen an der Zugeinrichtung 78 entlang der Führung 20 verlagert werden, wobei der Abdeckbügel 1046 hochgeschwenkt wird und das Riegelglied, das den Abdeckbügel 1046 an dem Rahmenabschnitt 1320 festlegt, gelöst wird. Zugleich stellt das Vorsehen der Zugeinrichtung 78 an einem der Bügel 36 sicher, dass die insbesondere zum Schwenken des Abdeckbügels 1046 benötigte Kraft nicht primär zu einem Aufstellen des Bügels 36 führt, da die Zugbewegung diesen auch nach unten zieht.

Die Verriegelungsanordnung 1070 weist ein erstes Riegelglied 1071 und ein zweites Riegelglied 1072 auf, die jeweils an verschiedenen Längsseiten des Planenaufbaus 1010 angeordnet sind und die im Bereich des vordersten Schlitten 32' jeweils in eine Entriegelungsrichtung Y1 verlagert, also angehoben werden müssen, um das Schiebeverdeck 30 zu entriegeln. Das erste Riegelglied 1071 und das zweite Riegelglied 1072 umfassen hierbei jeweils einen langen Zapfen, der in einer entsprechenden vertikalen Führung 1070a des Schlittens 32' axial verlagerbar ist, wobei ein über den Bereich der Basisplatte 32a des vordersten Schlitten 32' vorstehender Bereich des Riegelglieds 1071, 1072 jeweils nach oben und nach unten über der Basisplatte 32a vorsteht.

Das erste Riegelglied 1071 umfasst einen L-förmigen Absatz 1071b, der an dem oberen Ende des Riegelglieds 1071 vorgesehen ist, mit dem die Eindringtiefe eines distalen Fürhrungsabschnitts 71a des Riegelglieds 1071, der als dessen Spitze ausgeführt ist, im Verhältnis zu einer ersten Riegelfalle 1091 eingestellt werden kann. Im Unterschied zu dem vorhergehenden Ausführungsbeispiel ist die Riegelfalle 1091 im Wesentlichen durch ein L-förmiges Blech gebildet, das eine Einlaufschräge 1091b aufweist, die in Schließrichtung, also bei Verlagerung der Schiebeverdeckanordnung 30 von der geöffneten in die geschlossene Lage, ansteigt. Die Einlaufschräge 1091b hebt damit das Riegelglied 1071 an, bis dieses unter der Belastung einer im Weiteren noch genau zu erläuternden Federanordnung 1093 in seine Arretierungsposition 1091a abgesenkt wird. Um das Riegelglied 1071 aus der verriegelten Stellung an der Einlaufschräge 1091b vorbeizuführen, ist es erforderlich, dass das Riegelglied 1071 angehoben wird, was durch Betätigung der Zugschlaufe 79 erfolgt. In gleicher Weise sind auf der bezüglich einer Längshalbierenden des Unterbaus 14 gegenüberliegenden Längsseite das zweite Riegelglied 1072 mit einem als Spitze ausgebildeten Führungsabschnitt 1072a und einem L-förmigen Absatz 1072b sowie einer Riegelfalle 1092 mit Einlaufschräge 1092b und Arretierungsposition 1092a vorgesehen. Der Führungsabschnitt 1072b des zweiten Riegelglieds weist allerdings an seinem dem Führungsabschnitt 1072a abgekehrten Ende eine weitere Abfaltung 1072d auf, die zu der Ebene des Holms 34 parallel ist.

Das obere Ende des L-förmigen Absatzes 1071b des Riegelglied 1071 ist endseitig in einem Gelenk 1073a gelenkig an einen Kipphebel 1073 angeschlossen, der selbst wiederum gelenkig über eine Schelle 1073b und ein zentrales Gelenk 1073c an den Holm 34' angeschlossen ist. Auf der dem Riegelglied 1071 gegenüberliegenden Seite des Kipphebels 1073 ist in einem Langloch 1073d ein Zughebel 1075 mit einem Bolzen 1073e gelenkig angeschlossen, der im Wesentlichen parallel zu dem Schenkel 34a' des Holms 34'verläuft.

Der Zughebel 1075 ist L-förmig aus einem Stahlblechteil gefaltet, sodass die beiden Schenkel 1075a, 1075b einen rechten Winkel von etwa 90 Grad einschließen. An den Schenkel 1075a ist ein Zapfen 1073e vorgesehen, der den Zughebel 1075 mit dem Langloch 1073d des Kipphebels 1073 koppelt. Weiterhin ist ein Anschluss 79a der Zugschlaufe 79 an den Schenkel 1075a des Zughebels 1075 angeschlossen, sodass bei einem Ziehen an der Zugschlaufe 79 der mit dem Riegelglied 1071 verbundene Hebelarm des Kipphebels 1073 um seine zentrale Drehachse 1073c nach unten gezogen wird und hierbei das Riegelglied 1071 nach oben zieht. An dem dem Riegelglied 1071 abgekehrten Schenkel des Kipphebels 1073 greift ferner eine erste Federanordnung 1093 an, die über Schelle 1093a an den Holm 34' angeschlossen ist. Die erste Federanordnung 1093 spannt den Kipphebel 1073 derart vor, dass das Riegelglied 1071 in seine untere Position vorgespannt ist. Die Vorspannung der ersten Federanordnung 1093 ist daher beim Ziehen an der Zugschlaufe 79 zu überwinden, um das erste Riegelglied 1071 außer Eingriff mit der Riegelfalle 1091 zu bringen.

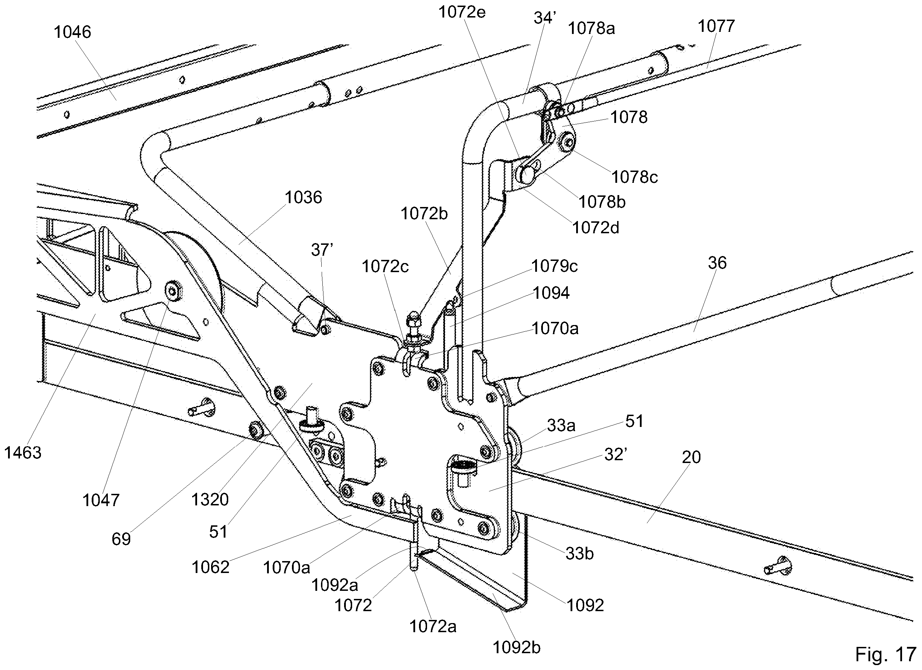

Durch die L-Form des Zughebels 1075 wird die vertikale Bewegung in der Ebene des Kipphebels 1073 in eine im Wesentlichen horizontale Bewegung in der Ebene des zweiten Schenkels 1075b des Zughebels 1075 umgesetzt. Ein freies Ende des Schenkels 1075b des Zughebels 1075 ist hierbei an einem nach Art einer Wippe ausgebildeten ersten Dreieckslenker 1074 in einem Gelenkpunkt 1074a gekoppelt, der an einem entgegengesetzten Ende in einem Gelenkpunkt 1074b mit einem als Zugstange ausgebildeten Kraftübertragungsglied 1077 gelenkig verbunden ist. In einem Gelenk 1074c ist der Dreieckslenker 1074 mit einer Basis 34b des U-förmigen Holms 34' gekoppelt, sodass bei einer Verlagerung des Zughebels 1075 nach unten die Verbindungsstange 1077 durch die Verschwenkung des Dreieckslenkers 1074 zu der Längsseite, an der die Zugschlaufe 79 vorgesehen ist, gezogen wird. Hierdurch wird die Zugkraft an der Zugschlaufe 79 auch auf die gegenüberliegende Seite, die in Fig. 17 dargestellt ist, übertragen, wie nachstehend weiter erläutert wird.

Es versteht sich, dass anstelle einer Verbindungsstange 1077 auch ein Seil oder eine Kette vorgesehen sein könnte, da es im Wesentlichen auf die Übertragung von Zugkräften ankommt, und ein zugsteifes Kraftübertragungsglied hierfür ausreichend ist. Da sich die an den vordersten Schlitten 32' bzw. dem vordersten Holm 34' angeschlossenen Teile jedoch ein Stück weit tordieren können und daher gewisse Toleranzen auftreten, ist die Verwendung einer auch drucksteifen Zugstange 1077 bevorzugt. Ferner wird hierdurch sichergestellt, dass im Falle des Ausfalls eines der beiden Federanordnungen 1091, 1092 die Vorspannung der verbleibenden Federanordnung ausreicht, um beide Seiten des Verdeckgestells 1010 zuverlässig zu verriegeln.

Das der Zugschlaufe 79 abgekehrte Ende der Verbindungsstange 1077 ist über eine Lagerstelle 1078a eines nach Art einer Wippe ausgebildeten zweiten Dreieckslenkers 1078 gekoppelt, der an dem bezüglich einer Anlenkung 1078c zur Befestigung an einer Lasche des Holms 34' gegenüberliegenden Ende ein Langloch 1078b aufweist. Der Dreieckslenker 1078 ist hierbei so positioniert, dass bei einer Bewegung der Verbindungsstange 1077 in Richtung auf die Zugschlaufe 79 der das Langloch 1078b aufweisende Schenkel des Dreieckslenkers angehoben wird.

In dem Langloch 1078b ist ein an der Abfaltung 1072d vorgesehener Bolzen 1072e aufgenommen, der die Verbindung des zweiten Riegelglieds 1072 mit dem zweiten Dreieckslenker 1078 bewirkt. Wird die Verbindungsstange 1077 in Richtung auf die Längsseite des ersten Riegelgliedes gezogen, zieht der zweite Dreieckslenker 1078 das zweite Riegelglied entgegen der Verriegelungsrichtung und der Vorspannung der zweiten Federanordnung 1094 nach oben.

Die zweite Federanordnung 1094 greift ebenfalls an dem Absatz 1072b in einem hierfür ausgebildeten Auge 1094c an, wobei das andere Ende der zweiten Federanordnung 1094 an dem Schlitten 32' aufgenommen ist. Die zweite Federanordnung 1094 bewirkt hierbei, dass das zweite Riegelglied 1072 jeweils in die vertikale Richtung nach unten gespannt ist, sodass die als Zugfeder ausgebildete zweite Federanordnung 1094 bei Betätigung der Zugschlaufe 79 ebenfalls überwunden werden muss. Durch das Vorsehen einer ersten Federanordnung 1093, die dem ersten Riegelglied 1071 zugeordnet ist, einer zweiten Federanordnung 1094, die dem zweiten Riegelglied 1072 zugeordnet ist, wird sichergestellt, dass beide Federglieder 1093, 1094 jeweils in Schließrichtung vorgespannt sind. Zwar würde hierfür eine gemeinsame Federanordnung für beide Riegelglieder ausreichen, durch das redundante Ausbilden durch Vorsehen von zwei Federanordnungen 1093, 1094 wird die Sicherheit der Verriegelung zusätzlich erhöht.

Eine weitere Maßnahme besteht darin, dass der Führungsabschnitt 1072a des zweiten Riegelglieds 1072 etwas kürzer ausgeführt bzw. höher eingestellt ist als der Führungsabschnitt 1071a des ersten Riegelglieds 1071. Hierdurch wird sichergestellt, dass, wenn das erste Riegelglied 1071 außer Eingriff mit der zugehörigen Riegelfalle 1091 gelangt, auf jeden Fall auch das zweite Riegelglied 1072 von der zweiten Riegelfalle 1092 freigekommen ist, da es zuerst freikommt. Hierdurch wird verhindert, dass die Schiebeverdeckanordnung 30 bereits in Öffnungsrichtung gezogen wird, wenn das zweite Riegelglied 1072 noch in Eingriff mit der zweiten Riegelfalle 1092 steht.

Man erkennt, dass die Riegelglieder 1071, 1072 in ihrer Eingriffstiefe jeweils einstellbar sind, sodass durch Spiel, Toleranzen und Deformationen des Verdeckgestells auftretende Gleichlaufstörungen beim Entriegeln der Riegelglieder 1071, 1072 ausgeglichen werden können. Die Einstellung erfolgt durch Einstellen der die Spitzen 1071a, 1072a aufweisenden Bolzen an dem zugehörigen L-förmigen Absatz 1071b, 1072b, wobei der Bolzen hierzu mit einem Außengewinde versehen sein kann, um mittels Schrauben in seiner Höhe an dem jeweiligen Absatz 1071b, 1072b fixiert zu werden. Der Absatz 1071b, 1072b und der Bolzen sowie die weiteren Verbindungsmittel bilden dann das Riegelglied 1071, 1072, wobei der Absatz auch anders geformt sein kann als in dem vorliegenden Beispiel gezeigt.

Man erkennt ferner, dass in dem Schlitten 32' jeweils eine Führung 1070a für jeweils eines der Riegelglieder 1071, 1072 vorgesehen ist, die es ermöglicht, dass die Riegelglieder 1071, 1072 jeweils vertikal verlagert werden, und auch der Riegelfalle 1091, 1092 nicht ausweichen können.

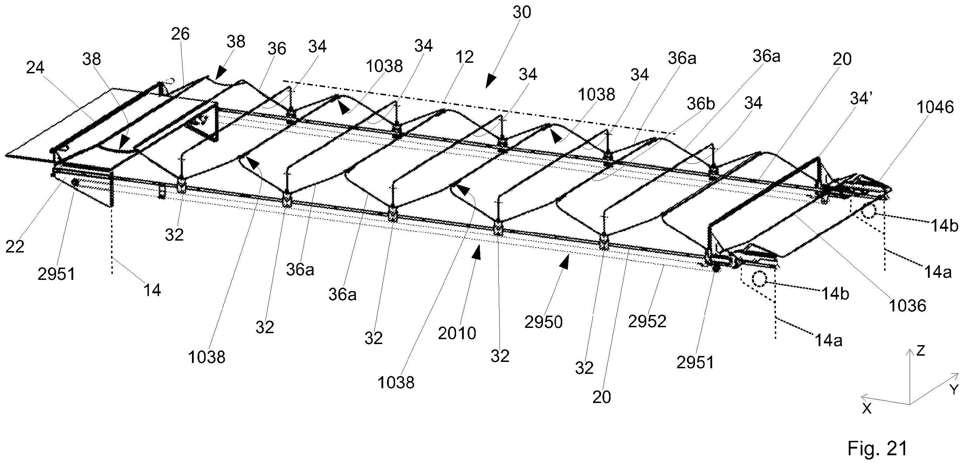

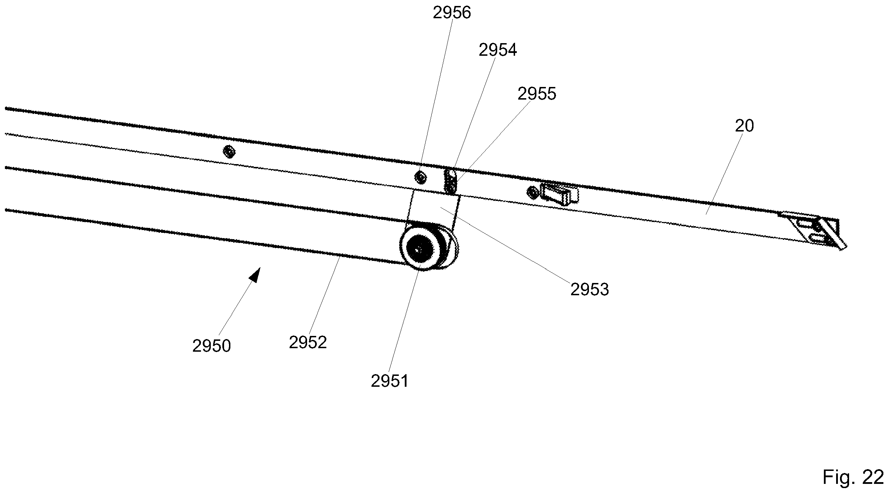

Fig. 21 und 22 zeigen ein weiteres Ausführungsbeispiel eines Verdeckgestells 2010 für einen Planenaufbau, das grundsätzlich so aufgebaut ist wie das vorhergehende Ausführungsbeispiel, sodass die Unterschiede gegenüber dem vorhergehenden Ausführungsbeispiel des Verdeckgestells 1010 um weitere 1000 inkrementiert sind.

Das Verdeckgestell 2010 zeichnet sich durch eine endlose Antriebseinrichtung 2950 aus, die an jeder der beiden Längsseiten unterhalb der Führung 20 vorgesehen ist und die mit jeweils einem der beiden Schlitten 32' eines vordersten Schlittenpaars gekoppelt ist. Die Antriebseinrichtung ist hierbei als Zahnriemen 2952 ausgebildet, der um zwei gezahnte Rollen 2951 gelegt ist. Hierdurch erlässt sich besonders zuverlässig und schlupffrei ein Antrieb auf beiden Längsseiten des Planenaufbaus 2010 erreichen.

Man erkennt in Fig. 22, dass die als Zahnriemen 2952 ausgebildete Antriebseinrichtung 2950 um zwei an entgegengesetzten Enden der Längsseite des Unterbaus 14 angeschlossene gezahnte Rollen 2951 umgelegt ist, wobei die im Bereich des vordersten Schlittens 32' bei geschlossenem Planenaufbau vorgesehene Rolle 2951 an einem Beschlag 2953 vorgesehen ist, der eine Einstellung ermöglicht. Hierzu ist der Beschlag 2953 über eine Verbindung mit der Führung 20 gekoppelt, die eine Schwenkbewegung zulässt, wobei in dem Beschlag 2953 ein Langloch 2954 vorgesehen ist, das bezüglich einem Zapfen 2955 eine Einstellung ermöglicht. Entsprechend kann der Zahnriemen 2952 gespannt oder entspannt werden.

Die beiden Zahnriemen 2952 ermöglichen eine präzise Verlagerung des vordersten Schlitten, sodass eine gemeinsame Antriebswelle für beide Zahnriemen 2952 vorgesehen ist. Die Zahnriemen weisen praktisch keinen Schlupf auf und verrutschen nicht, sodass auch bei mehrfachen Öffnungs- und Schließbewegungen kein Verkanten der geschleppten vordersten Schlitten 32' beider Längsseiten eintritt.

Es versteht sich, dass eine Verriegelung 70, 1070 durch die exakte Positionierung des Riemenantriebs 2950 nicht mehr erforderlich ist, da der Riemenantrieb 2950 dann den vordersten Schlitten 32' des vordersten Schlittenpaares in Position hält, und das auch dann, wenn das vorderste Schlittenpaar in seiner vollständig geschlossenen Position ist.

Ferner ist zu bemerken, dass die Aufschwenkbewegung des Abdeckbügels 1046 sowie das Lösen des Riegels 80 durch die axiale Verlagerung der Schiebeverdeckanordnung 30 entlang der Führung 20 erfolgt, sodass die Antriebsvorrichtung 2950 nicht mit den schwenkenden Teilen direkt verbunden ist.

Im Übrigen können die Merkmale der vorstehenden Ausführungsbeispiele ohne weiteres miteinander kombiniert werden.

Die Erfindung ist vorstehend anhand eines Ausführungsbeispiels erläutert worden, bei dem der Planenaufbau 10 einen Container 14 überdeckt. Es versteht sich, dass der Planenaufbau 10 auch zum Überdecken von anderen fahrbaren oder transportablen oder ortsfesten, im Wesentlichen quaderförmigen oder zumindest eine rechteckige Öffnung aufweisenden Unterbauten genutzt werden kann, beispielsweise für das Dach eines Lastkraftwagens, eines Lastkraftwagenanhängers, eines Busses, einer Kippmulde oder eines Sattelaufliegers, für das Dach eines Bahnwaggons, für ein stehendes Gebäude wie ein Carport oder ein Schwimmbad. Auch seitliche Öffnungen lassen sich abdecken, wobei dann die beschriebene Anordnung entsprechend um 90° auf der Seite liegend - ggfs. mit kleinen Modifikationen - eingesetzt wird.

Die Erfindung ist vorstehend anhand eines Ausführungsbeispiels erläutert worden, bei dem die Holme 34 abgewinkelte Eckstücke 34a enthalten. Es versteht sich, dass die Holme 34 auch nur aus einem langgestreckten Verbindungsstück wie dem Verbindungsstück 34b bestehen können, wobei die Flexibilität zum Toleranzausgleich in Y-Richtung beispielsweise durch einen teleskopierbaren Abschnitt gegeben sein kann.

Die Erfindung ist vorstehend anhand eines Ausführungsbeispiels erläutert worden, bei dem im geschlossenen Zustand des Planenaufbaus 10 die Oberkanten der Holme 34 und die Oberkanten der Schwenkbügel 36 auf derselben Höhe angeordnet sind, wodurch ein großer Abstand zwischen benachbarten Holmen 34 möglich ist, da die Plane 12 sowohl an den Schwenkbügeln 36 als auch den Holmen 34 angeschlossen ist. Hierdurch wird insbesondere auch erreicht, dass der Planenaufbau den Container 14 in Z-Richtung, also in der Vertikalen, um einen bestimmten Mindestabstand zumindest im geschlossenen Zustand überbaut, sodass geringfügig über die Füllhöhe des Containers 14 herausragenden Teile die Funktionalität des Planenaufbaus 10, insbesondere das Öffnen und Schließen, nicht blockieren. Es versteht sich, dass es auch möglich ist, die Höhe der Holme 34 und der Schwenkbügel 36 bei geschlossenem Planenaufbau unterschiedlich hoch anzuordnen.

Die Erfindung ist vorstehend anhand eines Ausführungsbeispiels erläutert worden, bei dem die Länge der zwischen zwei Holmen 34, 34' miteinander durch je zwei Lenkergetriebe 38 verbundenen Schwenkbügel 26, 36 untereinander gleich ist. Es versteht sich, dass die Länge der Schwenkkbügel 36 auch verschieden bemessen sein kann, wodurch deren Masse beeinflusst wird und die Reihenfolge, in der die Plane 12 angehoben wird, ebenfalls vorteilhaft beeinflusst werden kann.

Die Erfindung ist vorstehend anhand eines Ausführungsbeispiels erläutert worden, bei dem der Toleranzausgleich über die Breite in Y-Richtung durch nachgiebige gebogene, als Rohrabschnitte verwirklichte Holme 34 bzw. Bügel 36 bewerkstelligt wurde. Es versteht sich, dass die Holme und Schwenkbügel auch mit anderen Querschnitten ausgebildet sein können.

Die Erfindung ist vorstehend anhand eines Ausführungsbeispiels erläutert worden, bei dem die Holme 34 und die Schwenkbügel 36 sowie der Abdeckbügel 46 U-förmig mit abgerundeten Ecken geformt sind, wobei die Schenkel der Holme und Bügel jeweils im Wesentlichen senkrecht zu den Basen der Holme 34 und Bügel 36, 46 angeordnet sind. Hierdurch wird vorteilhaft erreicht, dass die von den Schlitten 32, 32' abgehenden Teile der Holme 34 und Bügel 36, 46, also deren Schenkel, im Wesentlichen noch außerhalb der Beladeöffnung des Containers 14 angeordnet sind. Es versteht sich, dass es möglich ist, die Winkel zwischen Basis und Schenkel der Holme und Bügel auch mit einem kleineren oder größeren Winkel vorzusehen, sodass die Holme und Bügel dann im Wesentlichen trapezförmig erscheinen.

Die Erfindung ist vorstehend anhand eines Ausführungsbeispiels erläutert worden, bei dem die Länge der Schenkel der Schwenkbügel 36 für alle Schwenkbügelpaare gleich ist. Es versteht sich, dass sich die Länge der Schenkel auch verschieden lang einstellen lässt, beispielsweise zwei verschiedene Längen einer Paarung oder verschiedene Längen verschiedener Paarungen, wodurch sich das Aufstellverhalten der Planenfalthilfen steuern lässt.

Die Erfindung ist vorstehend anhand eines Ausführungsbeispiels erläutert worden, bei dem die Führungsschiene 20 aus mehreren

Führungsschienenabschnitten, die jeweils einzeln an der Außenseite des Containers 14 angeschraubt sind, besteht. Es versteht sich, dass auch eine durchgehende Führungsschiene eingesetzt werden kann.

Die Erfindung ist vorstehend anhand eines Ausführungsbeispiels erläutert worden, bei dem die Führungsschienen 20 im Wesentlichen geradlinig verlaufen. Es versteht sich, dass die Führungsschienen auch eine gekrümmte Bahnkurve vollziehen können, und zwar sowohl in Richtung auf die Längshalbierende des Planenaufbaus als auch in vertikaler Richtung gekrümmt sowie Kombinationen hieraus.

Die Erfindung ist vorstehend anhand eines Ausführungsbeispiels erläutert worden, bei dem die Lenkerkinematik 38 zwischen sämtlichen Paaren einander zugekehrter Bügel 26, 36 vorgesehen ist. Es versteht sich, dass auch nur ein Paar einander zugekehrter Bügel 26, 36 mit mindestens einer und vorzugsweise zwei Lenkerkinematiken miteinander gekoppelt sein kann. Ferner ist es möglich, dass mehr als zwei Lenkerkinematiken die benachbarten Bügel miteinander koppeln können. Des Weiteren ist es möglich, dass die Lenkerkinematiken nicht im Bereich der seitlichen vertikalen Ebene der Bügel angeschlossen sind, sondern im Bereich einer horizontalen Ebene.

Die Erfindung ist vorstehend anhand eines Ausführungsbeispiels erläutert worden, bei dem die Lenkerkinematik 38 aus einem ersten Lenker 38a und zweiten Lenker 38b besteht, die miteinander verbunden sind. Es versteht sich, dass die Lenkerkinematik auch weitere Lenker enthalten kann, und dass neben den Lenkern auch weitere Teile im Bereich der Gelenke oder der Lenker vorgesehen sein können, die das Schwenkverhalten der Lenkerkinematik beeinflussen oder begünstigen.

Die Erfindung ist vorstehend anhand eines Ausführungsbeispiels erläutert worden, bei dem die Lenkerkinematik zwei Lenker aufweist, die im Bereich der gemeinsamen Verbindung, wenn sie nach unten abtaucht, ihren untersten Punkt aufweisen. Es versteht sich, dass es ebenfalls möglich ist, dass die beiden Lenker jeweils mit jedem der beiden Bügel verbunden sein können, und dort in einer Kulissenbahn geführt sein können, um ein Annähern der einander zugekehrten Bügel zu ermöglichen.

Die Erfindung ist vorstehend anhand eines Ausführungsbeispiels erläutert worden, bei dem der Abdeckbügel 46 zwischen einem herabgeschwenkten Zustand, in dem er auf einem Auflager 323 eines Rahmenabschnitts 320 aufliegt, und einem heraufgeschwenkten Zustand, in dem er auf einem weiteren Abschnitt 320a des Rahmenabschnitts 320 aufliegt, verschwenkbar ist. Es versteht sich, dass es möglich ist, noch weitere stabile oder metastabile Positionen für den Abdeckbügel 46 vorzusehen, und dass das Auflager zumindest einer der Zustände des Abdeckbügels 46 auch an einem anderen Teil des vordersten Schlittens vorgesehen sein kann. Es ist ferner möglich, dass sich der Abdeckbügel 46 in seinem heraufgeschwenkten Zustand auch gegen den vordersten Holm oder den Hilfsbügel abstützt.

Die Erfindung ist vorstehend anhand eines Ausführungsbeispiels erläutert worden, bei dem der Hilfsbügel 36' nahe an dem vordersten Holm 34' gelenkig angeschlossen ist. Es versteht sich, dass der Hilfsbügel auch beabstandet zu dem vordersten Holm 34' gelenkig an dem vordersten Schlitten 32' angeschlossen sein kann, beispielsweise in etwa mittig zwischen der Anlenkung 47 des Abdeckbügels 46 und dem vordersten Holm 34'.

Die Erfindung ist vorstehend anhand eines Ausführungsbeispiels erläutert worden, bei dem die Plane 12 nebeneinander angeordnete Holme, Bügel und Abdeckbügel miteinander verbindet. Es versteht sich, dass darüber hinaus elastische Gurte, Federn und andere Spannmittel die Teile miteinander verbinden können, um eine Spannung in das Verdeckgestell einzuleiten. So kann beispielsweise vorgesehen sein, dass die Bügel 36 durch geeignete Federmittel in Richtung auf den zugehörigen Holm vorgespannt sind, so dass diese sich weitgehend selbstständig zusammenfalten, wenn die Verriegelungsanordnung 70 gelöst wird. Auch in umgekehrter Richtung kann eine Vorspannung vorgesehen sein, so dass sich die beweglichen Teile des Verdeckgestells nach Entriegelung der hinteren Riegelanordnung selbsttätig entfalten.

Die Erfindung ist vorstehend anhand eines Ausführungsbeispiels erläutert worden, bei dem der Abdeckbügel 46 einen Fortsatz 465 aufweist, der von dem Zwischenlenker 63 betätigt wird. Es versteht sich, dass der Zwischenlenker 63 auch unmittelbar an dem Schenkel 46a des Abdeckbügels angeschlossen sein kann oder dass der Fortsatz 465 selbst als Betätigungslenker ausgebildet ist, der mit dem Umlenkglied 69 zusammen wirkt.

Die Erfindung ist vorstehend anhand eines Ausführungsbeispiels erläutert worden, bei dem der Abdeckbügel 46 mit dem vordersten Schlitten 32' über einen verschwenkbaren Haken 80 verriegelbar ist, wobei der Haken 80 an dem Abdeckbügel 46 schwenkbar angeschlossen ist. Es versteht sich, dass der Haken auch dem vordersten Schlitten angeschlossen sein kann, oder dass auch an beiden Teilen jeweils ein Haken angeschlossen sein kann, die wechselseitig mit einem Gegenlager zusammengreifen.

Die Erfindung ist vorstehend anhand eines Ausführungsbeispiels erläutert worden, bei dem die Verriegelungsanordnung 70 in dem vordersten Holm 34' vorgesehen ist. Es versteht sich, dass die Verriegelungsanordnung auch an einem der anderen Holme vorgesehen sein kann, beispielsweise wenn das Verdeckgestell von beiden Seiten geöffnet werden kann.

Die Erfindung ist vorstehend anhand eines Ausführungsbeispiels erläutert worden, bei dem die Riegelglieder 71, 72 in gegensinnige Entriegelungsrichtungen Y1, Y2 verlagerbar sind. Es versteht sich, dass durch kinematische Umkehr die Entriegelungsrichtungen auch gleichsinnig orientiert sein können.

Die Erfindung ist vorstehend anhand eines Ausführungsbeispiels erläutert worden, bei dem die Lenker 38a, 38b der Lenkerkinematik 38 recht langgestreckt sind und einen Winkel von ca. 40° einschließen. Es versteht sich, dass dieser Winkel zur Anpassung des Verdeckgestells 16 an einen Unterbau 14 variierbar ist, ohne dass der Winkel der Bügel 36 geändert werden muss. Dadurch ist der Planenaufbau sehr flexibel anpassbar an verschiedene Längen von Unterbauten, indem der Winkel zwischen den Lenkern 38a, 38b bei weiter zumindest annähernd oder sogar vollständig äquidistanter Anordnung zumindest der Schlitten 32 variiert wird, so dass eine homogene Dacheinteilung erzielt wird. Es ist aber auch möglich, die Winkel zwischen den Lenkern 38a, 38b der Lenkerkinematik innerhalb eines Planenaufbaus 10 unterschiedlich auszuwählen.

## Patentansprüche

1. Planenaufbau für einen Unterbau, wie einen Lastkraftwagen, Anhänger, Auflieger, Bahnwaggon, Muldenkipper oder Container, umfassend
ein Verdeckgestell (16), und
eine Plane (12) aus wetterbeständigem Material,
wobei das Verdeckgestell (16) eine Mehrzahl von Holmen (34) aufweist, die endseitig jeweils einen Schlitten (32) aufweisen, der entlang einer Führung (20) verlagerbar ist,
wobei zumindest ein Bügel (36) schwenkbar wahlweise an einem Paar gegenüberliegender Schlitten (32; 32') des Holmes oder an dem Holm (34) angeschlossen ist,
wobei der Bügel (36) mit einem Bügel (26; 36) eines benachbarten Holmes (34) oder Paars gegenüberliegender Schlitten (32; 32') oder eines feststehenden Teils (24) des Verdeckgestells (16) eine Planenfalthilfe bildet,
wobei an dem vordersten Schlittenpaar (32') ein Abdeckbügel (46; 1046) schwenkbar angeschlossen ist,
**dadurch gekennzeichnet,**
**dass** an dem vordersten Schlitten (32') zwischen dem Abdeckbügel (46; 1046) und dem an dem vordersten Schlitten (32') angeschlossenen Holm (34') ein Hilfsbügel (36'; 1036) gelenkig angeschlossen ist, und
**dass** zwischen einer Anlenkung (37') des Hilfsbügels (36'; 1036) und dem Holm (34') ein solcher Abstand vorgesehen ist, dass der Hilfsbügel (36'; 1036) bei zumindest teilweise geöffnetem Verdeckgestell (16) in eine überschlagene Position zu dem Holm (34') des vordersten Schlittenpaares (32') hin überführbar ist.

2. Planenaufbau nach Anspruch 1, **dadurch gekennzeichnet, dass** der Abdeckbügel (46) einen Fortsatz (62; 465) aufweist, der gemeinsam mit dem Abdeckbügel (46) um dessen Anlenkung (47) verschwenkbar ist.

3. Planenaufbau nach Anspruch 1 oder 2, **dadurch gekennzeichnet, dass** der Abdeckbügel (46) beiderseits jeweils einen Fortsatz (62; 465) aufweist, der gemeinsam mit dem Abdeckbügel (46) um dessen Anlenkung (47) verschwenkbar ist und der zum Verschwenken des Abdeckbügels (46) in eine seiner Endpositionen verschwenkbar ist, und dass der Fortsatz (62; 465) auf der einen Seite des Verdeckgestells (16) zum Aufschwenken des Abdeckbügels (46) steuerbar ist, und dass Fortsatz (62; 465) auf der anderen Seite des Verdeckgestells (16) zum Herabschwenken des Abdeckbügels (46) steuerbar ist.

4. Planenaufbau nach Anspruch 2 oder 3, **dadurch gekennzeichnet, dass** der Fortsatz (62; 465) einen gebogenen Endabschnitt aufweist, der mit einem Umlenkglied (69) die Verschwenkung des Abdeckbügels (46; 1046) bewirkt.

5. Planenaufbau nach einem der vorhergehenden Ansprüche, **dadurch gekennzeichnet, dass** der Abdeckbügel (46; 1046) derart von zumindest einem Vorspannglied (1901, 1902) in Öffnungsrichtung belastet ist, dass in nahezu jeder Stellung des Abdeckbügels (46; 1046) das zumindest eine Vorspannglied (1901, 1902) die Masse des Abdeckbügels (46; 1046) zumindest weitgehend ausgleicht.

6. Planenaufbau nach Anspruch 5, **dadurch gekennzeichnet, dass** das Vorspannglied (1901) zwischen dem Hilfsbügel (36'; 1036) und dem Abdeckbügel angeordnet ist, und dass das Vorspannglied (1901; 1902) ausgewählt ist aus der Gruppe umfassend eine Zugfeder, ein Zugband, ein elastischer Gurt, eine elastische Bahn oder Plane oder Kombinationen hieraus.

7. Planenaufbau nach einem der vorhergehenden Ansprüche, **dadurch gekennzeichnet, dass** der Abdeckbügel (46; 1046) mit dem vordersten Schlitten (32') über einen verschwenkbaren Haken (80) verriegelbar ist.

8. Planenaufbau nach Anspruch 7, **dadurch gekennzeichnet, dass** der Haken (80) mit einem Rahmenabschnitt (320), der oberhalb der Führung (20) in einer horizontalen Ebene an dem vordersten Schlitten (32') angeordnet ist, verriegelbar ist, dass der Haken (80) durch Verschwenken des Planenaufbaus (10) und/oder des Unterbaus (14) in eine entriegelte Lage verschwenkbar ist, und dass der Haken (80) seinen Schwerpunkt unterhalb seiner Anlenkung (81) an dem Abdeckbügel (46) oder an dem vordersten Schlitten (32') aufweist.

9. Planenaufbau nach Anspruch 7, **dadurch gekennzeichnet, dass** der Haken (80) an dem einen (46) von Abdeckbügel (46) und vorderstem Schlitten (32') über zumindest ein Gelenk (81) schwenkbar angeschlossen ist, dass an dem anderen (32') von Abdeckbügel (46) und vorderstem Schlitten (32') ein Gegenlager (85), insbesondere ein Bolzenabschnitt, angeordnet ist, dass durch den Haken (80) und das Gegenlager (85) der herabgeschwenkte Abdeckbügel (46) und der vorderste Schlitten (32') gegenseitig verriegelbar sind, dass der Haken (80) mehrere Rastvorsprünge (82) aufweist, und dass jeder der Rastvorsprünge (82) des Hakens (80) mit dem Gegenlager (85) eine Verriegelung erlaubt.

10. Planenaufbau nach einem der vorhergehenden Ansprüche, **dadurch gekennzeichnet, dass** einer (34') der Holme (34) eine durch einseitige Betätigung entriegelbare Verriegelungsanordnung (70; 1070) aufweist, dass die Verriegelungsanordnung (70; 1070) ein erstes Riegelglied (71; 1071) und ein zweites Riegelglied (72; 1072) aufweist, die an verschiedenen Längsseiten des Planenaufbaus (10; 1010) angeordnet sind, dass das erste Riegelglied (71; 1071) und das zweite Riegelglied (72; 1072) zum Entriegeln zugleich axial verlagerbar sind, und dass das erste Riegelglied (71; 1071) und das zweite Riegelglied (72; 1072) gemeinsam durch Ziehen an dem ersten Riegelglied (71; 1071) von außerhalb des Verdeckgestells (16) entriegelbar sind.

11. Planenaufbau nach Anspruch 10, **dadurch gekennzeichnet, dass** das Riegelglied (71; 72; 1071; 1072) jeweils einen Führungsabschnitt (71a; 72a; 1071a; 1072a) aufweist, der in einem ersten Höhenniveau in einer Riegelfalle (91; 92; 1091; 1092) arretierbar ist und durch vertikale Verlagerung von der Riegelfalle (91; 92; 1091; 1092) freigebbar ist, dass die Riegelfalle (91; 92; 1091; 1092) das Riegelglied (71; 72; 1071; 1072) so einfasst, dass es die beweglichen Teile des Verdeckgestells (16) an einer Verlagerung entlang der Führung (20) und/oder des Unterbaus (14) hindert, dass die Riegelfalle (91; 92; 1091; 1092) eine Arretierungsposition (91a; 92a; 1091a; 1092a) und einerseits oder beiderseits der Arretierungsposition (91a; 92a; 1091a; 1092a) eine Einlaufschräge (91b; 92b; 1091b; 1092b) aufweist, und dass die Einlaufschräge (91b; 92b; 1091b; 1092b) mit dem Führungsabschnitt (71a; 72a; 1071a; 1072a) zusammenwirkt, um das Riegelglied (71; 72; 1071; 1072) beim Schließen des Planenaufbaus (10; 1010) in die Arretierungsposition (91a; 92a) zu verlagern.

12. Planenaufbau nach einem der vorhergehenden Ansprüche, **dadurch gekennzeichnet, dass** eine endlose Antriebseinrichtung (2950) vorgesehen ist, die mit einem der beiden Schlitten (32') eines vordersten Schlittenpaars (32') gekoppelt ist.

13. Planenaufbau nach einem der vorhergehenden Ansprüche, **dadurch gekennzeichnet, dass** der vorderste Schlitten (32') einen Rahmenabschnitt (320; 1320) aufweist, der oberhalb der Führung (20) in einer horizontalen Ebene angeordnet ist, dass der Rahmenabschnitt (320; 1320) ein Auflager (323) für den Abdeckbügel (46; 1046) bildet, und dass der Abdeckbügel (46) einen außerhalb seiner Anlenkung (47) an dem Schlitten (32') angeordneten Stützbereich (463) und einen Schenkelabschnitt (460) aufweist, der jeweils in einer Endposition auf dem Rahmenabschnitt (320) zum Aufliegen kommt.

14. Planenaufbau nach einem der vorhergehenden Ansprüche, **dadurch gekennzeichnet, dass** die beiden benachbarten Bügel (26; 36) voneinander beabstandet angeordnet sind, dass die benachbarten Bügel (26, 36) über eine Lenkerkinematik (38) miteinander gekoppelt sind, die beim Zusammenfahren des Verdeckgestells (16) zusammenklappbar ist, dass die Lenkerkinematik (38) einen ersten Lenker (38a) und einen zweiten Lenker (38b) umfasst, die jeweils an einem der beiden Bügel (26; 36) gelenkig angeschlossen sind, und dass der erste Lenker (38a) und der zweite Lenker (38b) über ein Gelenk (39) miteinander verbunden sind.

15. Behälter, insbesondere Transportbehälter, ausgewählt aus der Gruppe umfassend Container, Bahnwaggon, Sattelauflieger, Anhänger, Lastkraftwagen, Muldenkipper oder insbesondere Aufbewahrungsbehälter, ausgewählt aus der Gruppe Schwimmbad, Carport, Gebäude, der einen zumindest annähernd quaderförmigen Raum umgibt, **gekennzeichnet durch** einen Planenaufbau nach einem der vorhergehenden Ansprüche.

## Claims

1. A tarpaulin structure for an understructure, such as a truck, a trailer, a semi-trailer, railway car, dump truck or container, comprising
a folding top-frame (16), and
a tarpaulin (12) made of weather-resistant material,
wherein the folding-top frame (16) has a plurality of struts (34) which have, on the ends, in each case a carriage (32) which is displaceable along a guide (20),
wherein at least one bow (36) is pivotally connected to either a pair of opposite carriages (32; 32') of the strut or to the strut (34),
wherein the bow (36) forms a tarpaulin folding aid along with a bow (26; 36) of an adjacent strut (34) or of a pair of opposite carriages (32; 32') or of a stationary part (24) of the folding-top frame (16),
wherein a covering bow (46; 1046) is pivotally connected on the frontmost pair of carriages (32'),
**characterized in**
**that** an auxiliary bow (36'; 1036) is articulated on the frontmost carriage (32') between the covering bow (46; 1046) and the strut (34') connected to the frontmost carriage (32'), and
**that** a distance is provided between an articulation (37') of the auxiliary bow (36'; 1036) and the strut (34'), such that, when the folding-top frame (16) is at least partially opened, the auxiliary bow (36'; 1036) can be transferred to an overturned position toward the strut (34') of the frontmost pair of carriages (32').

2. The tarpaulin structure according to claim 1, **characterized in that** the covering bow (46) has an extension (62; 465) which can be pivoted together with the covering bow (46) around its articulation (47).

3. The tarpaulin structure according to claim 1 or 2, **characterized in that** the covering bow (46) comprises an extension (62; 465) respectively on both sides, which together with the covering bow (46) can be pivoted around its articulation (47) and which can be pivoted into one of its end positions, and that the extension (62; 465) is controllable on one side of the folding-top frame (16) for upward pivoting the covering bow (46), and that the extension (62; 465) is controllable on the other side of the folding-top frame (16) for pivoting the covering bow (46) downward.

4. The tarpaulin structure according to claim 2 or 3, **characterized in that** the extension (62; 465) includes a bent end section which, together with a deflection element (69), effects the pivoting movement of the covering bow (46; 1046).

5. The tarpaulin structure according to one of the preceding claims, **characterized in that** the covering bow (46; 1046) is loaded by at least one pretensioning member (1901, 1902) in opening direction in such a manner that in nearly every position of the covering bow (46; 1046), the at least one pretensioning member (1901, 1902) at least largely compensates for the weight of the covering bow (46; 1046).

6. The tarpaulin structure according to claim 5, **characterized in that** the pretensioning member (1901) is arranged between the auxiliary bow (36'; 1036) and the covering bow, and that the pretensioning member (1901) is selected from the group comprising a tension spring, a pulling strap, an elastic belt, an elastic web or tarpaulin or combination thereof.

7. The tarpaulin structure according to one of the preceding claims, **characterized in that** the covering bow (46; 1046) can be locked to the frontmost carriage (32') via a pivotable hook (80).

8. The tarpaulin structure according to claim 7, **characterized in that** the hook (80) can be locked to a frame section (320) which is arranged above the guide (20) in a horizontal plane on the foremost carriage (32'), that the hook (80) can be pivoted into an unlocked position by pivoting the tarpaulin structure (10) and/or the understructure (14), and that the hook (80) has its center of gravity below its articulation (81) on the covering bow (46) or on the foremost carriage (32').

9. The tarpaulin structure according to claim 7, **characterized in that** the hook (80) is pivotally connected on one (46) of covering bows (46) and frontmost carriage (32') via at least one articulation (81), that, on the other (32') of covering bows (46) and frontmost carriage (32'), a counter-bearing (85), in particular a bolt section, is arranged, that, by means of the hook (80) and the counter-bearing (85), the pivoted-down covering bow (46) and the frontmost carriage (32') can be locked with respect to one another, that the hook (80) has several engagement protrusions (82), and that each of the engagement protrusions (82) of the hook (80) enables a locking to the counter-bearing (85).

10. The tarpaulin structure according to one of the preceding claims, **characterized in that** one (34') of the struts (34) has a locking arrangement (70; 1070) which can be unlocked by one-sided actuation, that the locking arrangement (70; 1070) has a first locking member (71; 1071) and a second locking member (72; 1072), which are arranged on different longitudinal sides of the tarpaulin structure (10; 1010), that the first locking member (71; 1071) and the second locking member (72; 1072) can be axially moved at the same time for the unlocking, and that the first locking member (71; 1071) and the second locking member (72; 1072) together can be unlocked by pulling on the first locking member (71; 1071) from outside of the folding-top frame (16).

11. The tarpaulin structure according to claim 10, **characterized in that** the locking member (71; 72; 1071; 1072) in each case has a guide section (71a; 72a; 1071a; 1072a) which can be stopped at a first height level in a locking catch (91; 92; 1091; 1092) and released by vertical movement from the locking catch (91; 92; 1091; 1092), that the locking catch (91; 92; 1091; 1092) encloses the locking member (71; 72; 1071; 1072) so that it prevents the movable parts of the folding-top frame (16) from being moved along the guide (20) and/or the understructure (14), that the locking catch (91; 92; 1091; 1092) has a stop position (91a; 92a; 1091a; 1092a) and on one side or on both sides of the stop position (91a; 92a; 1091a; 1092a) a run-up slope (91b; 92b; 1091b; 1092b), and that the run-up slope (91b; 92b; 1091b; 1092b) works together with the guide section (71a; 72a; 1071a; 1072a) in order to move the locking member (71; 72; 1071; 1072) into the stop position (91a; 92a) when the tarpaulin structure (10; 1010) is closed.

12. The tarpaulin structure according to one of the preceding claims, **characterized in that** an endless transmission device (2950) is provided, which is coupled to one of the two carriages (32') of a frontmost pair of carriages (32').

13. The tarpaulin structure according to one of the preceding claims, **characterized in that** the frontmost carriage (32') has a frame section (320; 1320) which is arranged above the guide (20) in a horizontal plane, that the frame section (320; 1320) forms a support (323) for the covering bow (46; 1046), and that the covering bow (46) has a support area (463) arranged outside of its articulation (47) on the carriage (32') and an arm section (460), which in eacht case rests on the frame section (320) in an end position.

14. The tarpaulin structure according to one of the preceding claims, **characterized in that** the two adjacent bows (26; 36) are arranged spaced apart from one another, that the adjacent bows (26, 36) are coupled to each other by means of a kinematic connecting rod assembly (38) that folds up when the folding-top frame (16) is moved together, that the kinematic connecting rod assembly (38) comprises a first connecting rod (38a) and a second connecting rod (38b), which are each articulated to one of the two bows (26; 36), and that the first connecting rod (38a) and the second connecting rod (38b) are connected to one another via an articulation (39).

15. A container, in particular a transport container, selected from the group comprising containers, railway cars, semi-trailers, trailers, trucks, dump trucks or in particular a storage container, selected from the group comprising swimming pool, carport, building, which encloses an at least approximately cuboid space, **characterized by** a tarpaulin structure according to one of the preceding claims.

## Revendications

1. Structure de bâche destinée à une infrastructure, telle qu'un camion, une remorque, une semi-remorque, un wagon ferroviaire, un camion à benne basculante ou un conteneur, ladite structure de bâche comprenant
un bâti de capote (16), et
une bâche (12) en matériau résistant aux intempéries,
le bâti de capote (16) comportant une pluralité de barres (34) qui comportent chacune du côté extrémité un chariot (32) qui peut être déplacé le long d'un guide (20),
au moins un étrier (36) étant raccordé de manière pivotante au choix à une paire de chariots opposés (32; 32') de la barre ou à la barre (34), l'étrier (36) formant avec un étrier (26; 36) d'une barre adjacente (34) ou d'une paire de chariots opposés (32; 32') ou d'une partie fixe (24) du bâti de capote (16) un auxiliaire de pliage de bâche,
un étrier de recouvrement (46; 1046) étant raccordé de manière pivotante à la paire de chariots la plus en avant (32'),
**caractérisée en ce**
**qu'**un étrier auxiliaire (36'; 1036) est raccordée de manière articulée au chariot le plus en avant (32') entre l'étrier de recouvrement (46; 1046) et la barre (34') raccordée au chariot le plus en avant (32'), et
**qu'**une distance entre une liaison (37') de l'étrier auxiliaire (36'; 1036) et la barre (34') est prévue de telle sorte que l'étrier auxiliaire (36'; 1036) puisse être transféré jusque dans une position repliée en direction de la barre (34') de la paire de chariots la plus en avant (32').

2. Structure de bâche selon la revendication 1, **caractérisée en ce que** l'étrier de recouvrement (46) comporte un prolongement (62; 465) qui peut pivoter conjointement avec l'étrier de recouvrement (46) sur l'articulation (47) de celui-ci.

3. Structure de bâche selon la revendication 1 ou 2, **caractérisée en ce que** l'étrier de recouvrement (46) comporte de chaque côté un prolongement (62; 465) qui peut pivoter conjointement avec l'étrier de recouvrement (46) sur l'articulation (47) de celui-ci et qui peut pivoter jusque dans l'une de ses positions d'extrémité pour faire pivoter l'étrier de recouvrement (46), et que le prolongement (62; 465) peut être commandé sur l'un des côtés du bâti de capote (16) pour faire pivoter l'étrier de recouvrement (46) vers le haut, et que le prolongement (62; 465) peut être commandé de l'autre côté du bâti de capote (16) pour faire pivoter l'étrier de recouvrement (46) vers le bas.

4. Structure de bâche selon la revendication 2 ou 3, **caractérisée en ce que** le prolongement (62; 465) comporte une portion d'extrémité recourbée qui provoque avec un élément de déviation (69) le pivotement de l'étrier de recouvrement (46; 1046).

5. Structure de bâche selon l'une des revendications précédentes, **caractérisée en ce que** l'étrier de recouvrement (46; 1046) est contraint dans le sens d'ouverture par au moins un élément de précontrainte (1901, 1902) de manière à ce que dans presque toutes les positions de l'étrier de recouvrement (46; 1046) l'au moins un élément de précontrainte (1901, 1902) compense au moins dans une large mesure la masse de l'étrier de recouvrement (46; 1046).

6. Structure de bâche selon la revendication 5, **caractérisée en ce que** l'élément de précontrainte (1901) est disposée entre l'étrier auxiliaire (36'; 1036) et l'étrier de recouvrement, et que l'élément de précontrainte (1901; 1902) est choisi dans le groupe comprenant un ressort de traction, un ruban de traction, une sangle élastique, une bande élastique ou une bâche ou des combinaisons de ceux-ci.

7. Structure de bâche selon l'une des revendications précédentes, **caractérisée en ce que** l'étrier de recouvrement (46; 1046) peut être verrouillé au chariot le plus en avant (32') par l'intermédiaire d'un crochet pivotant (80).

8. Structure de bâche selon la revendication 7, **caractérisée en ce que** le crochet (80) peut être verrouillé à une portion de cadre (320) qui est disposé au-dessus du guide (20) dans un plan horizontal sur le chariot le plus en avant (32'), que le crochet (80) peut être pivoté jusque dans une position déverrouillée par pivotement de la structure de bâche (10) et/ou l'infrastructure (14), et que le crochet (80) a son centre de gravité situé au-dessous de son articulation (81) sur l'étrier de recouvrement (46) ou sur le chariot le plus en avant (32').

9. Structure de bâche selon la revendication 7, **caractérisée en ce que** le crochet (80) est raccordé de manière pivotante à l'un (46) parmi l'étrier de recouvrement (46) et le chariot le plus en avant (32') par l'intermédiaire d'au moins une articulation (81), qu'une butée (85), en particulier une portion de boulon, est disposée sur l'autre (32') parmi l'étrier de recouvrement (46) et le chariot le plus en avant (32'), que l'étrier de recouvrement (46), pivoté vers le bas, et le chariot le plus en avant (32') sont verrouillés l'un à l'autre par l'intermédiaire du crochet et de la butée, que le crochet (80) comporte une pluralité de saillies d'encliquetage (82), et que chacune des saillies d'encliquetage (82) du crochet (80) permet le verrouillage à la butée (85).

10. Structure de bâche selon l'une des revendications précédentes, **caractérisée en ce que** l'une (34') des barres (34) comporte un ensemble de verrouillage (70; 1070) déverrouillable par actionnement unilatéral, que l'ensemble de verrouillage (70; 1070) comporte un premier élément de verrouillage (71; 1071) et un deuxième élément de verrouillage (72; 1072) qui sont disposés sur des côtés longitudinaux différents de la structure de bâche (10; 1010), que le premier élément de verrouillage (71; 1071) et le deuxième élément de verrouillage (72; 1072) peuvent être déplacés en même temps axialement pour effectuer le déverrouillage, et que le premier élément de verrouillage (71; 1071) et le deuxième élément de verrouillage (72; 1072) peuvent être déverrouillés conjointement par traction sur le premier élément de verrouillage (71; 1071) depuis l'extérieur du bâti de capote (16).

11. Structure de bâche selon la revendication 10, **caractérisée en ce que** l'élément de verrouillage (71; 72; 1071; 1072) comporte une portion de guidage (71a; 72a; 1071a; 1072a) qui peut être bloqué dans un taquet de verrouillage (91; 92; 1091; 1092) à un premier niveau de hauteur et qui peut être libéré du taquet de verrouillage (91; 92; 1091; 1092) par déplacement vertical, que le taquet de verrouillage (91; 92; 1091; 1092) enferme l'élément de verrouillage (71; 72; 1071; 1072) de façon à empêcher les parties mobiles du bâti de capote (16) de se déplacer le long du guide (20) et/ou de l'infrastructure (14), que le taquet de verrouillage (91; 92; 1091; 1092) comporte une position de blocage (91a; 92a; 1091a; 1092a) et, sur un côté ou les deux côtés de la position de blocage (91a; 92a; 1091a; 1092a), un biseau d'insertion (91b; 92b; 1091b; 1092b), et **en ce que** le biseau d'insertion (91b; 92b; 1091b; 1092b) coopère avec la portion de guidage (71a; 72a; 1071a; 1072a) pour déplacer l'élément de verrouillage (71; 72; 1071; 1072) lors de la fermeture de la structure de bâche (10; 1010) jusque dans la position de blocage (91a; 92a).

12. Structure de bâche selon l'une des revendications précédentes, **caractérisée en ce qu'**il est prévu un dispositif d'entraînement sans fin (2950) qui est accouplé à l'un des deux chariots (32') d'une paire de chariots la plus en avant (32').

13. Structure de bâche selon l'une des revendications précédentes, **caractérisée en ce que** le chariot le plus en avant (32') comporte une portion de cadre (320; 1320) qui est disposé au-dessus du guide (20) dans un plan horizontal, que la portion de cadre (320; 1320) forme un support (323) destiné à l'étrier de recouvrement (46; 1046), et que l'étrier de recouvrement (46) comporte une zone d'appui (463) et une portion de branche (460) disposées à l'extérieur de son articulation (47) sur le chariot (32') qui, à une position d'extrémité, vient respectivement en appui sur la portion de cadre (320).

14. Structure de bâche selon l'une des revendications précédentes, **caractérisée en ce que** les deux étriers adjacents (26; 36) sont disposés à distance l'un de l'autre, que les étriers adjacents (26, 36) sont accouplées l'un à l'autre par l'intermédiaire d'une cinématique de biellettes (38) qui peut être replié pendant que le bâti de capote (16) est ramassé, que la cinématique de biellettes (38) comprend une première biellette (38a) et une deuxième biellette (38b), qui sont respectivement raccordées de manière articulée à l'un des deux étriers (26; 36), et que la première biellette (38a) et la deuxième biellette (38b) sont reliées l'une à l'autre par l'intermédiaire d'une articulation (39).

15. Contenant, notamment Contenant de transport, choisi dans le groupe comprenant les conteneurs, les wagons ferroviaires, les semi-remorques, les remorques, les camions, les camions à benne basculante ou, en particulier les contenants de stockage, choisis dans le groupe comprenant les piscines, les carports, les bâtiments qui entourent un espace au moins approximativementparallélépipède rectangle, **caractérisé par** une structure de bâche selon l'une des revendications précédentes.
